(19) Europäisches Patentamt
European Patent Office
Office européen des brevets

(11) **EP 4 305 077 B1**

(12) **EUROPEAN PATENT SPECIFICATION**

(45) Date of publication and mention of the grant of the patent:
**23.04.2025 Bulletin 2025/17**

(21) Application number: **22712448.4**

(22) Date of filing: **01.03.2022**

(51) International Patent Classification (IPC):
***C08F 4/6592*** $^{(2006.01)}$ ***C08F 210/16*** $^{(2006.01)}$
***C08L 23/08*** $^{(2025.01)}$ ***C08J 5/18*** $^{(2006.01)}$

(52) Cooperative Patent Classification (CPC):
(C-Sets available)
**C08F 210/16; C08J 5/18; C08L 23/0815;**
C08F 4/65908; C08F 4/65912; C08J 2323/08;
C08J 2423/08; C08L 2207/064 (Cont.)

(86) International application number:
**PCT/IB2022/051762**

(87) International publication number:
**WO 2022/189888 (15.09.2022 Gazette 2022/37)**

(54) **VERY LOW DENSITY POLYETHYLENE WITH RAPID CRYSTALLIZATION RATES**
POLYETHYLEN SEHR NIEDRIGER DICHTE MIT SCHNELLEN KRISTALLISATIONSRATEN
POLYÉTHYLÈNE DE TRÈS FAIBLE DENSITÉ À TAUX DE CRISTALLISATION RAPIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2021 US 202163157969 P**

(43) Date of publication of application:
**17.01.2024 Bulletin 2024/03**

(73) Proprietor: **Nova Chemicals (International) S.A.**
**1700 Fribourg (CH)**

(72) Inventors:
- **KONAGANTI, Vinod**
**Calgary, Alberta T2G 1K7 (CA)**
- **GOYAL, Shivendra**
**Calgary, Alberta T3A 5X4 (CA)**
- **KAZEMI, Niousha**
**Calgary, Alberta T2M 1X2 (CA)**
- **PIRES FORTES FERREIRA, Marcia**
**Calgary, Alberta T2M 0Y7 (CA)**
- **EBRAHIMI, Marzieh**
**Calgary, Alberta T2G 1K7 (CA)**
- **RAHIMI, Mehrnaz**
**Calgary, Alberta T3P 1J7 (CA)**
- **BROWN, Stephen**
**Calgary, Alberta T3M 2C3 (CA)**

(74) Representative: **Mewburn Ellis LLP**
**Aurora Building**
**Counterslip**
**Bristol BS1 6BX (GB)**

(56) References cited:
**EP-A1- 2 890 739**
**WO-A1-2017/019446**
**WO-A1-2019/092525**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 2/06;**
**C08F 210/16, C08F 4/65927;**
**C08L 23/0815, C08L 23/0815, C08L 23/0815;**
C08F 210/16, C08F 210/14, C08F 2500/12, C08F 2500/37, C08F 2500/35, C08F 2500/06, C08F 2500/10, C08F 2500/08, C08F 2500/28, C08F 2500/29, C08F 2500/27, C08F 2500/11, C08F 2500/03, C08F 2500/34;
C08F 210/16, C08F 210/14, C08F 2500/12, C08F 2500/37, C08F 2500/35, C08F 2500/06, C08F 2500/10, C08F 2500/08, C08F 2500/28, C08F 2500/29, C08F 2500/27, C08F 2500/11, C08F 2500/34

## Description

### TECHNICAL FIELD

An ethylene copolymer composition having a density of from 0.860 to 0.910 g/cm$^3$ comprises a first ethylene copolymer, a second ethylene copolymer and a third ethylene copolymer. The ethylene copolymer compositions have high rates of crystallization and when blown into film have good sealability and a balance of toughness and stiffness.

### BACKGROUND ART

Multicomponent polyethylene compositions are well known in the art. One method to access multicomponent polyethylene compositions is to use a polymerization catalyst in two or more separate polymerization reactors. For example, the use of single site in at least two distinct solution polymerization reactors is known. Such reactors may be configured in series or in parallel.

Solution polymerization processes are generally carried out at temperatures above the melting point of the ethylene homopolymer or copolymer product being made. In a typical solution polymerization process, catalyst components, solvent, monomers and hydrogen are fed under pressure to one or more reactors.

For solution phase ethylene polymerization, or ethylene copolymerization, reactor temperatures can range from about 80°C to about 300°C while pressures generally range from about 3 MPag to about 45 MPag. The ethylene homopolymer or copolymer produced remains dissolved in the solvent under reactor conditions. The residence time of the solvent in the reactor is relatively short, for example, from about 1 second to about 20 minutes. The solution process can be operated under a wide range of process conditions that allow the production of a wide variety of ethylene polymers. Post reactor, the polymerization reaction is quenched to prevent further polymerization, by adding a catalyst deactivator, and optionally passivated, by adding an acid scavenger. Once deactivated (and optionally passivated), the polymer solution is passed to a polymer recovery operation (a devolatilization system) where the ethylene homopolymer or copolymer is separated from process solvent, unreacted residual ethylene and unreacted optional $\alpha$-olefin(s).

Regardless of the manner of production, there remains a need to improve the performance of multicomponent polyethylene compositions in film applications.

WO 2017/019446 relates to polyethylene based elastic compositions methods of manufacture thereof and to films comprising the same.

WO 2019/092525 discloses ethylene interpolymer products comprising a first ethylene interpolymer, a second ethylene interpolymer and a third ethylene interpolymer.

### SUMMARY OF INVENTION

An embodiment is an ethylene copolymer composition comprising:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

An embodiment is a film or film layer comprising an ethylene copolymer composition, the ethylene copolymer composition comprising:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;

(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

An embodiment is a multilayer film structure comprising at least one film layer comprising an ethylene copolymer composition, the ethylene copolymer composition comprising:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

An embodiment is a film or film layer comprising a polymer blend, the polymer blend comprising:

(a) from 5 to 50 weight percent of an ethylene copolymer composition; and
(b) from 95 to 50 weight percent of a linear low density polyethylene;

wherein the ethylene copolymer composition comprises:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

An embodiment is a multilayer film structure comprising at least one film layer comprising a polymer blend, the polymer blend comprising:

(a) from 5 to 50 weight percent of an ethylene copolymer composition; and
(b) from 95 to 50 weight percent of a linear low density polyethylene;

wherein the ethylene copolymer composition comprises:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

## BRIEF DESCRIPTION OF THE DRAWINGS

Figure 1 shows the isothermal crystallization data (relative crystallinity) for an ethylene copolymer composition of the disclosure at different crystallization temperatures.
Figure 2 shows the Avrami analysis of isothermal crystallinity data of an ethylene copolymer composition of the disclosure at different crystallization temperatures.
Figure 3 shows the non-isothermal crystallization profiles for ethylene copolymer compositions of the disclosure as well as comparative resins at a cooling rate of 10°C/min.
Figure 4 shows a linear variation of the maximum crystallization temperature ($T_{max}$) as it changes as a function of the logarithm of the cooling rate ($\beta$) for ethylene copolymer compositions of the disclosure as well as for comparative resins.
Figure 5 shows a representative plot of how to calculate the activation energy based on the Kissinger method describing the non-isothermal crystallization process of Inventive Example 2.
Figure 6 shows the Hot tack profiles for a multilayer film structure in which the sealant layer is made with 100 weight percent of an ethylene copolymer composition of the present disclosure or with a comparative resin.
Figure 7 shows the Cold seal profiles for a multilayer film structure in which the sealant layer is made with 100 weight percent of an ethylene copolymer composition of the present disclosure or with a comparative resin.
Figure 8 shows the relationship between the dart impact (in grams per mil) and the 1% secant modulus in the machine direction (in MPa) of monolayer blown films made with an ethylene copolymer composition of the present disclosure or a comparative resin.
Figure 9 shows the relationship between the dart impact (in grams per mil) and the 1% secant modulus in the machine direction (in MPa) of monolayer blown films made with a blend comprising either an ethylene copolymer composition of the present disclosure and a LLDPE resin, or a comparative resin and a LLDPE resin.

## Definitions

In order to form a more complete understanding of this disclosure the following terms are defined and should be used with the accompanying figures and the description of the various embodiments throughout.
As used herein, the term "monomer" refers to a small molecule that may chemically react and become chemically bonded with itself or other monomers to form a polymer.
As used herein, the term "$\alpha$-olefin" or "alpha-olefin" is used to describe a monomer having a linear hydrocarbon chain containing from 3 to 20 carbon atoms having a double bond at one end of the chain; an equivalent term is "linear $\alpha$-olefin". As used herein, the term "polyethylene" or "ethylene polymer", refers to macromolecules produced from ethylene monomers and optionally one or more additional monomers; regardless of the specific catalyst or specific process used to make the ethylene polymer. In the polyethylene art, the one or more additional monomers are called "comonomer(s)" and

often include $\alpha$-olefins. The term "homopolymer" refers to a polymer that contains only one type of monomer. An "ethylene homopolymer" is made using only ethylene as a polymerizable monomer. The term "copolymer" refers to a polymer that contains two or more types of monomer. An "ethylene copolymer" is made using ethylene and one or more other types of polymerizable monomer (e.g. an alpha-olefin).

Common polyethylenes include high density polyethylene (HDPE), medium density polyethylene (MDPE), linear low density polyethylene (LLDPE), very low density polyethylene (VLDPE), ultralow density polyethylene (ULDPE), plastomers and elastomers. The term polyethylene also includes polyethylene terpolymers which may include two or more comonomers (e.g. alpha-olefins) in addition to ethylene. The term polyethylene also includes combinations of, or blends of, the polyethylenes described above.

As used herein, the terms "linear low density polyethylene" and "LLDPE" refer to a polyethylene homopolymer or, more preferably, an ethylene copolymer having a density of from about 0.910 g/cm$^3$ to about 0.945 g/cm$^3$.

The term "heterogeneously branched polyethylene" refers to a subset of polymers in the ethylene polymer group that are produced using a heterogeneous catalyst system; non-limiting examples of which include Ziegler-Natta or chromium catalysts, both of which are well known in the art.

The term "homogeneously branched polyethylene" refers to a subset of polymers in the ethylene polymer group that are produced using single-site catalysts; non-limiting examples of which include metallocene catalysts, phosphinimine catalysts, and constrained geometry catalysts all of which are well known in the art.

Typically, homogeneously branched polyethylenes have narrow molecular weight distributions, for example gel permeation chromatography (GPC) $M_w/M_n$ values of less than about 2.8, especially less than about 2.3, although exceptions may arise; $M_w$ and $M_n$ refer to weight and number average molecular weights, respectively. In contrast, the $M_w/M_n$ of heterogeneously branched ethylene polymers are typically greater than the $M_w/M_n$ of homogeneous polyethylene. In general, homogeneously branched ethylene polymers also have a narrow composition distribution, i.e. each macromolecule within the molecular weight distribution has a similar comonomer content. Frequently, the composition distribution breadth index "CDBI" is used to quantify how the comonomer is distributed within an ethylene polymer, as well as to differentiate ethylene polymers produced with different catalysts or processes. The "$CDBI_{50}$" is defined as the percent of ethylene polymer whose composition is within 50 weight percent (wt%) of the median comonomer composition; this definition is consistent with that described in WO 93/03093 assigned to Exxon Chemical Patents Inc. The $CDBI_{50}$ of an ethylene copolymer can be calculated from TREF curves (Temperature Rising Elution Fractionation); the TREF method is described in Wild, et al., J. Polym. Sci., Part B, Polym. Phys., Vol. 20 (3), pages 441-455. Typically the $CDBI_{50}$ of homogeneously branched ethylene polymers are greater than about 70% or greater than about 75%. In contrast, the $CDBI_{50}$ of $\alpha$-olefin containing heterogeneously branched ethylene polymers are generally lower than the $CDBI_{50}$ of homogeneous ethylene polymers. For example, the $CDBI_{50}$ of a heterogeneously branched ethylene polymer may be less than about 75%, or less than about 70%.

It is well known to those skilled in the art, that homogeneously branched ethylene polymers are frequently further subdivided into "linear homogeneous ethylene polymers" and "substantially linear homogeneous ethylene polymers". These two subgroups differ in the amount of long chain branching: more specifically, linear homogeneous ethylene polymers have less than about 0.01 long chain branches per 1000 carbon atoms; while substantially linear homogeneous ethylene polymers have greater than about 0.01 to about 3.0 long chain branches per 1000 carbon atoms. A long chain branch is macromolecular in nature, i.e. similar in length to the macromolecule that the long chain branch is attached to. Hereafter, in this disclosure, the term "homogeneously branched polyethylene" or "homogeneously branched ethylene polymer" refers to both linear homogeneous ethylene polymers and substantially linear homogeneous ethylene polymers.

The term "thermoplastic" refers to a polymer that becomes liquid when heated, will flow under pressure and solidify when cooled. Thermoplastic polymers include ethylene polymers as well as other polymers used in the plastic industry; non-limiting examples of other polymers commonly used in film applications include barrier resins (EVOH), tie resins, polyethylene terephthalate (PET), polyamides and the like.

As used herein the term "monolayer film" refers to a film containing a single layer of one or more thermoplastics.

As used herein the term "multilayer film" or "multilayer film structure" refers to a film comprised of more than one thermoplastic layer, or optionally non-thermoplastic layers. Non-limiting examples of non-thermoplastic materials include metals (foil) or cellulosic (paper) products. One or more of the thermoplastic layers within a multilayer film (or film structure) may be comprised of more than one thermoplastic.

As used herein, the term "tie resin" refers to a thermoplastic that when formed into an intermediate layer, or a "tie layer" within a multilayer film structure, promotes adhesion between adjacent film layers that are dissimilar in chemical composition.

As used herein, the term "sealant layer" refers to a layer of thermoplastic film that is capable of being attached to a second substrate, forming a leak proof seal. A "sealant layer" may be a skin layer or the innermost layer in a multilayer film structure.

As used herein, the term "adhesive lamination" and the term "extrusion lamination" describes continuous processes through which two or more substrates, or webs of material, are combined to form a multilayer product or sheet;

wherein the two or more webs are joined using an adhesive or a molten thermoplastic film, respectively.

As used herein, the term "extrusion coating" describes a continuous process through which a molten thermoplastic layer is combined with, or deposited on, a moving solid web or substrate. Non-limiting examples of substrates include paper, paperboard, foil, monolayer plastic film, multilayer plastic film or fabric. The molten thermoplastic layer could be monolayer or multilayer.

As used herein, the terms "hydrocarbyl", "hydrocarbyl radical" or "hydrocarbyl group" refers to linear or cyclic, aliphatic, olefinic, acetylenic and aryl (aromatic) radicals comprising hydrogen and carbon that are deficient by one hydrogen.

As used herein, an "alkyl radical" includes linear, branched and cyclic paraffin radicals that are deficient by one hydrogen radical; non-limiting examples include methyl ($-CH_3$) and ethyl ($-CH_2CH_3$) radicals. The term "alkenyl radical" refers to linear, branched and cyclic hydrocarbons containing at least one carbon-carbon double bond that is deficient by one hydrogen radical.

As used herein, the term "aryl" group includes phenyl, naphthyl, pyridyl and other radicals whose molecules have an aromatic ring structure; non-limiting examples include naphthylene, phenanthrene and anthracene. An "arylalkyl" group is an alkyl group having an aryl group pendant there from; non-limiting examples include benzyl, phenethyl and tolylmethyl. An "alkylaryl" is an aryl group having one or more alkyl groups pendant there from; non-limiting examples include tolyl, xylyl, mesityl and cumyl.

An "alkoxy" group is an oxy group having an alkyl group pendant there from and includes for example a methoxy group, an ethoxy group, an iso-propoxy group and the like.

An "aryloxy" or "aryl oxide" group is an oxy group having an aryl group pendant there from and includes for example a phenoxy group and the like.

As used herein, the phrase "heteroatom" includes any atom other than carbon and hydrogen that can be bound to carbon. A "heteroatom-containing group" is a hydrocarbon radical that contains a heteroatom and may contain one or more of the same or different heteroatoms. In one embodiment, a heteroatom-containing group is a hydrocarbyl group containing from 1 to 3 atoms selected from the group consisting of boron, aluminum, silicon, germanium, nitrogen, phosphorous, oxygen and sulfur. Non-limiting examples of heteroatom-containing groups include radicals of imines, amines, oxides, phosphines, ethers, ketones, oxoazolines heterocyclics, oxazolines, thioethers, and the like. The term "heterocyclic" refers to ring systems having a carbon backbone that comprise from 1 to 3 atoms selected from the group consisting of boron, aluminum, silicon, germanium, nitrogen, phosphorous, oxygen and sulfur.

As used herein the term "unsubstituted" means that hydrogen radicals are bounded to the molecular group that follows the term unsubstituted. The term "substituted" means that the group following this term possesses one or more moieties (non hydrogen radicals) that have replaced one or more hydrogen radicals in any position within the group; non-limiting examples of moieties include halogen radicals (F, Cl, Br), hydroxyl groups, carbonyl groups, carboxyl groups, silyl groups, amine groups, phosphine groups, alkoxy groups, phenyl groups, naphthyl groups, $C_1$ to $C_{30}$ alkyl groups, $C_2$ to $C_{30}$ alkenyl groups, and combinations thereof. Non-limiting examples of substituted alkyls and aryls include acyl radicals, alkyl silyl radicals, alkylamino radicals, alkoxy radicals, aryloxy radicals, alkylthio radicals, dialkylamino radicals, alkoxycarbonyl radicals, aryloxycarbonyl radicals, carbomoyl radicals, alkyl- and dialkyl-carbamoyl radicals, acyloxy radicals, acylamino radicals, arylamino radicals and combinations thereof.

## DESCRIPTION OF EMBODIMENTS

In the present disclosure, an ethylene copolymer composition will have a density of from 0.860 to 0.910 g/cm$^3$ and will comprise a first ethylene copolymer, a second ethylene copolymer and a third ethylene copolymer. Each of these ethylene copolymer components and the ethylene copolymer composition of which they are a part are further described below.

In some embodiments of the present disclosure, the ethylene copolymer composition is used in a polymer blend comprising: (a) from 5 to 50 weight percent of the ethylene copolymer composition and (b) from 95 to 50 weight percent of a linear low density polyethylene, LLDPE.

In some embodiments of the present disclosure, the ethylene copolymer composition is used in a polymer blend comprising: (a) from 5 to 35 weight percent of the ethylene copolymer composition and (b) from 95 to 65 weight percent of a linear low density polyethylene, LLDPE.

In some embodiments of the present disclosure, the ethylene copolymer composition is used in a polymer blend comprising: (a) from 5 to 30 weight percent of the ethylene copolymer composition and (b) from 95 to 70 weight percent of a linear low density polyethylene, LLDPE.

In some embodiments of the present disclosure, the ethylene copolymer composition is used in a polymer blend comprising: (a) from 10 to 30 weight percent of the ethylene copolymer composition and (b) from 90 to 70 weight percent of a linear low density polyethylene, LLDPE.

In some embodiments of the present disclosure, the ethylene copolymer composition is used in a polymer blend

comprising: (a) from 15 to 25 weight percent of the ethylene copolymer composition and (b) from 85 to 75 weight percent of a linear low density polyethylene, LLDPE.

The First Ethylene Copolymer

In an embodiment of the disclosure, the first ethylene copolymer is made with a single site catalyst, non-limiting examples of which include phosphinimine catalysts, metallocene catalysts, and constrained geometry catalysts, all of which are well known in the art.

In an embodiment of the disclosure, the first ethylene copolymer is made with a single site catalyst, having hafnium, Hf as the active metal center.

In embodiments of the disclosure, alpha-olefins which may be copolymerized with ethylene to make the first ethylene copolymer may be selected from the group comprising 1-propene, 1-butene, 1-pentene, 1-hexene and 1-octene and mixtures thereof.

In an embodiment of the disclosure, the first ethylene copolymer is a homogeneously branched ethylene copolymer.

In an embodiment of the disclosure, the first ethylene copolymer is an ethylene/1-octene copolymer.

In an embodiment of the disclosure, the first ethylene copolymer is made with a metallocene catalyst.

In an embodiment of the disclosure, the first ethylene copolymer is made with a bridged metallocene catalyst.

In an embodiment of the disclosure, the first ethylene copolymer is made with a bridged metallocene catalyst having the formula I:

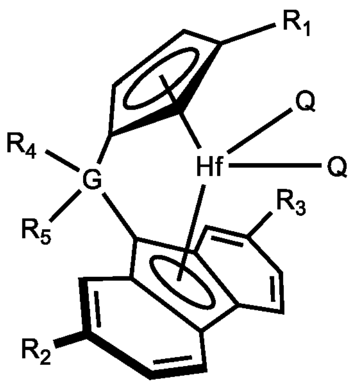

(I)

wherein G is a group 14 element selected from carbon, silicon, germanium, tin or lead; $R_1$ is a hydrogen atom, a $C_{1-20}$ hydrocarbyl radical, a $C_{1-20}$ alkoxy radical or a $C_{6-10}$ aryl oxide radical; $R_2$ and $R_3$ are independently selected from a hydrogen atom, a $C_{1-20}$ hydrocarbyl radical, a $C_{1-20}$ alkoxy radical or a $C_{6-10}$ aryl oxide radical; $R_4$ and $R_5$ are independently selected from a hydrogen atom, an unsubstituted $C_{1-20}$ hydrocarbyl radical, a substituted $C_{1-20}$ hydrocarbyl radical, a $C_{1-20}$ alkoxy radical or a $C_{6-10}$ aryl oxide radical; and Q is independently an activatable leaving group ligand.

In an embodiment, $R_4$ and $R_5$ are independently an aryl group.

In an embodiment, $R_4$ and $R_5$ are independently a phenyl group or a substituted phenyl group.

In an embodiment, $R_4$ and $R_5$ are a phenyl group.

In an embodiment, $R_4$ and $R_5$ are independently a substituted phenyl group.

In an embodiment, $R_4$ and $R_5$ are a substituted phenyl group, wherein the phenyl group is substituted with a substituted silyl group.

In an embodiment, $R_4$ and $R_5$ are a substituted phenyl group, wherein the phenyl group is substituted with a trialkyl silyl group.

In an embodiment, $R_4$ and $R_5$ are a substituted phenyl group, wherein the phenyl group is substituted at the para position with a trialkylsilyl group. In an embodiment, $R_4$ and $R_5$ are a substituted phenyl group, wherein the phenyl group is substituted at the para position with a trimethylsilyl group. In an embodiment, $R_4$ and $R_5$ are a substituted phenyl group, wherein the phenyl group is substituted at the para position with a triethylsilyl group.

In an embodiment, $R_4$ and $R_5$ are independently an alkyl group.

In an embodiment, $R_4$ and $R_5$ are independently an alkenyl group.

In an embodiment, $R_1$ is hydrogen.

In an embodiment, $R_1$ is an alkyl group.

In an embodiment, $R_1$ is an aryl group.

In an embodiment, $R_1$ is an alkenyl group.

In an embodiment, $R_2$ and $R_3$ are independently a hydrocarbyl group having from 1 to 30 carbon atoms.

In an embodiment, $R_2$ and $R_3$ are independently an aryl group.

In an embodiment, $R_2$ and $R_3$ are independently an alkyl group.

In an embodiment, $R_2$ and $R_3$ are independently an alkyl group having from 1 to 20 carbon atoms.

In an embodiment, $R_2$ and $R_3$ are independently a phenyl group or a substituted phenyl group.

In an embodiment, $R_2$ and $R_3$ are a tert-butyl group.

In an embodiment, $R_2$ and $R_3$ are hydrogen.

In an embodiment of the disclosure, the first ethylene copolymer is made with a bridged metallocene catalyst having the formula II:

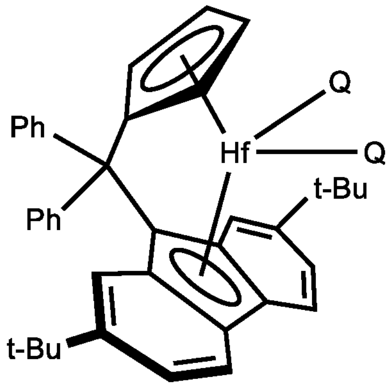

(II)

wherein Q is independently an activatable leaving group ligand.

In the current disclosure, the term "activatable", means that the ligand Q may be cleaved from the metal center M via a protonolysis reaction or abstracted from the metal center M by suitable acidic or electrophilic catalyst activator compounds (also known as "co-catalyst" compounds) respectively, examples of which are described below. The activatable ligand Q may also be transformed into another ligand which is cleaved or abstracted from the metal center M (e.g. a halide may be converted to an alkyl group). Without wishing to be bound by any single theory, protonolysis or abstraction reactions generate an active "cationic" metal center which can polymerize olefins.

In embodiments of the present disclosure, the activatable ligand, Q is independently selected from the group consisting of a hydrogen atom; a halogen atom; a $C_{1-20}$ hydrocarbyl radical, a $C_{1-20}$ alkoxy radical, and a $C_{6-10}$ aryl or aryloxy radical, where each of the hydrocarbyl, alkoxy, aryl, or aryl oxide radicals may be un-substituted or further substituted by one or more halogen or other group; a $C_{1-8}$ alkyl; a $C_{1-8}$ alkoxy; a $C_{6-10}$ aryl or aryloxy; an amido or a phosphido radical, but where Q is not a cyclopentadienyl. Two Q ligands may also be joined to one another and form for example, a substituted or unsubstituted diene ligand (e.g. 1,3-butadiene); or a delocalized heteroatom containing group such as an acetate or acetamidinate group.

In an embodiment of the disclosure, each Q is independently selected from the group consisting of a halide atom, a $C_{1-4}$ alkyl radical and a benzyl radical.

In an embodiment, suitable activatable ligands, Q are monoanionic such as a halide (e.g. chloride) or a hydrocarbyl (e.g. methyl, benzyl).

In an embodiment, each activatable ligand, Q is a methyl group.

In an embodiment, each activatable ligand, Q is a benzyl group.

In an embodiment, each activatable ligand, Q is a chloride group.

In an embodiment of the disclosure, the single site catalyst used to make the first ethylene copolymer is diphenylmethylene(cyclopentadienyl)(2,7-di-t-butylfluorenyl)hafnium dichloride having the molecular formula:

$$[(2,7\text{-}tBu_2Flu)Ph_2C(Cp)HfCl_2].$$

In an embodiment of the disclosure the single site catalyst used to make the first ethylene copolymer is diphenylmethylene(cyclopentadienyl)(2,7-di-t-butylfluorenyl)hafnium dimethyl having the molecular formula:

$$[(2,7\text{-}tBu_2Flu)Ph_2C(Cp)HfMe_2].$$

In addition to the single site catalyst molecule per se, an active single site catalyst system typically further comprises a catalyst activator.

In an embodiment of the disclosure, a catalyst activator comprises an alkylaluminoxane and/or an ionic activator.

A catalyst activator may also optionally include a hindered phenol compound.

In an embodiment of the disclosure, a catalyst activator comprises an alkylaluminum, an ionic activator and a hindered phenol compound.

Although the exact structure of alkylaluminoxane is uncertain, subject matter experts generally agree that it is an oligomeric species that contain repeating units of the general formula:

$$(R)_2AlO-(Al(R)-O)_n-Al(R)_2$$

where the R groups may be the same or different linear, branched or cyclic hydrocarbyl radicals containing 1 to 20 carbon atoms and n is from 0 to about 50. A non-limiting example of an alkylaluminoxane is methylaluminoxane (or MAO) wherein each R group is a methyl radical.

In an embodiment of the disclosure, R of the alkylaluminoxane, is a methyl radical and m is from 10 to 40.

In an embodiment of the disclosure, the alkylaluminoxane is modified methylaluminoxane (MMAO).

It is well known in the art, that the alkylaluminoxane can serve dual roles as both an alkylator and an activator. Hence, an alkylaluminoxane catalyst activator is often used in combination with activatable ligands such as halogens.

In general, ionic activators are comprised of a cation and a bulky anion; wherein the latter is substantially non-coordinating. Non-limiting examples of ionic activators are boron ionic activators that are four coordinate with four ligands bonded to the boron atom. Non-limiting examples of boron ionic activators include the following formulas shown below:

$$[R^5]^+[B(R^7)_4]^-$$

where B represents a boron atom, $R^5$ is an aromatic hydrocarbyl (e.g. triphenyl methyl cation) and each $R^7$ is independently selected from phenyl radicals which are unsubstituted or substituted with from 3 to 5 substituents selected from fluorine atoms, $C_{1-4}$ alkyl or alkoxy radicals which are unsubstituted or substituted by fluorine atoms; and a silyl radical of formula $-Si(R^9)_3$, where each $R^9$ is independently selected from hydrogen atoms and $C_{1-4}$ alkyl radicals, and

$$[(R^8)_tZH]^+[B(R^7)_4]^-$$

where B is a boron atom, H is a hydrogen atom, Z is a nitrogen or phosphorus atom, t is 2 or 3 and $R^8$ is selected from $C_{1-8}$ alkyl radicals, phenyl radicals which are unsubstituted or substituted by up to three $C_{1-4}$ alkyl radicals, or one $R^8$ taken together with the nitrogen atom may form an anilinium radical and $R^7$ is as defined above.

In both formula a non-limiting example of $R^7$ is a pentafluorophenyl radical. In general, boron ionic activators may be described as salts of tetra(perfluorophenyl) boron; non-limiting examples include anilinium, carbonium, oxonium, phosphonium and sulfonium salts of tetra(perfluorophenyl)boron with anilinium and trityl (or triphenylmethylium). Additional non-limiting examples of ionic activators include: triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butyl)ammonium tetra(o-tolyl)boron, N,N-dimethylanilinium tetra(phenyl)boron, N,N-diethylanilinium tetra(phenyl)boron, N,N-diethylanilinium tetra(phenyl)n-butylboron, N,N-2,4,6-pentamethylanilinium tetra(phenyl)boron, di-(isopropyl)ammonium tetra(pentafluorophenyl)boron, dicyclohexylammonium tetra(phenyl)boron, triphenylphosphonium tetra(phenyl)boron, tri(methylphenyl)phosphonium tetra(phenyl)boron, tri(dimethylphenyl)phosphonium tetra(phenyl)boron, tropillium tetrakispentafluorophenyl borate, triphenylmethylium tetrakispentafluorophenyl borate, benzene(diazonium)tetrakispentafluorophenyl borate, tropillium tetrakis(2,3,5,6-tetrafluorophenyl)borate, triphenylmethylium tetrakis(2,3,5,6-tetrafluorophenyl)borate, benzene(diazonium) tetrakis(3,4,5-trifluorophenyl)borate, tropillium tetrakis(3,4,5 -trifluorophenyl)borate, benzene(diazonium) tetrakis(3,4,5-trifluorophenyl) borate, tropillium tetrakis(1,2,2-trifluoroethenyl)borate, triphenylmethylium tetrakis(1 ,2,2-trifluoroethenyl)borate, benzene(diazonium) tetrakis(1,2,2-trifluoroethenyl)borate, tropillium tetrakis(2,3,4,5-tetrafluorophenyl)borate, triphenylmethylium tetrakis(2,3,4,5-tetrafluorophenyl)borate, and benzene(diazonium) tetrakis(2,3,4,5 tetrafluorophenyl)borate. Readily available commercial ionic activators include N,N-dimethylanilinium tetrakispentafluorophenyl borate, and triphenylmethylium tetrakispentafluorophenyl borate.

In an embodiment of the disclosure, the catalyst activator comprises an ionic activator selected from the group consisting of N,N-dimethylaniliniumtetrakispentafluorophenyl borate ("$[Me_2NHPh][B(C_6F_5)_4]$"); triphenylmethylium tetrakispentafluorophenyl borate ("$[Ph_3C][B(C_6F_5)_4]$", also known as "trityl borate"); and trispentafluorophenyl boron.

In an embodiment of the disclosure, the catalyst activator comprises triphenylmethylium tetrakispentafluorophenyl borate, "trityl borate".

In embodiments of the disclosure, the catalyst activator comprises a hindered phenol compound selected from the group consisting of butylated phenolic antioxidants, butylated hydroxytoluene, 2,6-di-tertiarybutyl-4-ethyl phenol

(BHEB), 4,4'-methylenebis (2,6-di-tertiary-butylphenol), 1,3, 5-trimethyl-2,4,6-tris (3,5-di-tert-butyl-4-hydroxybenzyl) benzene and octadecyl-3-(3',5'-di-tert-butyl-4'-hydroxyphenyl) propionate.

In an embodiment of the disclosure, the catalyst activator comprises the hindered phenol compound, 2,6-di-tertiarybutyl-4-ethyl phenol (BHEB).

Optionally, in embodiment of the disclosure, mixtures of alkylaluminoxanes and ionic activators can be used as catalyst activators, optionally together with a hindered phenol compound.

To produce an active single site catalyst system the quantity and mole ratios of the above components: the single site catalyst, the alkylaluminoxane, the ionic activator, and the optional hindered phenol are optimized.

In embodiments of the disclosure, the ionic activator compounds may be used in amounts which provide a molar ratio of hafnium, Hf (of the single site catalyst molecule) to boron that will be from 1:1 to 1:10, or from 1:1 to 1:6, or from 1:1 to 1:2.

In embodiments of the disclosure, the mole ratio of aluminum contained in the alkylaluminoxane to the hafnium, Hf (of the single site catalyst molecule) will be from 5:1 to 1000:1, including narrower ranges within this range.

In embodiments of the disclosure, the mole ratio of aluminum contained in the alkylaluminoxane to the hindered phenol (e.g. BHEB) will be from 1:1 to 1:0.1, including narrower ranges withing this range.

To produce an active single site catalyst system the quantity and mole ratios of the three or four components: the single site catalyst, the alkylaluminoxane, the ionic activator, and the optional hindered phenol are optimized.

In an embodiment of the disclosure, the single site catalyst used to make the first ethylene copolymer produces long chain branches, and the first ethylene copolymer will contain long chain branches, hereinafter 'LCB'. LCB is a well-known structural phenomenon in ethylene copolymers and well known to those of ordinary skill in the art. Traditionally, there are three methods for LCB analysis, namely, nuclear magnetic resonance spectroscopy (NMR), for example see J.C. Randall, J Macromol. Sci., Rev. Macromol. Chem. Phys. 1989, 29, 201; triple detection SEC equipped with a DRI, a viscometer and a low-angle laser light scattering detector, for example see W.W. Yau and D.R. Hill, Int. J. Polym. Anal. Charact. 1996; 2:151; and rheology, for example see W.W. Graessley, Acc. Chem. Res. 1977, 10, 332-339. In this disclosure, a long chain branch is macromolecular in nature, i.e. long enough to be seen in an NMR spectra, triple detector SEC experiments or rheological experiments.

In an embodiment of the disclosure, the first ethylene copolymer contains long chain branching characterized by the LCBF disclosed herein. In embodiments of the disclosure, the upper limit on the LCBF of the first ethylene copolymer may be about 0.5, in other cases about 0.4 and in still other cases about 0.3 (dimensionless). In embodiments of the disclosure, the lower limit on the LCBF of the first ethylene copolymer may be about 0.001, in other cases about 0.0015 and in still other cases about 0.002 (dimensionless).

The first ethylene copolymer may contain catalyst residues that reflect the chemical composition of the catalyst formulation used to make it. Those skilled in the art will understand that catalyst residues are typically quantified by the parts per million of metal, in for example the first ethylene copolymer (or the ethylene copolymer composition; see below), where the metal present originates from the metal in the catalyst formulation used to make it. Non-limiting examples of the metal residue which may be present include Group 4 metals, titanium, zirconium and hafnium. In embodiments of the disclosure, the upper limit on the ppm of metal in the first ethylene copolymer may be about 3.0 ppm, in other cases about 2.0 ppm and in still other cases about 1.5 ppm. In embodiments of the disclosure, the lower limit on the ppm of metal in the first ethylene copolymer may be about 0.03 ppm, in other cases about 0.09 ppm and in still other cases about 0.15 ppm.

In an embodiment of the disclosure, the first ethylene copolymer has a density of from 0.855 to 0.913 g/cm$^3$, a molecular weight distribution, $M_w/M_n$ of from 1.7 to 2.7, and a melt index, $I_2$ of from 0.1 to 10 g/10min.

In an embodiment of the disclosure, the first ethylene copolymer has a density of from 0.855 to 0.913 g/cm$^3$, a molecular weight distribution, $M_w/M_n$ of from 1.7 to 2.3, and a melt index, $I_2$ of from 0.1 to 10 g/10min.

In embodiments of the disclosure, the upper limit on the molecular weight distribution, $M_w/M_n$ of the first ethylene copolymer may be about 2.8, or about 2.6, or about 2.5, or about 2.4, or about 2.3, or about 2.2. In embodiments of the disclosure, the lower limit on the molecular weight distribution, $M_w/M_n$ of the first ethylene copolymer may be about 1.6, or about 1.7, or about 1.8, or about 1.9.

In embodiments of the disclosure, the first ethylene copolymer has a molecular weight distribution, $M_w/M_n$ of < 2.6, or < 2.3, or ≤ 2.3, or < 2.1, or ≤ 2.1, or < 2.0, or ≤ 2.0, or about 2.0. In embodiments of the disclosure, the first ethylene copolymer has a molecular weight distribution, $M_w/M_n$ of from about 1.7 to about 2.3, or from about 1.8 to about 2.3 or from about 1.8 to about 2.2.

In an embodiment of the disclosure, the first ethylene copolymer has from 10 to 150 short chain branches per thousand carbon atoms (SCB1). In further embodiments, the first ethylene copolymer has from 10 to 100 short chain branches per thousand carbon atoms (SCB1), or from 15 to 100 short chain branches per thousand carbon atoms (SCB1), or from 20 to 100 short chain branches per thousand carbon atoms (SCB1), or from 10 to 75 short chain branches per thousand carbon atoms (SCB1), or from 10 to 75 short chain branches per thousand carbon atoms (SCB1), or from 15 to 75 short chain branches per thousand carbon atoms (SCB1), or from 20 to 75 short chain branches per thousand carbon atoms (SCB1). In still further embodiments, the first ethylene copolymer has from 15 to 70 short chain branches per

thousand carbon atoms (SCB1), or from 20 to 70 short chain branches per thousand carbon atoms (SCB1), or from 20 to 60 short chain branches per thousand carbon atoms (SCB1), or from 15 to 60 short chain branches per thousand carbon atoms (SCB1), or from 15 to 55 short chain branches per thousand carbon atoms (SCB1), or from 20 to 55 short chain branches per thousand carbon atoms (SCB1), or from 15 to 50 short chain branches per thousand carbon atoms (SCB1), or from 20 to 50 short chain branches per thousand carbon atoms (SCB1), or from 15 to 45 short chain branches per thousand carbon atoms (SCB1), or from 15 to 40 short chain branches per thousand carbon atoms (SCB1), or from 20 to 45 short chain branches per thousand carbon atoms (SCB1), or from 20 to 40 short chain branches per thousand carbon atoms (SCB1), or from 20 to 35 short chain branches per thousand carbon atoms (SCB1), or from 20 to 30 short chain branches per thousand carbon atoms (SCB1).

The short chain branching (i.e. the short chain branching per thousand backbone carbon atoms, SCB1) is the branching due to the presence of an alpha-olefin comonomer in the ethylene copolymer and will for example have two carbon atoms for a 1-butene comonomer, or four carbon atoms for a 1-hexene comonomer, or six carbon atoms for a 1-octene comonomer, etc.

In an embodiment of the disclosure, the number of short chain branches per thousand carbon atoms in the first ethylene copolymer (SCB1) and the number of short chain branches per thousand carbon atoms in the second ethylene copolymer (SCB2) satisfy the following condition: SCB1 / SCB2 > 0.8.

In an embodiment of the disclosure, the number of short chain branches per thousand carbon atoms in the first ethylene copolymer (SCB1), is greater than the number of short chain branches per thousand carbon atoms in the second ethylene copolymer (SCB2).

In an embodiment of the disclosure, the number of short chain branches per thousand carbon atoms in the first ethylene copolymer (SCB1), is greater than the number of short chain branches per thousand carbon atoms in the third ethylene copolymer (SCB3).

In an embodiment of the disclosure, the number of short chain branches per thousand carbon atoms in the first ethylene copolymer (SCB1), is greater than the number of short chain branches per thousand carbon atoms in each of the second ethylene copolymer (SCB2) and the third ethylene copolymer (SCB3).

In embodiments of the disclosure, the upper limit on the density, d1 of the first ethylene copolymer may be about 0.915 g/cm$^3$; in some cases about 0.912 g/cm$^3$; in other cases about 0.910 g/cm$^3$, in other cases about 0.906 g/cm$^3$, in still other cases about 0.902 g/cm$^3$, in yet still other cases about 0.900 g/cm$^3$. In embodiments of the disclosure, the lower limit on the density, d1 of the first ethylene copolymer may be about 0.855 g/cm$^3$, in some cases about 0.865 g/cm$^3$; and in other cases about 0.875 g/cm$^3$.

In embodiments of the disclosure the density, d1 of the first ethylene copolymer may be from about 0.855 g/cm$^3$ to about 0.915 g/cm$^3$, or from about 0.855 g/cm$^3$ to about 0.912 g/cm$^3$, or from about 0.855 g/cm$^3$ to about 0.910 g/cm$^3$, or from about 0.855 g/cm$^3$ to about 0.906 g/cm$^3$, or from about 0.855 g/cm$^3$ to about 0.902 g/cm$^3$, or from about 0.855 g/cm$^3$ to about 0.900 g/cm$^3$, or from 0.865 g/cm$^3$ to about 0.915 g/cm$^3$, or from about 0.865 g/cm$^3$ to about 0.912 g/cm$^3$, or from about 0.865 g/cm$^3$ to about 0.910 g/cm$^3$, or from about 0.865 g/cm$^3$ to about 0.906 g/cm$^3$, or from about 0.865 g/cm$^3$ to about 0.902 g/cm$^3$, or from about 0.865 g/cm$^3$ to about 0.900 g/cm$^3$, or from 0.875 g/cm$^3$ to about 0.915 g/cm$^3$, or from about 0.875 g/cm$^3$ to about 0.912 g/cm$^3$, or from about 0.875 g/cm$^3$ to about 0.910 g/cm$^3$, or from about 0.875 g/cm$^3$ to about 0.906 g/cm$^3$, or from about 0.875 g/cm$^3$ to about 0.902 g/cm$^3$, or from about 0.875 g/cm$^3$ to about 0.900 g/cm$^3$.

In an embodiment of the disclosure, the density of the first ethylene copolymer, d1 is equal to or less than the density of the second ethylene copolymer, d2.

In an embodiment of the disclosure, the density of the first ethylene copolymer, d1 is less than the density of the second ethylene copolymer, d2.

In embodiments of the disclosure, the upper limit on the $CDBI_{50}$ of the first ethylene copolymer may be about 98 weight%, in other cases about 95 wt% and in still other cases about 90 wt%. In embodiments of the disclosure, the lower limit on the $CDBI_{50}$ of the first ethylene copolymer may be about 70 weight%, in other cases about 75 wt% and in still other cases about 80 wt%.

In embodiments of the disclosure the melt index of the first ethylene copolymer $I_2^1$ may be from about 0.01 g/10min to about 100 g/10min, or from about 0.01 g/10min to about 75 g/10min, or from about 0.1 g/10min to about 100 g/10min, or from about 0.1 g/10min to about 70 g/10min, or from about 0.01 g/10min to about 50 g/10min, or from about 0.1 g/10min to about 50 g/10min, or from about 0.1 g/10min to about 25 g/10min, or from about 0.1 g/10min to about 20 g/10min, or from about 0.1 g/10min to about 15 g/10min, or from about 0.1 to about 10 g/10min, or about 0.1 to about 5 g/10min, or from about 0.1 to 2.5 g/10min, or less than about 5 g/10min, or less than about 3 g/10min, or less than about 1.0 g/10min, or less than about 0.75 g/10min.

In an embodiment of the disclosure, the first ethylene copolymer has a weight average molecular weight, $M_w$ of from about 50,000 to about 300,000 g/mol, or from about 50,000 to about 250,000 g/mol, or from about 60,000 to about 250,000 g/mol, or from about 70,000 to about 250,000 g/mol, or from about 75,000 to about 200,000 g/mol, or from about 75,000 to about 175,000 g/mol, or from about 70,000 to about 175,000 g/mol, or from about 100,000 to about 200,000 g/mol, or from about 100,000 to about 175,000 g/mol.

**In** an embodiment of the disclosure, the first ethylene copolymer has a weight average molecular weight, $M_w$ which is greater than the weight average molecular weight, $M_w$ of the second ethylene copolymer.

**In** an embodiment of the disclosure, the first ethylene copolymer has a number average molecular weight, $M_n$ of from about 25,000 to about 100,000 g/mol, or from about 30,000 to about 90,000 g/mol, or from about 40,000 to about 80,000 g/mol.

**In** an embodiment of the disclosure, the first ethylene copolymer has a number average molecular weight, $M_n$ which is greater than the number average molecular weight, $M_n$ of the second ethylene copolymer.

**In** embodiments of the disclosure, the upper limit on the weight percent (wt%) of the first ethylene copolymer in the ethylene copolymer composition (i.e. the weight percent of the first ethylene copolymer based on the total weight of the first, the second and the third ethylene copolymer) may be about 80 wt%, or about 75 wt%, or about 70 wt%, or about 65 wt%, or about 60 wt%, or about 55 wt%, or about 50 wt%, or about 45 wt%, or about 40 wt%. **In** embodiments of the disclosure, the lower limit on the wt% of the first ethylene copolymer in the ethylene copolymer composition may be about 5 wt%, or about 10 wt%, or about 15 wt%, or about 20 wt%, or about 25 wt%, or about 30 wt%, or in other cases about 35 wt%.

The Second Ethylene Copolymer

**In** an embodiment of the disclosure, the second ethylene copolymer is made with a single site catalyst, non-limiting examples of which include phosphinimine catalysts, metallocene catalysts, and constrained geometry catalysts, all of which are well known in the art.

In an embodiment of the disclosure, the second ethylene copolymer is made with a single site catalyst, having hafnium, Hf as the active metal center.

In embodiments of the disclosure, alpha-olefins which may be copolymerized with ethylene to make the second ethylene copolymer may be selected from the group comprising 1-propene, 1-butene, 1-pentene, 1-hexene and 1-octene and mixtures thereof.

In an embodiment of the disclosure, the second ethylene copolymer is a homogeneously branched ethylene copolymer.

In an embodiment of the disclosure, the second ethylene copolymer is an ethylene/1-octene copolymer.

In an embodiment of the disclosure, the second ethylene copolymer is made with a metallocene catalyst.

In an embodiment of the disclosure, the second ethylene copolymer is made with a bridged metallocene catalyst.

In an embodiment of the disclosure, the second ethylene copolymer is made with a bridged metallocene catalyst having the formula I:

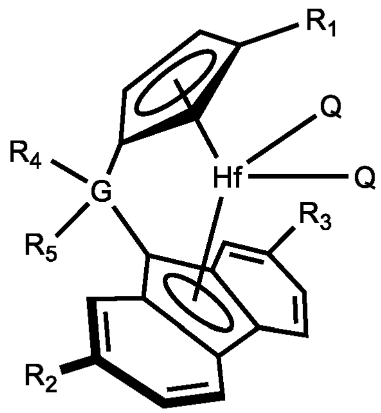

(I)

wherein G is a group 14 element selected from carbon, silicon, germanium, tin or lead; $R_1$ is a hydrogen atom, a $C_{1-20}$ hydrocarbyl radical, a $C_{1-20}$ alkoxy radical or a $C_{6-10}$ aryl oxide radical; $R_2$ and $R_3$ are independently selected from a hydrogen atom, a $C_{1-20}$ hydrocarbyl radical, a $C_{1-20}$ alkoxy radical or a $C_{6-10}$ aryl oxide radical; $R_4$ and $R_5$ are independently selected from a hydrogen atom, an unsubstituted $C_{1-20}$ hydrocarbyl radical, a substituted $C_{1-20}$ hydrocarbyl radical, a $C_{1-20}$ alkoxy radical or a $C_{6-10}$ aryl oxide radical; and Q is independently an activatable leaving group ligand.

In an embodiment, $R_4$ and $R_5$ are independently an aryl group.

In an embodiment, $R_4$ and $R_5$ are independently a phenyl group or a substituted phenyl group.

In an embodiment, $R_4$ and $R_5$ are a phenyl group.

In an embodiment, $R_4$ and $R_5$ are independently a substituted phenyl group.

In an embodiment, $R_4$ and $R_5$ are a substituted phenyl group, wherein the phenyl group is substituted with a substituted silyl group.

In an embodiment, $R_4$ and $R_5$ are a substituted phenyl group, wherein the phenyl group is substituted with a trialkyl silyl group.

In an embodiment, $R_4$ and $R_5$ are a substituted phenyl group, wherein the phenyl group is substituted at the para position with a trialkylsilyl group. In an embodiment, $R_4$ and $R_5$ are a substituted phenyl group, wherein the phenyl group is substituted at the para position with a trimethylsilyl group. In an embodiment, $R_4$ and $R_5$ are a substituted phenyl group, wherein the phenyl group is substituted at the para position with a triethylsilyl group.

In an embodiment, $R_4$ and $R_5$ are independently an alkyl group.

In an embodiment, $R_4$ and $R_5$ are independently an alkenyl group.

In an embodiment, $R_1$ is hydrogen.

In an embodiment, $R_1$ is an alkyl group.

In an embodiment, $R_1$ is an aryl group.

In an embodiment, $R_1$ is an alkenyl group.

In an embodiment, $R_2$ and $R_3$ are independently a hydrocarbyl group having from 1 to 30 carbon atoms.

In an embodiment, $R_2$ and $R_3$ are independently an aryl group.

In an embodiment, $R_2$ and $R_3$ are independently an alkyl group.

In an embodiment, $R_2$ and $R_3$ are independently an alkyl group having from 1 to 20 carbon atoms.

In an embodiment, $R_2$ and $R_3$ are independently a phenyl group or a substituted phenyl group.

In an embodiment, $R_2$ and $R_3$ are a tert-butyl group.

In an embodiment, $R_2$ and $R_3$ are hydrogen.

In an embodiment of the disclosure, the second ethylene copolymer is made with a bridged metallocene catalyst having the formula II:

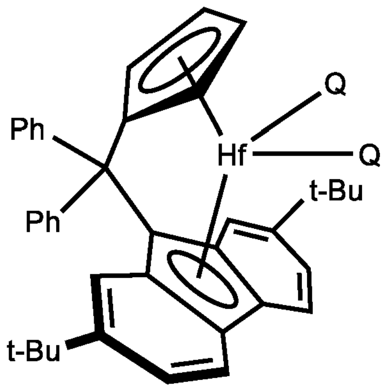

(II)

wherein Q is independently an activatable leaving group ligand.

In the current disclosure, the term "activatable", means that the ligand Q may be cleaved from the metal center M via a protonolysis reaction or abstracted from the metal center M by suitable acidic or electrophilic catalyst activator compounds (also known as "co-catalyst" compounds) respectively, examples of which are described below. The activatable ligand Q may also be transformed into another ligand which is cleaved or abstracted from the metal center M (e.g. a halide may be converted to an alkyl group). Without wishing to be bound by any single theory, protonolysis or abstraction reactions generate an active "cationic" metal center which can polymerize olefins.

In embodiments of the present disclosure, the activatable ligand, Q is independently selected from the group consisting of a hydrogen atom; a halogen atom; a $C_{1-20}$ hydrocarbyl radical, a $C_{1-20}$ alkoxy radical, and a $C_{6-10}$ aryl or aryloxy radical, where each of the hydrocarbyl, alkoxy, aryl, or aryl oxide radicals may be un-substituted or further substituted by one or more halogen or other group; a $C_{1-8}$ alkyl; a $C_{1-8}$ alkoxy; a $C_{6-10}$ aryl or aryloxy; an amido or a phosphido radical, but where Q is not a cyclopentadienyl. Two Q ligands may also be joined to one another and form for example, a substituted or unsubstituted diene ligand (e.g. 1,3-butadiene); or a delocalized heteroatom containing group such as an acetate or acetamidinate group.

In an embodiment of the disclosure, each Q is independently selected from the group consisting of a halide atom, a $C_{1-4}$ alkyl radical and a benzyl radical.

In an embodiment, suitable activatable ligands, Q are monoanionic such as a halide (e.g. chloride) or a hydrocarbyl (e.g. methyl, benzyl).

In an embodiment, each activatable ligand, Q is a methyl group.

In an embodiment, each activatable ligand, Q is a benzyl group.

In an embodiment, each activatable ligand, Q is a chloride group.

In an embodiment of the disclosure, the single site catalyst used to make the second ethylene copolymer is

diphenylmethylene(cyclopentadienyl)(2,7-di-t-butylfluorenyl)hafnium dichloride having the molecular formula:

$$[(2,7\text{-}tBu_2Flu)Ph_2C(Cp)HfCl_2].$$

In an embodiment of the disclosure the single site catalyst used to make the second ethylene copolymer is diphenylmethylene(cyclopentadienyl)(2,7-di-t-butylfluorenyl)hafnium dimethyl having the molecular formula:

$$[(2,7\text{-}tBu_2Flu)Ph_2C(Cp)HfMe_2].$$

In addition to the single site catalyst molecule per se, an active single site catalyst system typically further comprises a catalyst activator.

In an embodiment of the disclosure, a catalyst activator comprises an alkylaluminoxane and/or an ionic activator.

A catalyst activator may also optionally include a hindered phenol compound.

In an embodiment of the disclosure, a catalyst activator comprises an alkylaluminum, an ionic activator and a hindered phenol compound.

Although the exact structure of alkylaluminoxane is uncertain, subject matter experts generally agree that it is an oligomeric species that contain repeating units of the general formula:

$$(R)_2AlO\text{-}(Al(R)\text{-}O)_n\text{-}Al(R)_2$$

where the R groups may be the same or different linear, branched or cyclic hydrocarbyl radicals containing 1 to 20 carbon atoms and n is from 0 to about 50. A non-limiting example of an alkylaluminoxane is methylaluminoxane (or MAO) wherein each R group is a methyl radical.

In an embodiment of the disclosure, R of the alkylaluminoxane, is a methyl radical and m is from 10 to 40.

In an embodiment of the disclosure, the alkylaluminoxane is modified methylaluminoxane (MMAO).

It is well known in the art, that the alkylaluminoxane can serve dual roles as both an alkylator and an activator. Hence, an alkylaluminoxane catalyst activator is often used in combination with activatable ligands such as halogens.

In general, ionic activators are comprised of a cation and a bulky anion; wherein the latter is substantially non-coordinating. Non-limiting examples of ionic activators are boron ionic activators that are four coordinate with four ligands bonded to the boron atom. Non-limiting examples of boron ionic activators include the following formulas shown below:

$$[R^5]^+[B(R^7)_4]^-$$

where B represents a boron atom, $R^5$ is an aromatic hydrocarbyl (e.g. triphenyl methyl cation) and each $R^7$ is independently selected from phenyl radicals which are unsubstituted or substituted with from 3 to 5 substituents selected from fluorine atoms, $C_{1-4}$ alkyl or alkoxy radicals which are unsubstituted or substituted by fluorine atoms; and a silyl radical of formula $-Si(R^9)_3$, where each $R^9$ is independently selected from hydrogen atoms and $C_{1-4}$ alkyl radicals, and

$$[(R^8)_tZH]^+[B(R^7)_4]^-$$

where B is a boron atom, H is a hydrogen atom, Z is a nitrogen or phosphorus atom, t is 2 or 3 and $R^8$ is selected from $C_{1-8}$ alkyl radicals, phenyl radicals which are unsubstituted or substituted by up to three $C_{1-4}$ alkyl radicals, or one $R^8$ taken together with the nitrogen atom may form an anilinium radical and $R^7$ is as defined above.

In both formula a non-limiting example of $R^7$ is a pentafluorophenyl radical. In general, boron ionic activators may be described as salts of tetra(perfluorophenyl) boron; non-limiting examples include anilinium, carbonium, oxonium, phosphonium and sulfonium salts of tetra(perfluorophenyl)boron with anilinium and trityl (or triphenylmethylium). Additional non-limiting examples of ionic activators include: triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butyl)ammonium tetra(o-tolyl)boron, N,N-dimethylanilinium tetra(phenyl)boron, N,N-diethylanilinium tetra(phenyl)boron, N,N-diethylanilinium tetra(phenyl)n-butylboron, N,N-2,4,6-pentamethylanilinium tetra(phenyl)boron, di-(isopropyl)ammonium tetra(pentafluorophenyl)boron, dicyclohexylammonium tetra(phenyl)boron, triphenylphosphonium tetra(phenyl)boron, tri(methylphenyl)phosphonium tetra(phenyl)boron, tri(dimethylphenyl)phosphonium tetra(phenyl)boron, tropillium tetrakispentafluorophenyl borate, triphenylmethylium tetrakispentafluorophenyl borate, benzene(diazonium)tetrakispentafluorophenyl borate, tropillium tetrakis(2,3,5,6-tetrafluorophenyl)borate, triphenylmethylium tetrakis(2,3,5,6-tetrafluorophenyl)borate, benzene(diazonium) tetrakis(3,4,5-trifluorophenyl)borate, tropillium tetrakis(3,4,5 -trifluorophenyl)borate, benzene(diazonium) tetrakis(3,4,5-trifluorophenyl)borate, tropillium tetrakis(1,2,2-trifluoroethenyl)borate, triphenylmethylium tetrakis(1 ,2,2-trifluoroethenyl)borate, benzene(diazonium) tetrakis(1,2,2-trifluoroethenyl)borate, tropillium tetrakis(2,3,4,5-tetrafluorophenyl)borate, triphenylmethylium tetrakis(2,3,4,5-tetrafluorophenyl)borate, and benzene(diazonium) tetrakis(2,3,4,5 tetrafluorophenyl)borate. Readily available commercial ionic activators include N,N-dimethylanilinium tetrakispentafluorophenyl borate, and triphenylmethylium tetrakispentafluorophenyl borate.

In an embodiment of the disclosure, the catalyst activator comprises an ionic activator selected from the group consisting of N,N-dimethylaniliniumtetrakispentafluorophenyl borate ("$[Me_2NHPh][B(C_6F_5)_4]$"); triphenylmethylium tetrakispentafluorophenyl borate ("$[Ph_3C][B(C_6F_5)_4]$", also known as "trityl borate"); and trispentafluorophenyl boron.

In an embodiment of the disclosure, the catalyst activator comprises triphenylmethylium tetrakispentafluorophenyl borate, "trityl borate".

In embodiments of the disclosure, the catalyst activator comprises a hindered phenol compound selected from the group consisting of butylated phenolic antioxidants, butylated hydroxytoluene, 2,6-di-tertiarybutyl-4-ethyl phenol (BHEB), 4,4'-methylenebis (2,6-di-tertiary-butylphenol), 1,3, 5-trimethyl-2,4,6-tris (3,5-di-tert-butyl-4-hydroxybenzyl) benzene and octadecyl-3-(3',5'-di-tert-butyl-4'-hydroxyphenyl) propionate.

In an embodiment of the disclosure, the catalyst activator comprises the hindered phenol compound, 2,6-di-tertiarybutyl-4-ethyl phenol (BHEB).

Optionally, in embodiment of the disclosure, mixtures of alkylaluminoxanes and ionic activators can be used as catalyst activators, optionally together with a hindered phenol compound.

To produce an active single site catalyst system the quantity and mole ratios of the above components: the single site catalyst, the alkylaluminoxane, the ionic activator, and the optional hindered phenol are optimized.

In embodiments of the disclosure, the ionic activator compounds may be used in amounts which provide a molar ratio of hafnium, Hf (of the single site catalyst molecule) to boron that will be from 1:1 to 1:10, or from 1:1 to 1:6, or from 1:1 to 1:2.

In embodiments of the disclosure, the mole ratio of aluminum contained in the alkylaluminoxane to the hafnium, Hf (of the single site catalyst molecule) will be from 5:1 to 1000:1, including narrower ranges within this range.

In embodiments of the disclosure, the mole ratio of aluminum contained in the alkylaluminoxane to the hindered phenol (e.g. BHEB) will be from 1:1 to 1:0.1, including narrower ranges withing this range.

To produce an active single site catalyst system the quantity and mole ratios of the three or four components: the single site catalyst, the alkylaluminoxane, the ionic activator, and the optional hindered phenol are optimized.

In an embodiment of the disclosure, the single site catalyst used to make the second ethylene copolymer produces long chain branches, and the second ethylene copolymer will contain long chain branches, hereinafter 'LCB'. LCB is a well-known structural phenomenon in ethylene copolymers and well known to those of ordinary skill in the art. Traditionally, there are three methods for LCB analysis, namely, nuclear magnetic resonance spectroscopy (NMR), for example see J.C. Randall, J Macromol. Sci., Rev. Macromol. Chem. Phys. 1989, 29, 201; triple detection SEC equipped with a DRI, a viscometer and a low-angle laser light scattering detector, for example see W.W. Yau and D.R. Hill, Int. J. Polym. Anal. Charact. 1996; 2:151; and rheology, for example see W.W. Graessley, Acc. Chem. Res. 1977, 10, 332-339. In this disclosure, a long chain branch is macromolecular in nature, i.e. long enough to be seen in an NMR spectra, triple detector SEC experiments or rheological experiments.

In an embodiment of the disclosure, the second ethylene copolymer contains long chain branching characterized by the LCBF disclosed herein. In embodiments of the disclosure, the upper limit on the LCBF of the second ethylene copolymer may be about 0.5, in other cases about 0.4 and in still other cases about 0.3 (dimensionless). In embodiments of the disclosure, the lower limit on the LCBF of the second ethylene copolymer may be about 0.001, in other cases about 0.0015 and in still other cases about 0.002 (dimensionless).

The second ethylene copolymer may contain catalyst residues that reflect the chemical composition of the catalyst formulation used to make it. Those skilled in the art will understand that catalyst residues are typically quantified by the parts per million of metal, in for example the second ethylene copolymer (or the ethylene copolymer composition; see below), where the metal present originates from the metal in the catalyst formulation used to make it. Non-limiting examples of the metal residue which may be present include Group 4 metals, titanium, zirconium and hafnium. In embodiments of the disclosure, the upper limit on the ppm of metal in the second ethylene copolymer may be about 3.0 ppm, in other cases about 2.0 ppm and in still other cases about 1.5 ppm. In embodiments of the disclosure, the lower limit on the ppm of metal in the second ethylene copolymer may be about 0.03 ppm, in other cases about 0.09 ppm and in still other cases about 0.15 ppm.

In an embodiment of the disclosure, the second ethylene copolymer has a density of from 0.865 to 0.9306 g/cm$^3$, a molecular weight distribution, $M_w/M_n$ of from 1.7 to 2.7, and a melt index, $I_2$ of from 0.1 to 10 g/10min.

In an embodiment of the disclosure, the first ethylene copolymer has a density of from 0.865 to 0.930 g/cm$^3$, a molecular weight distribution, $M_w/M_n$ of from 1.7 to 2.3, and a melt index, $I_2$ of from 0.1 to 10 g/10min.

In embodiments of the disclosure, the upper limit on the molecular weight distribution, $M_w/M_n$ of the second ethylene copolymer may be about 2.8, or about 2.6, or about 2.5, or about 2.4, or about 2.3, or about 2.2. In embodiments of

the disclosure, the lower limit on the molecular weight distribution, $M_w/M_n$ of the second ethylene copolymer may be about 1.6, or about 1.7, or about 1.8, or about 1.9.

In embodiments of the disclosure, the second ethylene copolymer has a molecular weight distribution, $M_w/M_n$ of < 2.6, or < 2.3, or ≤ 2.3, or < 2.1, or ≤ 2.1, or < 2.0, or ≤ 2.0, or about 2.0. In embodiments of the disclosure, the second ethylene copolymer has a molecular weight distribution, $M_w/M_n$ of from about 1.7 to about 2.3, or from about 1.8 to about 2.3 or from about 1.8 to about 2.2.

In an embodiment of the disclosure, the second ethylene copolymer has from 10 to 150 short chain branches per thousand carbon atoms (SCB2). In further embodiments, the second ethylene copolymer has from 5 to 100 short chain branches per thousand carbon atoms (SCB2), or from 10 to 100 short chain branches per thousand carbon atoms (SCB2), or from 15 to 100 short chain branches per thousand carbon atoms (SCB2), or from 5 to 75 short chain branches per thousand carbon atoms (SCB2), or from 10 to 75 short chain branches per thousand carbon atoms (SCB2), or from 15 to 75 short chain branches per thousand carbon atoms (SCB2), or from 5 to 60 short chain branches per thousand carbon atoms (SCB2). In still further embodiments, the second ethylene copolymer has from 5 to 50 short chain branches per thousand carbon atoms (SCB2), or from 10 to 50 short chain branches per thousand carbon atoms (SCB2), or from 5 to 45 short chain branches per thousand carbon atoms (SCB2), or from 10 to 45 short chain branches per thousand carbon atoms (SCB2), or from 15 to 45 short chain branches per thousand carbon atoms (SCB2), or from 5 to 40 short chain branches per thousand carbon atoms (SCB2), or from 10 to 40 short chain branches per thousand carbon atoms (SCB2), or from 5 to 35 short chain branches per thousand carbon atoms (SCB2), or from 5 to 30 short chain branches per thousand carbon atoms (SCB2), or from 10 to 35 short chain branches per thousand carbon atoms (SCB2), or from 10 to 30 short chain branches per thousand carbon atoms (SCB2), or from 15 to 30 short chain branches per thousand carbon atoms (SCB2), or from 15 to 35 short chain branches per thousand carbon atoms (SCB2).

The short chain branching (i.e. the short chain branching per thousand backbone carbon atoms, SCB2) is the branching due to the presence of an alpha-olefin comonomer in the ethylene copolymer and will for example have two carbon atoms for a 1-butene comonomer, or four carbon atoms for a 1-hexene comonomer, or six carbon atoms for a 1-octene comonomer, etc.

In embodiments of the disclosure, the upper limit on the density, d2 of the second ethylene copolymer may be about 0.930 g/cm$^3$, or about 0.926 g/cm$^3$; in some cases about 0.921 g/cm$^3$; in other cases about 0.916 g/cm$^3$, in other cases about 0.912 g/cm$^3$, in still other cases about 0.910 g/cm$^3$. In embodiments of the disclosure, the lower limit on the density, d2 of the second ethylene copolymer may be about 0.855 g/cm$^3$, in some cases about 0.865 g/cm$^3$; and in other cases about 0.875 g/cm$^3$, or about 0.885 g/cm$^3$.

In embodiments of the disclosure the density, d2 of the second ethylene copolymer may be from about 0.855 g/cm$^3$ to about 0.930 g/cm$^3$, or from about 0.855 g/cm$^3$ to about 0.926 g/cm$^3$, or from about 0.855 g/cm$^3$ to about 0.921 g/cm$^3$, or from about 0.855 g/cm$^3$ to about 0.916 g/cm$^3$, or from about 0.855 g/cm$^3$ to about 0.912 g/cm$^3$, or from about 0.855 g/cm$^3$ to about 0.910, or from about 0.865 g/cm$^3$ to about 0.930 g/cm$^3$, or from about 0.865 g/cm$^3$ to about 0.926 g/cm$^3$, or from about 0.865 g/cm$^3$ to about 0.921 g/cm$^3$, or from about 0.865 g/cm$^3$ to about 0.916 g/cm$^3$, or from about 0.865 g/cm$^3$ to about 0.912 g/cm$^3$, or from about 0.865 g/cm$^3$ to about 0.910 g/cm$^3$, or from about 0.875 g/cm$^3$ to about 0.930 g/cm$^3$, or from about 0.875 g/cm$^3$ to about 0.926 g/cm$^3$, or from about 0.875 g/cm$^3$ to about 0.921 g/cm$^3$, or from about 0.875 g/cm$^3$ to about 0.916 g/cm$^3$, or from about 0.875 g/cm$^3$ to about 0.912 g/cm$^3$, or from about 0.875 g/cm$^3$ to about 0.910 g/cm$^3$, from about 0.885 g/cm$^3$ to about 0.930 g/cm$^3$, or from about 0.885 g/cm$^3$ to about 0.926 g/cm$^3$, or from about 0.885 g/cm$^3$ to about 0.921 g/cm$^3$, or from about 0.885 g/cm$^3$ to about 0.916 g/cm$^3$, or from about 0.885 g/cm$^3$ to about 0.912 g/cm$^3$, or from about 0.885 g/cm$^3$ to about 0.910 g/cm$^3$, or from about 0.885 g/cm$^3$ to about 0.914 g/cm$^3$, or from about 0.885 g/cm$^3$ to about 0.913 g/cm$^3$.

In an embodiment of the disclosure, the difference between the density of the first ethylene copolymer, d1, and the density of the second ethylene copolymer, d2 is less than 0.030 g/cm$^3$. In another embodiment of the disclosure, the difference between the density of the first ethylene copolymer, d1, and the density of the second ethylene copolymer, d2 is less than 0.020 g/cm$^3$. In yet another embodiment of the disclosure, the difference between the density of the first ethylene copolymer, d1, and the density of the second ethylene copolymer, d2 is less than 0.015 g/cm$^3$. In still yet another embodiment of the disclosure, the difference between the density of the first ethylene copolymer, d1, and the density of the second ethylene copolymer, d2 is less than 0.010 g/cm$^3$.

In an embodiment, the density of the second ethylene copolymer is equal to or greater than the density of the first ethylene copolymer.

In an embodiment, the second ethylene copolymer has a higher density than the first ethylene copolymer

In embodiments of the disclosure, the upper limit on the $CDBI_{50}$ of the second ethylene copolymer may be about 98 weight%, in other cases about 95 wt% and in still other cases about 90 wt%. In embodiments of the disclosure, the lower limit on the $CDBI_{50}$ of the second ethylene copolymer may be about 70 weight%, in other cases about 75 wt% and in still other cases about 80 wt%.

In embodiments of the disclosure the melt index of the second ethylene copolymer $I_2^2$ may be from about 0.01 g/10min to about 100 g/10min, or from about 0.01 g/10min to about 75 g/10min, or from about 0.1 g/10min to about 100

g/10min, or from about 0.1 g/10min to about 70 g/10min, or from about 0.01 g/10min to about 50 g/10min, or from about 0.1 g/10min to about 50 g/10min, or from about 0.1 g/10min to about 25 g/10min, or from about 0.1 g/10min to about 20 g/10min, or from about 0.1 g/10min to about 15 g/10min, or from about 0.1 to about 10 g/10min, or about 0.1 to about 5 g/10min, or from about 0.1 to 2.5 g/10min, or less than about 5 g/10min, or less than about 3 g/10min, or less than about 1.0 g/10min, or less than about 0.75 g/10min.

In an embodiment of the disclosure, the second ethylene copolymer has a weight average molecular weight, $M_w$ of from about 15,000 to about 175,000 g/mol, or from about 25,000 to about 150,000 g/mol, or from about 25,000 to about 100,000 g/mol, or from about 25,000 to about 75,000 g/mol, or from about 30,000 to about 75,000 g/mol, or from about 20,000 to about 75,000 g/mol, or from about 25,000 to about 80,000 g/mol, or from about 20,000 to about 80,000 g/mol.

In an embodiment of the disclosure, the second ethylene copolymer has a number average molecular weight, $M_n$ of from about 5,000 to about 75,000 g/mol, or from about 10,000 to about 50,000 g/mol, or from about 10,000 to about 40,000 g/mol.

In embodiments of the disclosure, the upper limit on the weight percent (wt%) of the second ethylene copolymer in the ethylene copolymer composition (i.e. the weight percent of the second ethylene copolymer based on the total weight of the first, the second and the third ethylene copolymer) may be about 85 wt%, or about 80 wt%, or about 75 wt%, or about 70 wt%, or about 65 wt%, or about 60 wt%, or about 55 wt%, or about 50 wt%, or about 45 wt%, or about 40 wt%. In embodiments of the disclosure, the lower limit on the wt% of the second ethylene copolymer in the ethylene copolymer composition may be about 5 wt%, or about 10 wt%, or about 15 wt%, or about 20 wt%, or about 25 wt%, or about 30 wt%, or in other cases about 35 wt%.

The Third Ethylene Copolymer

In an embodiment of the disclosure, the third ethylene copolymer is made with a single site catalyst, non-limiting examples of which include phosphinimine catalysts, metallocene catalysts, and constrained geometry catalysts, all of which are well known in the art.

In an embodiment of the disclosure, the third ethylene copolymer is made with a multi-site catalyst system, non-limiting examples of which include Ziegler-Natta catalysts and chromium catalysts, both of which are well known in the art.

In embodiments of the disclosure, alpha-olefins which may be copolymerized with ethylene to make the third ethylene copolymer may be selected from the group comprising 1-propene, 1-butene, 1-pentene, 1-hexene and 1-octene and mixtures thereof.

In an embodiment of the disclosure, the third ethylene copolymer is a homogeneously branched ethylene copolymer.

In an embodiment of the disclosure, the third ethylene copolymer is an ethylene/1-octene copolymer.

In an embodiment of the disclosure, the third ethylene copolymer is made with a metallocene catalyst.

In an embodiment of the disclosure, the third ethylene copolymer is made with a Ziegler-Natta catalyst.

In an embodiment of the disclosure, the third ethylene copolymer is a heterogeneously branched ethylene copolymer.

In an embodiment of the disclosure, the third ethylene copolymer is made with a metallocene catalyst.

In an embodiment of the disclosure, the third ethylene copolymer is made with a bridged metallocene catalyst.

In an embodiment of the disclosure, the third ethylene copolymer is made with a bridged metallocene catalyst having the formula I:

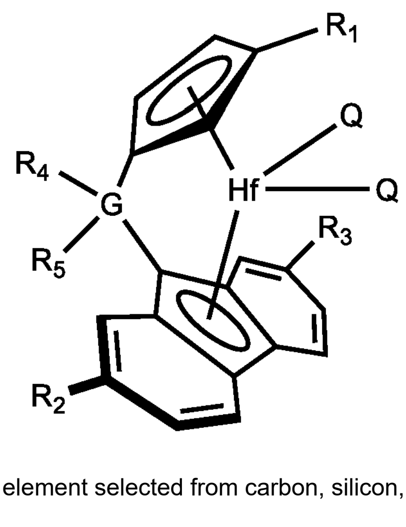

(I)

wherein G is a group 14 element selected from carbon, silicon, germanium, tin or lead; $R_1$ is a hydrogen atom, a $C_{1-20}$

hydrocarbyl radical, a $C_{1-20}$ alkoxy radical or a $C_{6-10}$ aryl oxide radical; $R_2$ and $R_3$ are independently selected from a hydrogen atom, a $C_{1-20}$ hydrocarbyl radical, a $C_{1-20}$ alkoxy radical or a $C_{6-10}$ aryl oxide radical; $R_4$ and $R_5$ are independently selected from a hydrogen atom, an unsubstituted $C_{1-20}$ hydrocarbyl radical, a substituted $C_{1-20}$ hydrocarbyl radical, a $C_{1-20}$ alkoxy radical or a $C_{6-10}$ aryl oxide radical; and Q is independently an activatable leaving group ligand.

In an embodiment, $R_4$ and $R_5$ are independently an aryl group.

In an embodiment, $R_4$ and $R_5$ are independently a phenyl group or a substituted phenyl group.

In an embodiment, $R_4$ and $R_5$ are a phenyl group.

In an embodiment, $R_4$ and $R_5$ are independently a substituted phenyl group.

In an embodiment, $R_4$ and $R_5$ are a substituted phenyl group, wherein the phenyl group is substituted with a substituted silyl group.

In an embodiment, $R_4$ and $R_5$ are a substituted phenyl group, wherein the phenyl group is substituted with a trialkyl silyl group.

In an embodiment, $R_4$ and $R_5$ are a substituted phenyl group, wherein the phenyl group is substituted at the para position with a trialkylsilyl group. In an embodiment, $R_4$ and $R_5$ are a substituted phenyl group, wherein the phenyl group is substituted at the para position with a trimethylsilyl group. In an embodiment, $R_4$ and $R_5$ are a substituted phenyl group, wherein the phenyl group is substituted at the para position with a triethylsilyl group.

In an embodiment, $R_4$ and $R_5$ are independently an alkyl group.

In an embodiment, $R_4$ and $R_5$ are independently an alkenyl group.

In an embodiment, $R_1$ is hydrogen.

In an embodiment, $R_1$ is an alkyl group.

In an embodiment, $R_1$ is an aryl group.

In an embodiment, $R_1$ is an alkenyl group.

In an embodiment, $R_2$ and $R_3$ are independently a hydrocarbyl group having from 1 to 30 carbon atoms.

In an embodiment, $R_2$ and $R_3$ are independently an aryl group.

In an embodiment, $R_2$ and $R_3$ are independently an alkyl group.

In an embodiment, $R_2$ and $R_3$ are independently an alkyl group having from 1 to 20 carbon atoms.

In an embodiment, $R_2$ and $R_3$ are independently a phenyl group or a substituted phenyl group.

In an embodiment, $R_2$ and $R_3$ are a tert-butyl group.

In an embodiment, $R_2$ and $R_3$ are hydrogen.

In an embodiment of the disclosure, the third ethylene copolymer is made with a bridged metallocene catalyst having the formula II:

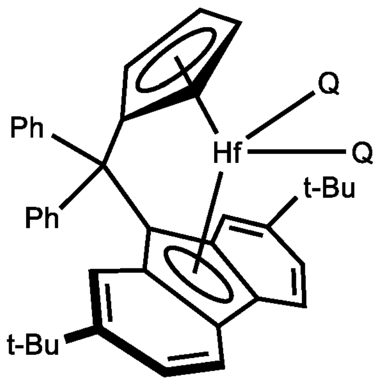

(II)

wherein Q is independently an activatable leaving group ligand.

In the current disclosure, the term "activatable", means that the ligand Q may be cleaved from the metal center M via a protonolysis reaction or abstracted from the metal center M by suitable acidic or electrophilic catalyst activator compounds (also known as "co-catalyst" compounds) respectively, examples of which are described below. The activatable ligand Q may also be transformed into another ligand which is cleaved or abstracted from the metal center M (e.g. a halide may be converted to an alkyl group). Without wishing to be bound by any single theory, protonolysis or abstraction reactions generate an active "cationic" metal center which can polymerize olefins.

In embodiments of the present disclosure, the activatable ligand, Q is independently selected from the group consisting of a hydrogen atom; a halogen atom; a $C_{1-20}$ hydrocarbyl radical, a $C_{1-20}$ alkoxy radical, and a $C_{6-10}$ aryl or aryloxy radical, where each of the hydrocarbyl, alkoxy, aryl, or aryl oxide radicals may be un-substituted or further substituted by one or more halogen or other group; a $C_{1-8}$ alkyl; a $C_{1-8}$ alkoxy; a $C_{6-10}$ aryl or aryloxy; an amido or a phosphido radical, but where Q is not a cyclopentadienyl. Two Q ligands may also be joined to one another and form for

example, a substituted or unsubstituted diene ligand (e.g. 1,3-butadiene); or a delocalized heteroatom containing group such as an acetate or acetamidinate group.

In an embodiment of the disclosure, each Q is independently selected from the group consisting of a halide atom, a $C_{1-4}$ alkyl radical and a benzyl radical.

In an embodiment, suitable activatable ligands, Q are monoanionic such as a halide (e.g. chloride) or a hydrocarbyl (e.g. methyl, benzyl).

In an embodiment, each activatable ligand, Q is a methyl group.

In an embodiment, each activatable ligand, Q is a benzyl group.

In an embodiment, each activatable ligand, Q is a chloride group.

In an embodiment of the disclosure, the single site catalyst used to make the third ethylene copolymer is diphenylmethylene(cyclopentadienyl)(2,7-di-t-butylfluorenyl)hafnium dichloride having the molecular formula:

$$[(2,7\text{-}tBu_2Flu)Ph_2C(Cp)HfCl_2].$$

In an embodiment of the disclosure the single site catalyst used to make the third ethylene copolymer is diphenylmethylene(cyclopentadienyl)(2,7-di-t-butylfluorenyl)hafnium dimethyl having the molecular formula:

$$[(2,7\text{-}tBu_2Flu)Ph_2C(Cp)HfMe_2].$$

In addition to the single site catalyst molecule per se, an active single site catalyst system typically further comprises a catalyst activator.

In an embodiment of the disclosure, a catalyst activator comprises an alkylaluminoxane and/or an ionic activator.

A catalyst activator may also optionally include a hindered phenol compound.

In an embodiment of the disclosure, a catalyst activator comprises an alkylaluminum, an ionic activator and a hindered phenol compound.

Although the exact structure of alkylaluminoxane is uncertain, subject matter experts generally agree that it is an oligomeric species that contain repeating units of the general formula:

$$(R)_2AlO\text{-}(Al(R)\text{-}O)_n\text{-}Al(R)_2$$

where the R groups may be the same or different linear, branched or cyclic hydrocarbyl radicals containing 1 to 20 carbon atoms and n is from 0 to about 50. A non-limiting example of an alkylaluminoxane is methylaluminoxane (or MAO) wherein each R group is a methyl radical.

In an embodiment of the disclosure, R of the alkylaluminoxane, is a methyl radical and m is from 10 to 40.

In an embodiment of the disclosure, the alkylaluminoxane is modified methylaluminoxane (MMAO).

It is well known in the art, that the alkylaluminoxane can serve dual roles as both an alkylator and an activator. Hence, an alkylaluminoxane catalyst activator is often used in combination with activatable ligands such as halogens.

In general, ionic activators are comprised of a cation and a bulky anion; wherein the latter is substantially non-coordinating. Non-limiting examples of ionic activators are boron ionic activators that are four coordinate with four ligands bonded to the boron atom. Non-limiting examples of boron ionic activators include the following formulas shown below:

$$[R^5]^+[B(R^7)_4]^-$$

where B represents a boron atom, $R^5$ is an aromatic hydrocarbyl (e.g. triphenyl methyl cation) and each $R^7$ is independently selected from phenyl radicals which are unsubstituted or substituted with from 3 to 5 substituents selected from fluorine atoms, $C_{1-4}$ alkyl or alkoxy radicals which are unsubstituted or substituted by fluorine atoms; and a silyl radical of formula $-Si(R^9)_3$, where each $R^9$ is independently selected from hydrogen atoms and $C_{1-4}$ alkyl radicals, and

$$[(R^8)_tZH]^+[B(R^7)_4]^-$$

where B is a boron atom, H is a hydrogen atom, Z is a nitrogen or phosphorus atom, t is 2 or 3 and $R^8$ is selected from $C_{1-8}$ alkyl radicals, phenyl radicals which are unsubstituted or substituted by up to three $C_{1-4}$ alkyl radicals, or one $R^8$ taken together with the nitrogen atom may form an anilinium radical and $R^7$ is as defined above.

In both formula a non-limiting example of $R^7$ is a pentafluorophenyl radical. In general, boron ionic activators may be described as salts of tetra(perfluorophenyl) boron; non-limiting examples include anilinium, carbonium, oxonium, phosphonium and sulfonium salts of tetra(perfluorophenyl)boron with anilinium and trityl (or triphenylmethylium). Additional non-limiting examples of ionic activators include: triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium

tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butyl)ammonium tetra(o-tolyl)boron, N,N-dimethylanilinium tetra(phenyl)boron, N,N-diethylanilinium tetra(phenyl)boron, N,N-diethylanilinium tetra(phenyl)n-butylboron, N,N-2,4,6-pentamethylanilinium tetra(phenyl)boron, di-(isopropyl)ammonium tetra(pentafluorophenyl)boron, dicyclohexylammonium tetra(phenyl)boron, triphenylphosphonium tetra(phenyl)boron, tri(methylphenyl)phosphonium tetra(phenyl)boron, tri(dimethylphenyl)phosphonium tetra(phenyl)boron, tropillium tetrakispentafluorophenyl borate, triphenylmethylium tetrakispentafluorophenyl borate, benzene(diazonium)tetrakispentafluorophenyl borate, tropillium tetrakis(2,3,5,6-tetrafluorophenyl)borate, triphenylmethylium tetrakis(2,3,5,6-tetrafluorophenyl)borate, benzene(diazonium) tetrakis(3,4,5-trifluorophenyl)borate, tropillium tetrakis(3,4,5 -trifluorophenyl)borate, benzene(diazonium) tetrakis(3,4,5-trifluorophenyl) borate, tropillium tetrakis(1,2,2-trifluoroethenyl)borate, triphenylmethylium tetrakis(1 ,2,2-trifluoroethenyl)borate, benzene(diazonium) tetrakis(1,2,2-trifluoroethenyl)borate, tropillium tetrakis(2,3,4,5-tetrafluorophenyl)borate, triphenylmethylium tetrakis(2,3,4,5-tetrafluorophenyl)borate, and benzene(diazonium) tetrakis(2,3,4,5 tetrafluorophenyl)borate. Readily available commercial ionic activators include N,N-dimethylanilinium tetrakispentafluorophenyl borate, and triphenylmethylium tetrakispentafluorophenyl borate.

In an embodiment of the disclosure, the catalyst activator comprises an ionic activator selected from the group consisting of N,N-dimethylaniliniumtetrakispentafluorophenyl borate ("$[Me_2NHPh][B(C_6F_5)_4]$"); triphenylmethylium tetrakispentafluorophenyl borate ("$[Ph_3C][B(C_6F_5)_4]$", also known as "trityl borate"); and trispentafluorophenyl boron.

In an embodiment of the disclosure, the catalyst activator comprises triphenylmethylium tetrakispentafluorophenyl borate, "trityl borate".

In embodiments of the disclosure, the catalyst activator comprises a hindered phenol compound selected from the group consisting of butylated phenolic antioxidants, butylated hydroxytoluene, 2,6-di-tertiarybutyl-4-ethyl phenol (BHEB), 4,4'-methylenebis (2,6-di-tertiary-butylphenol), 1,3, 5-trimethyl-2,4,6-tris (3,5-di-tert-butyl-4-hydroxybenzyl) benzene and octadecyl-3-(3',5'-di-tert-butyl-4'-hydroxyphenyl) propionate.

In an embodiment of the disclosure, the catalyst activator comprises the hindered phenol compound, 2,6-di-tertiarybutyl-4-ethyl phenol (BHEB).

Optionally, in embodiment of the disclosure, mixtures of alkylaluminoxanes and ionic activators can be used as catalyst activators, optionally together with a hindered phenol compound.

To produce an active single site catalyst system the quantity and mole ratios of the above components: the single site catalyst, the alkylaluminoxane, the ionic activator, and the optional hindered phenol are optimized.

In embodiments of the disclosure, the ionic activator compounds may be used in amounts which provide a molar ratio of hafnium, Hf (of the single site catalyst molecule) to boron that will be from 1:1 to 1:10, or from 1:1 to 1:6, or from 1:1 to 1:2.

In embodiments of the disclosure, the mole ratio of aluminum contained in the alkylaluminoxane to the hafnium, Hf (of the single site catalyst molecule) will be from 5:1 to 1000:1, including narrower ranges within this range.

In embodiments of the disclosure, the mole ratio of aluminum contained in the alkylaluminoxane to the hindered phenol (e.g. BHEB) will be from 1:1 to 1:0.1, including narrower ranges withing this range.

To produce an active single site catalyst system the quantity and mole ratios of the three or four components: the single site catalyst, the alkylaluminoxane, the ionic activator, and the optional hindered phenol are optimized.

In embodiments of the disclosure, the third ethylene copolymer has no long chain branching present or does not have any detectable levels of long chain branching.

In an embodiment of the disclosure, the third ethylene copolymer will contain long chain branches, hereinafter 'LCB'. LCB is a well-known structural phenomenon in polyethylenes and well known to those of ordinary skill in the art. Traditionally, there are three methods for LCB analysis, namely, nuclear magnetic resonance spectroscopy (NMR), for example see J.C. Randall, J Macromol. Sci., Rev. Macromol. Chem. Phys. 1989, 29, 201; triple detection SEC equipped with a DRI, a viscometer and a low-angle laser light scattering detector, for example see W.W. Yau and D.R. Hill, Int. J. Polym. Anal. Charact. 1996; 2:151; and rheology, for example see W.W. Graessley, Acc. Chem. Res. 1977, 10, 332-339. In this disclosure, a long chain branch is macromolecular in nature, i.e. long enough to be seen in an NMR spectra, triple detector SEC experiments or rheological experiments.

In an embodiment of the disclosure, the third ethylene copolymer contains long chain branching characterized by the LCBF disclosed herein. In embodiments of the disclosure, the upper limit on the LCBF of the third ethylene copolymer may be about 0.5, in other cases about 0.4 and in still other cases about 0.3 (dimensionless). In embodiments of the disclosure, the lower limit on the LCBF of the third ethylene copolymer may be about 0.001, in other cases about 0.0015 and in still other cases about 0.002 (dimensionless).

In embodiments of the disclosure, the upper limit on the molecular weight distribution, $M_w/M_n$ of the third ethylene copolymer may be about 2.8, or about 2.6, or about 2.5, or about 2.4, or about 2.3, or about 2.2. In embodiments of the disclosure, the lower limit on the molecular weight distribution, $M_w/M_n$ of the third ethylene copolymer may be about 1.4, or about 1.6, or about 1.7, or about 1.8, or about 1.9.

In embodiments of the disclosure, the third ethylene copolymer has a molecular weight distribution, $M_w/M_n$ of < 2.6, or < 2.3, or ≤ 2.3, or < 2.1, or ≤ 2.1, or < 2.0, or ≤ 2.0, or about 2.0. In embodiments of the disclosure, the first ethylene copolymer has a molecular weight distribution, $M_w/M_n$ of from about 1.7 to about 2.3, or from about 1.8 to about 2.3, or from about 1.8 to 2.2.

In embodiments of the disclosure, the third ethylene copolymer has a molecular weight distribution, $M_w/M_n$ of ≥ 2.3, or > 2.3, or ≥ 2.5, or > 2.5, or ≥ 2.7, or > 2.7, or ≥ 2.9, or > 2.9, or ≥ 3.0, or 3.0. In embodiments of the disclosure, the third ethylene copolymer has a molecular weight distribution, $M_w/M_n$ of from 2.3 to 6.5, or from 2.3 to 6.0, or from 2.3 to 5.5, or from 2.3 to 5.0, or from 2.3 to 4.5, or from 2.3 to 4.0, or from 2.3 to 3.5, or from 2.3 to 3.0, or from 2.5 to 5.0, or from 2.5 to 4.5, or from 2.5 to 4.0, or from 2.5 to 3.5, or from 2.7 to 5.0, or from 2.7 to 4.5, or from 2.7 to 4.0, or from 2.7 to 3.5, or from 2.9 to 5.0, or from 2.9 to 4.5, or from 2.9 to 4.0, or from 2.9 to 3.5.

In embodiments of the disclosure, the third ethylene copolymer has a molecular weight distribution, $M_w/M_n$ of from 2.0 to 6.5, or from 2.3 to 6.5, or from 2.3 to 6.0, or from 2.0 to 6.0, or from 2.0 to 5.5, or from 2.0 to 5.0, or from 2.0 to 4.5, or from 2.0 to 4.0, or from 2.0 to 3.5, or from 2.0 to 3.0.

In embodiments of the disclosure, the third ethylene copolymer has from 1 to 75 short chain branches per thousand carbon atoms (SCB3). In further embodiments, the second ethylene copolymer has from 2 to 50 short chain branches per thousand carbon atoms (SCB3), or from 2 to 40 short chain branches per thousand carbon atoms (SCB3), or from 2 to 30 short chain branches per thousand carbon atoms (SCB3), or from 5 to 40 short chain branches per thousand carbon atoms (SCB3), or from 5 to 30 short chain branches per thousand carbon atoms (SCB3), or from 7.5 to 30 short chain branches per thousand carbon atoms (SCB3), or from 7.5 to 25 short chain branches per thousand carbon atoms (SCB3), or from 10 to 30 short chain branches per thousand carbon atoms (SCB3), or from 10 to 25 short chain branches per thousand carbon atoms (SCB3).

The short chain branching (i.e. the short chain branching per thousand backbone carbon atoms, SCB3) is the branching due to the presence of an alpha-olefin comonomer in the ethylene copolymer and will for example have two carbon atoms for a 1-butene comonomer, or four carbon atoms for a 1-hexene comonomer, or six carbon atoms for a 1-octene comonomer, etc.

In embodiments of the disclosure, the upper limit on the density, d3 of the third ethylene copolymer may be about 0.975 $g/cm^3$; in some cases about 0.965 $g/cm^3$ and; in other cases about 0.955 $g/cm^3$, in yet other cases about 0.945 $g/cm^3$. In embodiments of the disclosure, the lower limit on the density, d3 of the third ethylene copolymer may be about 0.855 $g/cm^3$, in some cases about 0.865 $g/cm^3$, and; in other cases about 0.875 $g/cm^3$.

In embodiments of the disclosure the density, d3 of the third ethylene copolymer may be from about 0.875 $g/cm^3$ to about 0.965 $g/cm^3$, or from about 0.875 $g/cm^3$ to about 0.960 $g/cm^3$, or from about 0.875 $g/cm^3$ to 0.950 $g/cm^3$, from about 0.875 $g/cm^3$ to about 0.945 $g/cm^3$, or from about 0.875 $g/cm^3$ to about 0.940 $g/cm^3$, or from about 0.875 $g/cm^3$ to about 0.936 $g/cm^3$, or from about 0.865 $g/cm^3$ to about 0.936 $g/cm^3$, or from about 0.865 $g/cm^3$ to about 0.940 $g/cm^3$, or from about 0.865 $g/cm^3$ to about 0.945 $g/cm^3$, or from about 0.865 $g/cm^3$ to about 0.950 $g/cm^3$, or from about 0.885 $g/cm^3$ to about 0.960 $g/cm^3$, or from about 0.885 $g/cm^3$ to about 0.950 $g/cm^3$, or from about 0.885 $g/cm^3$ to about 0.945 $g/cm^3$, or from about 0.885 $g/cm^3$ to about 0.940 $g/cm^3$, or from about 0.885 $g/cm^3$ to about 0.936 $g/cm^3$, or from about 0.895 $g/cm^3$ to about 0.960 $g/cm^3$, or from about 0.895 $g/cm^3$ to about 0.950 $g/cm^3$, or from about 0.895 $g/cm^3$ to about 0.945 $g/cm^3$, or from about 0.895 $g/cm^3$ to about 0.940 $g/cm^3$, or from about 0.895 $g/cm^3$ to about 0.936 $g/cm^3$, or from about 0.895 $g/cm^3$ to about 0.930 $g/cm^3$, or from about 0.885 $g/cm^3$ to about 0.930 $g/cm^3$, or from about 0.895 $g/cm^3$ to about 0.926 $g/cm^3$, or from about 0.885 $g/cm^3$ to about 0.926 $g/cm^3$, or from about 0.895 $g/cm^3$ to about 0.924 $g/cm^3$, or from about 0.885 $g/cm^3$ to about 0.924 $g/cm^3$.

In an embodiment, the third ethylene copolymer has a higher density than the first ethylene copolymer.

In embodiments of the disclosure, when a single site catalyst is used to make the third ethylene copolymer, the upper limit on the $CDBI_{50}$ of the third ethylene copolymer may be about 98 weight%, in other cases about 95 wt% and in still other cases about 90 wt%. In embodiments of the disclosure, when a single site catalyst is used to make the third ethylene copolymer, the lower limit on the $CDBI_{50}$ of the third ethylene copolymer may be about 70 weight%, in other cases about 75 wt% and in still other cases about 80 wt%.

In embodiments of the disclosure, when a multi-site catalyst is used to make the third ethylene copolymer, the third ethylene copolymer is an ethylene copolymer which has a composition distribution breadth index, $CDBI_{50}$ of less than 75 wt%, or 70 wt% or less. In further embodiments of the disclosure, when a multi-site catalyst is used to make the third ethylene copolymer, the third ethylene copolymer is an ethylene copolymer which has a $CDBI_{50}$ of 65 wt% or less, or 60 wt% or less, or 55 wt% or less, or 50 wt% or less, or 45 wt% or less.

In embodiments of the disclosure the melt index of the third ethylene copolymer $I_2^3$ may be from about 0.01 g/10min to about 100 g/10min, or from about 0.01 g/10min to about 75 g/10min, or from about 0.1 g/10min to about 100 g/10min, or from about 0.1 g/10min to about 70 g/10min, or from about 0.01 g/10min to about 50 g/10min, or from about 0.1 g/10min to about 50 g/10min, or from about 0.1 g/10min to about 25 g/10min, or from about 0.1 g/10min to about 20 g/10min, or from about 0.1 g/10min to about 15 g/10min, or from about 0.1 to about 10 g/10min, or about 0.1 to about 5 g/10min, or from about 0.1 to 2.5 g/10min, or less than about 5 g/10min, or less than about 3 g/10min, or less than about 1.0

g/10min, or less than about 0.75 g/10min.

In an embodiment of the disclosure, the third ethylene copolymer has a weight average molecular weight, $M_w$ of from about 15,000 to about 175,000 g/mol, or from about 25,000 to about 150,000 g/mol, or from about 35,000 to about 100,000 g/mol, or from about 45,000 to about 100,000 g/mol.

In an embodiment of the disclosure, the third ethylene copolymer has a number average molecular weight, $M_n$ of from about 5,000 to about 75,000 g/mol, or from about 10,000 to about 50,000 g/mol, or from about 10,000 to about 40,000 g/mol.

In embodiments of the disclosure, the upper limit on the weight percent (wt%) of the third ethylene copolymer in the ethylene copolymer composition (i.e. the weight percent of the third ethylene copolymer based on the total weight of the first, the second and the third ethylene copolymer) may be about 60 wt%, or about 55 wt%, or 50 wt%, in other cases about 45 wt%, in other cases about 40 wt%, or about 35 wt%, or about 30 wt%, or about 25 wt%. **In** embodiments of the disclosure, the lower limit on the wt% of the third ethylene copolymer in the final ethylene copolymer composition may be about 1 wt%, or about 3 wt%, or about 5 wt%, or about 10 wt%, or about 15 wt%, or about 20 wt%.

The Ethylene Copolymer Composition

The polyethylene compositions disclosed herein can be made using any well-known techniques in the art, including but not limited to melt blending, solution blending, or in-reactor blending to bring together a first ethylene copolymer, a second ethylene copolymer and a third ethylene copolymer.

In an embodiment, the ethylene copolymer composition of the present disclosure is made using a single site catalyst in a first reactor to give a first ethylene copolymer, a single site catalyst is used in a second reactor to give a second ethylene copolymer, and a single site catalyst is used in a third reactor to give a third ethylene copolymer.

In an embodiment, the ethylene copolymer composition of the present disclosure is made using a single site catalyst in a first reactor to give a first ethylene copolymer, a single site catalyst is used in a second reactor to give a second ethylene copolymer, and a multi-site catalyst is used in a third reactor to give a third ethylene copolymer.

In an embodiment, the ethylene copolymer composition of the present disclosure is made by forming a first ethylene copolymer in a first reactor by polymerizing ethylene and an alpha olefin with a single site catalyst; forming a second ethylene copolymer in a second reactor by polymerizing ethylene and an alpha olefin with a single site catalyst, and forming a third ethylene copolymer in a third reactor by polymerizing ethylene and an alpha olefin with a single site catalyst.

In an embodiment, the ethylene copolymer composition of the present disclosure is made by forming a first ethylene copolymer in a first reactor by polymerizing ethylene and an alpha olefin with a single site catalyst; forming a second ethylene copolymer in a second reactor by polymerizing ethylene and an alpha olefin with a single site catalyst, and forming a third ethylene copolymer in a third reactor by polymerizing ethylene and an alpha olefin with a multi-site catalyst.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a single site catalyst.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a multi-site catalyst.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a single site catalyst; where the first, second and third solution phase polymerization reactors are configured in series with one another.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a single site catalyst; where the first, second and third solution phase polymerization reactors are configured in parallel with one another.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by

polymerizing ethylene and an alpha olefin with a single catalyst, and forming a third ethylene copolymer in a third solution phase polymerization reactor by polymerizing ethylene and an alpha olefin with a single site catalyst; where the first and second solution phase reactors are configured in series to one another, and the third solution phase reactor is configured in parallel to the first and second reactors.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a multi-site catalyst; where the first, second and third solution phase polymerization reactors are configured in series with one another.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a multi-site catalyst; where the first, second and third solution phase polymerization reactors are configured in parallel with one another.

In an embodiment, the ethylene copolymer composition of the present disclosure is made by forming a first ethylene copolymer in a first solution phase polymerization reactor by polymerizing ethylene and an alpha olefin with a single site catalyst; forming a second ethylene copolymer in a second solution phase polymerization reactor by polymerizing ethylene and an alpha olefin with a single catalyst, and forming a third ethylene copolymer in a third solution phase polymerization reactor by polymerizing ethylene and an alpha olefin with a multi-site catalyst; where the first and second solution phase reactors are configured in series to one another, and the third solution phase reactor is configured in parallel to the first and second reactors.

In an embodiment, the solution phase polymerization reactor used as a first solution phase reactor, a second solution phase reactor, or a third solution phase reactor is a continuously stirred tank reactor or a tubular reactor.

In an embodiment, the solution phase polymerization reactor used as a first solution phase reactor, a second solution phase reactor, or a third solution phase reactor is a continuously stirred tank reactor.

In an embodiment, the solution phase polymerization reactor used as a first solution phase reactor, a second solution phase reactor, or a third solution phase reactor is a tubular reactor.

In an embodiment, the solution phase polymerization reactor used as a first solution phase reactor and a second solution phase reactor is a continuously stirred tank reactor, and the solution phase polymerization reactor used as a third solution phase reactor is a tubular reactor.

In solution polymerization, the monomers are dissolved/dispersed in the solvent either prior to being fed to the reactor (or for gaseous monomers the monomer may be fed to the reactor so that it will dissolve in the reaction mixture). Prior to mixing, the solvent and monomers are generally purified to remove potential catalyst poisons such as water, oxygen or metal impurities. The feedstock purification follows standard practices in the art, e.g. molecular sieves, alumina beds and oxygen removal catalysts are used for the purification of monomers. The solvent itself as well (e.g. methyl pentane, cyclohexane, hexane or toluene) is preferably treated in a similar manner.

The feedstock may be heated or cooled prior to feeding to the reactor.

Generally, the catalyst components may be premixed in the solvent for the reaction or fed as separate streams to the reactor. In some instances, premixing it may be desirable to provide a reaction time for the catalyst components prior to entering the reaction. Such an "in line mixing" technique is described in a number of patents in the name of DuPont Canada Inc. (e.g. U.S. Pat. No. 5,589,555 issued Dec. 31, 1996).

Solution polymerization processes for the polymerization or copolymerization of ethylene are well known in the art (see for example U.S. Pat. Nos. 6,372,864 and 6,777,509). These processes are conducted in the presence of an inert hydrocarbon solvent. In a solution phase polymerization reactor, a variety of solvents may be used as the process solvent; non-limiting examples include linear, branched or cyclic $C_5$ to $C_{12}$ alkanes. Non-limiting examples of $\alpha$-olefins include 1-propene, 1-butene, 1-pentene, 1-hexene and 1-octene. Suitable catalyst component solvents include aliphatic and aromatic hydrocarbons. Non-limiting examples of aliphatic catalyst component solvents include linear, branched or cyclic $C_{5-12}$ aliphatic hydrocarbons, e.g. pentane, methyl pentane, hexane, heptane, octane, cyclohexane, cyclopentane, methylcyclohexane, hydrogenated naphtha or combinations thereof. Non-limiting examples of aromatic catalyst component solvents include benzene, toluene (methylbenzene), ethylbenzene, o-xylene (1,2-dimethylbenzene), m-xylene (1,3-dimethylbenzene), p-xylene (1,4-dimethylbenzene), mixtures of xylene isomers, hemellitene (1,2,3-trimethylbenzene), pseudocumene (1,2,4-trimethylbenzene), mesitylene (1,3,5-trimethylbenzene), mixtures of trimethylbenzene isomers, prehenitene (1,2,3,4-tetramethylbenzene), durene (1,2,3,5-tetramethylbenzene), mixtures of tetramethylbenzene isomers, pentamethylbenzene, hexamethylbenzene and combinations thereof.

The polymerization temperature in a conventional solution process may be from about 80°C to about 300°C. In an embodiment of the disclosure the polymerization temperature in a solution process is from about 120°C to about 250°C.

The polymerization pressure in a solution process may be a "medium pressure process", meaning that the pressure in the reactor is less than about 6,000 psi (about 42,000 kiloPascals or kPa). In an embodiment of the disclosure, the polymerization pressure in a solution process may be from about 10,000 to about 40,000 kPa, or from about 14,000 to about 22,000 kPa (i.e. from about 2,000 psi to about 3,000 psi).

Suitable monomers for copolymerization with ethylene include $C_{3-20}$ mono- and di-olefins. Preferred comonomers include $C_{3-12}$ alpha olefins which are unsubstituted or substituted by up to two $C_{1-6}$ alkyl radicals, $C_{8-12}$ vinyl aromatic monomers which are unsubstituted or substituted by up to two substituents selected from the group consisting of $C_{1-4}$ alkyl radicals, $C_{4-12}$ straight chained or cyclic diolefins which are unsubstituted or substituted by a $C_{1-4}$ alkyl radical. Illustrative non-limiting examples of such alpha-olefins are one or more of propylene, 1-butene, 1-pentene, 1-hexene, 1-octene and 1-decene, styrene, alpha methyl styrene, and the constrained-ring cyclic olefins such as cyclobutene, cyclopentene, dicyclopentadiene norbornene, alkyl-substituted norbornenes, alkenyl-substituted norbornenes and the like (e.g. 5-methylene-2-norbornene and 5-ethylidene-2-norbornene, bicyclo-(2,2,1)-hepta-2,5-diene).

In an embodiment of the disclosure, the ethylene copolymer composition has at least 1 mole percent of one or more than one alpha olefin.

In an embodiment of the disclosure, the ethylene copolymer composition has at least 3 mole percent of one or more than one alpha olefin.

In an embodiment of the disclosure, the ethylene copolymer composition has from about 3 to about 12 mole percent of one or more than one alpha-olefin.

In an embodiment of the disclosure, the ethylene copolymer composition has from about 3 to about 10 mole percent of one or more than one alpha-olefin.

In an embodiment of the disclosure, the ethylene copolymer composition has from about 3.5 to about 10 mole percent of one or more than one alpha olefin.

In an embodiment of the disclosure, the ethylene copolymer composition comprises ethylene and one or more than one alpha olefin selected from the group comprising 1-butene, 1-hexene, 1-octene and mixtures thereof.

In an embodiment of the disclosure, the ethylene copolymer composition comprises ethylene and one or more than one alpha olefin selected from the group comprising 1-hexene, 1-octene and mixtures thereof.

In an embodiment of the disclosure, the ethylene copolymer composition comprises ethylene and 1-octene.

In an embodiment of the disclosure, the ethylene copolymer composition comprises ethylene and at least 1 mole percent 1-octene.

In an embodiment of the disclosure, the ethylene copolymer composition comprises ethylene and at least 3 mole percent 1-octene.

In an embodiment of the disclosure, the ethylene copolymer composition comprises ethylene and from 3 to 12 mole percent of 1-octene.

In an embodiment of the disclosure, the ethylene copolymer composition comprises ethylene and from 3 to 10 mole percent of 1-octene.

In an embodiment of the disclosure, the ethylene copolymer composition of the present disclosure has a density of from 0.860 g/cm$^3$ to 0.912 g/cm$^3$. In an embodiment of the disclosure, the ethylene copolymer composition of the present disclosure has a density of below 0.912 g/cm$^3$. In an embodiment of the disclosure, the ethylene copolymer composition of the present disclosure has a density of from 0.860 g/cm$^3$ to 0.910 g/cm$^3$. In another embodiment of the disclosure, the ethylene copolymer composition of the present disclosure has a density of below 0.910 g/cm$^3$. In another embodiment of the disclosure, the ethylene copolymer composition of the present disclosure has a density of from 0.860 g/cm$^3$ to below 0.910 g/cm$^3$.

In an embodiment of the disclosure, the ethylene copolymer composition of the present disclosure has a density of from 0.870 g/cm$^3$ to 0.912 g/cm$^3$, or from 0.880 g/cm$^3$ to 0.912 g/cm$^3$, or from 0.890 g/cm$^3$ to 0.912 g/cm$^3$, or from 0.870 g/cm$^3$ to 0.910 g/cm$^3$, or from 0.880 g/cm$^3$ to 0.910 g/cm$^3$, or from 0.890 g/cm$^3$ to 0.910 g/cm$^3$, or from 0.860 g/cm$^3$ to 0.908 g/cm$^3$, or from 0.870 g/cm$^3$ to 0.908 g/cm$^3$, or from 0.880 g/cm$^3$ to 0.908 g/cm$^3$, or from 0.890 g/cm$^3$ to 0.908 g/cm$^3$, or from 0.860 g/cm$^3$ to 0.906 g/cm$^3$, or from 0.870 g/cm$^3$ to 0.906 g/cm$^3$, or from 0.880 g/cm$^3$ to 0.906 g/cm$^3$, or from 0.890 g/cm$^3$ to 0.906 g/cm$^3$, or from 0.901 g/cm$^3$ to 0.912 g/cm$^3$, or from 0.901 g/cm$^3$ to 0.910 g/cm$^3$, or from 0.901 g/cm$^3$ to 0.908 g/cm$^3$, or from 0.901 g/cm$^3$ to 0.906 g/cm$^3$, or from 0.901 g/cm$^3$ to below 912 g/cm$^3$, or from 0.901 g/cm$^3$ to below 0.910 g/cm$^3$.

In embodiments of the disclosure the melt index, $I_2$ of the ethylene copolymer composition may be from about 0.01 g/10min to about 100 g/10min, or from about 0.01 g/10min to about 50 g/10min, or from about 0.01 g/10min to about 25 g/10min, or from about 0.01 g/10min to about 10 g/10min, or from about 0.01 g/10min to about 5 g/10min, or from about 0.01 g/10min to about 3 g/10min, or from about 0.01 g/10min to about 1 g/10min, or from about 0.1 g/10min to about 10 g/10min, or from about 0.1 g/10min to about 5 g/10min, or from about 0.1 g/10min to about 3 g/10min, or from about 0.1 g/10min to about 2 g/10min, or from about 0.1 g/10min to about 1.5 g/10min, or from about 0.1 g/10min to about 1 g/10min, or from about 0.5 g/10min to about 100 g/10min, or from about 0.5 g/10min to about 50 g/10min, or from about 0.5 g/10min to about 25 g/10min, or from about 0.5 g/10min to about 10 g/10min, or from about 0.5 g/10min to about 5 g/10min, or less than about 5 g/10min, or less than about 3 g/10min, or less than about 1.0 g/10min.

In embodiments of the disclosure the high load melt index, $I_{21}$ of the ethylene copolymer composition may be from about 10 dg/min to about 10,000 dg/min, or from about 10 dg/min to about 1000 dg/min, or from about 10 dg/min to about 500 dg/min, or from about 10 dg/min to about 250 dg/min, or from about 10 dg/min to about 150 dg/min, or from about 10 dg/min to about 100 dg/min.

In embodiments of the disclosure the melt flow ratio $I_{21}/I_2$ of the ethylene copolymer composition may be from about 15 to about 1,000, or from about 15 to about 100, or from about 15 to about 75, or from about 15 to about 60, or from about 15 to about 50, or from about 18 to about 60, or from about 20 to about 75, or from about 20 to about 60, or from about 20 to about 55, or from about 25 to about 75, or from about 25 to about 60, or from about 25 to about 55.

In embodiments of the disclosure, the ethylene copolymer composition has a weight average molecular weight, $M_w$ of from about 20,000 to about 300,000 g/mol, or from about 30,000 to about 300,000 g/mol, or from about 40,000 to about 300,000 g/mol, or from about 40,000 to about 250,000 g/mol, or from about 50,000 to about 250,000 g/mol, or from about 50,000 to about 225,000 g/mol, or from about 50,000 to about 200,000 g/mol, or from about 50,000 to about 175,000 g/mol, or from about 50,000 to about 150,000 g/mol, or from about 50,000 to about 125,000 g/mol.

In embodiments of the disclosure, the ethylene copolymer composition has a lower limit molecular weight distribution, $M_w/M_n$ of 1.8, or 2.0, or 2.1, or 2.2, or 2.3. In embodiments of the disclosure, the polyethylene composition has an upper limit molecular weight distribution, $M_w/M_n$ of 6.0, or 5.5, or 5.0, or 4.5, or 4.0, or 3.75, or 3.5, or 3.0, or 2.5.

In embodiments of the disclosure, the ethylene copolymer composition has a molecular weight distribution, $M_w/M_n$ of from 1.8 to 6.0, or from 1.8 to 5.5, or from 1.8 to 5.0, or from 1.8 to 4.5, or from 1.8 to 4.0, or from 1.8 to 3.5, or from 1.8 to 3.0, or from 1.9 to 5.5, or from 1.9 to 5.0, or from 1.9 to 4.5, or from 1.9 to 4.0, or from 1.9 to 3.5, or from 1.9 to 3.0.

In embodiments of the disclosure, the ethylene copolymer composition has a Z-average molecular weight distribution, $M_zM_w$ of $\leq$ 4.0, or < 4.0, or $\leq$ 3.5, or < 3.5, or $\leq$ 3.0, or <3.0, or $\leq$ 2.75, or <2.75, or $\leq$ 2.50, or < 2.50, or $\leq$ 2.25, or < 2.25, or $\leq$ 2.00, or < 2.00. In embodiments of the disclosure, the polyethylene composition has a Z-average molecular weight distribution, $M_zM_w$ of from 1.5 to 4.0, or from 1.5 to 3.5, or from 1.5 to 3.0, or from 1.5 to 2.5, or from 1.7 to 3.5, or from 1.7 to 3.0, or from 1.7 to 2.5.

In an embodiment of the disclosure, the ethylene copolymer composition has a unimodal profile in a gel permeation chromatograph generated according to the method of ASTM D6474-99. The term "unimodal" is herein defined to mean there will be only one significant peak or maximum evident in the GPC-curve. A unimodal profile includes a broad unimodal profile. In contrast, the use of the term "bimodal" is meant to convey that in addition to a first peak, there will be a secondary peak or shoulder which represents a higher or lower molecular weight component (i.e. the molecular weight distribution, can be said to have two maxima in a molecular weight distribution curve). Alternatively, the term "bimodal" connotes the presence of two maxima in a molecular weight distribution curve generated according to the method of ASTM D6474-99. The term "multi-modal" denotes the presence of two or more, typically more than two, maxima in a molecular weight distribution curve generated according to the method of ASTM D6474-99.

In an embodiment of the disclosure, the ethylene copolymer composition will have a reverse or partially reverse comonomer distribution profile as measured using GPC-FTIR. If the comonomer incorporation decreases with molecular weight, as measured using GPC-FTIR, the distribution is described as "normal". If the comonomer incorporation is approximately constant with molecular weight, as measured using GPC-FTIR, the comonomer distribution is described as "flat" or "uniform". The terms "reverse comonomer distribution" and "partially reverse comonomer distribution" mean that in the GPC-FTIR data obtained for a copolymer, there is one or more higher molecular weight components having a higher comonomer incorporation than in one or more lower molecular weight components. The term "reverse(d) comonomer distribution" is used herein to mean, that across the molecular weight range of an ethylene copolymer, comonomer contents for the various polymer fractions are not substantially uniform and the higher molecular weight fractions thereof have proportionally higher comonomer contents (i.e. if the comonomer incorporation rises with molecular weight, the distribution is described as "reverse" or "reversed"). Where the comonomer incorporation rises with increasing molecular weight and then declines, the comonomer distribution is still considered "reverse", but may also be described as "partially reverse". A partially reverse comonomer distribution will exhibit a peak or maximum.

In an embodiment of the disclosure the ethylene copolymer composition has a reversed comonomer distribution profile as measured using GPC-FTIR.

In an embodiment of the disclosure the ethylene copolymer composition has a partially reversed comonomer distribution profile as measured using GPC-FTIR.

In embodiments of the disclosure, the ethylene copolymer composition has a $CDBI_{50}$ of greater than 70 weight%, or greater than 75 weight%, or greater than 80 weight%, or greater than 85 wt%, or greater than 90 wt%.

In embodiments of the disclosure, the ethylene copolymer composition has a $CDBI_{50}$ of from about 60 to 99 wt%, or from about 70 to about 99 wt%, or from about 80 to about 99 wt%, or from about 85 to about 99 wt%, or from about 90 to about 99 wt%.

In embodiments of the disclosure, the upper limit on the parts per million (ppm) of hafnium in the ethylene copolymer composition may be about 3.0 ppm, or about 2.5 ppm, or about 2.0 ppm, or about 1.5 ppm, or about 1.0 ppm, or about 0.75 ppm, or about 0.5 ppm. In embodiments of the disclosure, the lower limit on the parts per million (ppm) of

hafnium in the ethylene copolymer composition may be about 0.0015 ppm, or about 0.0050 ppm, or about 0.0075 ppm, or about 0.010 ppm, or about 0.015 ppm, or about 0.030 ppm, or about 0.050 ppm, or about 0.075 ppm, or about 0.100 ppm, or about 0.150 ppm, or about 0.175 ppm, or about 0.200 ppm.

In embodiments of the disclosure, the ethylene copolymer composition has from 0.0015 to 2.5 ppm of hafnium, or from 0.0050 to 2.5 ppm of hafnium, or from 0.0075 to 2.5 ppm of hafnium, or from 0.010 to 2.5 ppm of hafnium, or from 0.015 to 2.5 ppm of hafnium, or from 0.050 to 3.5 ppm of hafnium, or from 0.050 to 3.0 ppm of hafnium, or from 0.050 to 2.5 ppm, or from 0.075 to 2.5 ppm of hafnium, or from 0.075 to 2.0 ppm of hafnium, or from 0.075 to 1.5 ppm of hafnium, or from 0.075 to 1.0 ppm of hafnium, or from 0.075 to 0.5 ppm of hafnium, or from 0.100 to 2.0 ppm of hafnium, or from 0.100 to 1.5 ppm of hafnium, or from 0.100 to 1.0 ppm of hafnium, or from 0.200 to 1.5 ppm of hafnium, or from 0.300 to 1.5 ppm of hafnium, or from 0.100 to 0.75 ppm of hafnium, or from 0.10 to 0.5 ppm of hafnium, or from 0.15 to 0.5 ppm of hafnium, or from 0.20 to 0.5 ppm of hafnium.

In embodiments of the disclosure, the ethylene copolymer composition has at least 0.0015 ppm of hafnium, or at least 0.005 ppm of hafnium, or at least 0.0075 ppm of hafnium, or at least 0.015 ppm of hafnium, or at least 0.030 ppm of hafnium, or at least 0.050 ppm of hafnium, or at least 0.075 ppm of hafnium, or at least 0.100 ppm of hafnium, or at least 0.125 ppm of hafnium, or at least 0.150 ppm of hafnium, or at least 0.175 ppm of hafnium, or at least 0.200 ppm of hafnium.

In an embodiment of the disclosure, the ethylene copolymer composition has a stress exponent, defined as $Log_{10}[I_o/I_2]/Log_{10}[6.48/2.16]$, which is at least 1.30, or at least 1.35.

In further embodiments of the disclosure the ethylene copolymer composition has a stress exponent, $Log_{10}[I_6/I_2]/Log_{10}[6.48/2.16]$ from 1.35 to 1.70, or from 1.38 to 1.70, or from 1.40 to 1.70, or from 1.38 to 1.65, or from 1.40 to 1.65, or from 1.38 to 1.60, or from 1.40 to 1.60.

In an embodiment of the disclosure, the ethylene copolymer composition has a dimensionless long chain branching factor, LCBF of ≥ 0.001.

In an embodiment, the ethylene copolymer composition has a crystallization rate constant, $1/t_{1/2,0}$ of > 5 $s^{-1}$.

<u>The Linear Low Density Polyethylene, LLDPE</u>

A linear low density polyethylene (LLDPE) will in embodiments of the disclosure comprise not less than 60 weight%, or not less than 75 weight% of ethylene with the balance being one or more than one alpha olefins, selected from the group consisting of 1-butene, 1-hexene and 1-octene.

The linear low density polyethylene employed in some embodiments of the present disclosure will have a density from about 0.910 to 0.940 g/cm$^3$, or from about 0.910 to about 0.935 g/cm$^3$.

In embodiments of the disclosure, the linear low density polyethylene has a density ranging from a low of about 0.910 g/cm$^3$, or about 0.912 g/cm$^3$, or about 0.915 g/cm$^3$, or about 0.916 g/cm$^3$, or about 0.917 g/cm$^3$ to a high of about 0.927 g/cm$^3$, or about 0.930 g/cm$^3$, or about 0.935 g/cm$^3$, or about 0.940 g/cm$^3$. In embodiments of the disclosure, the linear low density polyethylene will have a density of from 0.912 g/cm$^3$ to 0.940 g/cm$^3$, or from 0.915 g/cm$^3$ to 0.935 g/cm$^3$, or from 0.915 to 0.930 g/cm$^3$, or from 0.916 to 0.930 g/cm$^3$, or from 0.915 to 0.925 g/cm$^3$, or from 0.916 to 0.924 g/cm$^3$, or from 0.917 to 0.923 g/cm$^3$, or from 0.918 to about 0.922 g/cm$^3$.

In an embodiment of the disclosure, the linear low density polyethylene will have a molecular weight distribution (Mw/Mn) of from about 1.5 to about 6.0. In embodiments of the disclosure, the linear low density polyethylene will have a molecular weight distribution (Mw/Mn) ranging from a low of about 1.5, or about 1.7, or about 2.0, or about 2.5, or about 3.0, or about 3.5, or about 3.7, or about 4.0 to a high of about 5, or about 5.25, or about 5.5, or about 6.0. In embodiments of the disclosure, the linear low density polyethylene will have a molecular weight distribution (Mw/Mn) of from 1.7 to 5.0, or from 1.5 to 4.0, or from 1.8 to 3.5, or from 2.0 to 3.0. Alternatively, in embodiments of the disclosure, the linear low density polyethylene will have a molecular weight distribution (Mw/Mn) of from 3.6 to 5.4, or from 3.8 to 5.1, or from 3.9 to 4.9.

In an embodiment of the disclosure, the linear low density polyethylene will have a melt index ($I_2$) of from 0.1 g/10min to 20 g/10min. In embodiments of the disclosure, the linear low density polyethylene will have a melt index ($I_2$) ranging from 0.75 g/10min to 15 g/10 min, or from 0.85 g/10min to 10 g/10 min, or from 0.9 g/10 min to 8 g/10 min. In embodiments of the disclosure, the linear low density polyethylene will have a melt index ($I_2$) ranging from a low of about 0.20 g/10min, or 0.25 g/10min, or about 0.5 g/10 min, or about 0.75 g/10 min, or about 1 g/10 min, or about 2 g/10 min to a high of about 3 g/10 min, or about 4 g/10 min, or about 5 g/10 min.

In embodiments of the disclosure, the linear low density polyethylene will have a melt index ($I_2$) of from about 0.75 g/10 min to about 6 g/10 min, or from about 1 g/10 min to about 8 g/10 min, or from about 0.8 g/10 min to about 6 g/10 min, or from about 1 g/10 min to about 4.5 g/10 min, or from 0.20 g/10min to 5.0 g/10 min, or from 0.30 g/10min to 5.0 g/10 min, or from 0.40 g/10min to 5.0 g/10 min, or from 0.50 g/10min to 5.0 g/10 min.

In embodiments of the disclosure, the linear low density polyethylene will have a melt flow ratio ($I_{21}/I_2$) of less than about 120, or less than about 100, or less than about 60, or less than about 50, or less than about 36, or less than 35, or less than 32, or less than 30.

In embodiments of the disclosure, the linear low density polyethylene will have a melt flow ratio ($I_{21}/I_2$) of from 10

to 50, or from 15 to 50, or from 16 to 40, or from10 to 36, or from 10 to 35, or from 10 to 32, or from 10 to 30, or from 12 to 35 or from 12 to 32, or from 12 to 30, or from 14 to 27, or from 14 to 25, or from 14 to 22, or from 15 to 20.

In embodiments of the disclosure, the linear low density polyethylene have a $CBDI_{50}$ of ≥ 50 weight percent or a $CBDI_{50}$ of ≤ 50 weight percent as determined by TREF analysis.

In embodiments of the disclosure, the linear low density polyethylene will have a composition distribution breadth index $CDBI_{50}$, as determined by temperature elution fractionation (TREF), of from 25% to 95% by weight, or from 35 to 90% by weight, or from 40% to 85% by weight, or from 40% to 80% by weight.

Articles of Manufacture

The ethylene copolymer compositions disclosed herein or polymer blends thereof may be converted into flexible manufactured articles such as monolayer or multilayer films. Non-limiting examples of processes to prepare such films include blown film processes, double bubble processes, triple bubble processes, cast film processes, tenter frame processes and machine direction orientation (MDO) processes.

In the blown film extrusion process an extruder heats, melts, mixes and conveys a thermoplastic, or a thermoplastic blend. Once molten, the thermoplastic is forced through an annular die to produce a thermoplastic tube. In the case of coextrusion, multiple extruders are employed to produce a multilayer thermoplastic tube. The temperature of the extrusion process is primarily determined by the thermoplastic or thermoplastic blend being processed, for example the melting temperature or glass transition temperature of the thermoplastic and the desired viscosity of the melt. In the case of polyolefins, typical extrusion temperatures are from 330°F to 550°F (166°C to 288°C). Upon exit from the annular die, the thermoplastic tube is inflated with air, cooled, solidified and pulled through a pair of nip rollers. Due to air inflation, the tube increases in diameter forming a bubble of desired size. Due to the pulling action of the nip rollers the bubble is stretched in the machine direction. Thus, the bubble is stretched in two directions: the transverse direction (TD) where the inflating air increases the diameter of the bubble; and the machine direction (MD) where the nip rollers stretch the bubble. As a result, the physical properties of blown films are typically anisotropic, i.e. the physical properties differ in the MD and TD directions; for example, film tear strength and tensile properties typically differ in the MD and TD. In some prior art documents, the terms "cross direction" or "CD" is used; these terms are equivalent to the terms "transverse direction" or "TD" used in this disclosure. In the blown film process, air is also blown on the external bubble circumference to cool the thermoplastic as it exits the annular die. The final width of the film is determined by controlling the inflating air or the internal bubble pressure; in other words, increasing or decreasing bubble diameter. Film thickness is controlled primarily by increasing or decreasing the speed of the nip rollers to control the draw-down rate. After exiting the nip rollers, the bubble or tube is collapsed and may be slit in the machine direction thus creating sheeting. Each sheet may be wound into a roll of film. Each roll may be further slit to create film of the desired width. Each roll of film may be further processed into a variety of consumer products.

The cast film process is similar in that a single or multiple extruder(s) may be used, however the various thermoplastic materials are metered into a flat die and extruded into a monolayer or multilayer sheet, rather than a tube. In the cast film process the extruded sheet is solidified on a chill roll.

In the double bubble process a first blown film bubble is formed and cooled, then the first bubble is heated and re-inflated forming a second blown film bubble, which is subsequently cooled. The ethylene copolymer compositions (or blends thereof), disclosed herein, are also suitable for the triple bubble blown process. Additional film converting processes, suitable for the disclosed ethylene copolymer compositions (or blends thereof), include processes that involve a Machine Direction Orientation (MDO) step; for example, blowing a film or casting a film, quenching the film and then subjecting the film tube or film sheet to a MDO process at any stretch ratio. Additionally, the ethylene copolymer composition (or blends thereof) films disclosed herein may be suitable for use in tenter frame processes as well as other processes that introduce biaxial orientation.

Depending on the end-use application, the disclosed ethylene copolymer compositions (or polymer blends thereof) may be converted into films that span a wide range of thicknesses. Non-limiting examples include food packaging films where thicknesses may range from 0.5 mil (13 μm) to 4 mil (102 μm); and in heavy duty sack applications film thickness may range from 2 mil (51μm) to 10 mil (254 μm).

The monolayer, in monolayer films, may contain more than one ethylene copolymer composition and/or one or more additional polymer; non-limiting examples of additional polymers include ethylene polymers and propylene polymers. The lower limit on the weight percent of the ethylene copolymer composition in a monolayer film may be 3 wt%, in other cases 10 wt% and in still other cases 30 wt%. The upper limit on the weight percent of the ethylene copolymer composition in the monolayer film may be 100 wt%, in other cases 90 wt% and in still other cases 70 wt%.

The ethylene copolymer composition disclosed herein (or polymer blends thereof) may also be used in one or more layers of a multilayer film; non-limiting examples of multilayer films include three, five, seven, nine, eleven or more layers. The disclosed ethylene copolymer compositions (or polymer blends thereof) may also be suitable for use in processes that employ micro-layering dies and/or feedblocks, such processes can produce films having many layers, non-limiting examples include from 10 to 10,000 layers.

The thickness of a specific layer (containing the ethylene copolymer composition or a polymer blend thereof) within a multilayer film may be 5%, in other cases 15% and in still other cases 30% of the total multilayer film thickness. In other embodiments, the thickness of a specific layer (containing the ethylene copolymer composition or a polymer blend thereof) within a multilayer film may be 95%, in other cases 80% and in still other cases 65% of the total multilayer film thickness. Each individual layer of a multilayer film may contain more than one ethylene copolymer composition and/or additional thermoplastics and blends thereof.

A film layer in a multilayer film structure may contain more than one ethylene copolymer composition and/or one or more additional polymer; non-limiting examples of additional polymers include ethylene polymers and propylene polymers. The lower limit on the weight percent of the ethylene copolymer composition in a film layer of a multilayer film structure may be 3 wt%, in other cases 10 wt% and in still other cases 30 wt%. The upper limit on the weight percent of the ethylene copolymer composition in a film layer of a multilayer film structure may be 100 wt%, in other cases 90 wt% and in still other cases 70 wt%.

Additional embodiments include laminations and coatings, wherein mono or multilayer films containing the disclosed ethylene copolymer compositions (or polymer blends thereof) are extrusion laminated or adhesively laminated or extrusion coated. In extrusion lamination or adhesive lamination, two or more substrates are bonded together with a thermoplastic or an adhesive, respectively. In extrusion coating, a thermoplastic is applied to the surface of a substrate. These processes are well known to those experienced in the art. Frequently, adhesive lamination or extrusion lamination are used to bond dissimilar materials, non-limiting examples include the bonding of a paper web to a thermoplastic web, or the bonding of an aluminum foil containing web to a thermoplastic web, or the bonding of two thermoplastic webs that are chemically incompatible, e.g. the bonding of an ethylene interpolymer product containing web to a polyester or polyamide web. Prior to lamination, the web containing the disclosed ethylene copolymer composition (or polymer blends thereof) may be monolayer or multilayer. Prior to lamination the individual webs may be surface treated to improve the bonding, a non-limiting example of a surface treatment is corona treating. A primary web or film may be laminated on its upper surface, its lower surface, or both its upper and lower surfaces with a secondary web. A secondary web and a tertiary web could be laminated to the primary web; wherein the secondary and tertiary webs differ in chemical composition. As non-limiting examples, secondary or tertiary webs may include polyamide, polyester and polypropylene, or webs containing barrier resin layers such as EVOH. Such webs may also contain a vapor deposited barrier layer; for example a thin silicon oxide ($SiO_x$) or aluminum oxide ($AlO_x$) layer. Multilayer webs (or films) may contain three, five, seven, nine, eleven or more layers.

The ethylene copolymer compositions disclosed herein (or polymer blends thereof) can be used in a wide range of manufactured articles comprising one or more films (monolayer or multilayer film structures). Non-limiting examples of such manufactured articles include: food packaging films (fresh and frozen foods, liquids and granular foods), stand-up pouches, retortable packaging and bag-in-box packaging; barrier films (oxygen, moisture, aroma, oil, etc.) and modified atmosphere packaging; light and heavy duty shrink films and wraps, collation shrink film, pallet shrink film, shrink bags, shrink bundling and shrink shrouds; light and heavy duty stretch films, hand stretch wrap, machine stretch wrap and stretch hood films; high clarity films; heavy-duty sacks; household wrap, overwrap films and sandwich bags; industrial and institutional films, trash bags, can liners, magazine overwrap, newspaper bags, mail bags, sacks and envelopes, bubble wrap, carpet film, furniture bags, garment bags, coin bags, auto panel films; medical applications such as gowns, draping and surgical garb; construction films and sheeting, asphalt films, insulation bags, masking film, landscaping film and bags; geomembrane liners for municipal waste disposal and mining applications; batch inclusion bags; agricultural films, mulch film and green house films; in-store packaging, self-service bags, boutique bags, grocery bags, carry-out sacks and t-shirt bags; oriented films, machine direction oriented (MDO) films, biaxially oriented films and functional film layers in oriented polypropylene (OPP) films, e.g. sealant and/or toughness layers. Additional manufactured articles comprising one or more films containing at least one ethylene copolymer composition (or a polymer blend thereof) include laminates and/or multilayer films; sealants and tie layers in multilayer films and composites; laminations with paper; aluminum foil laminates or laminates containing vacuum deposited aluminum; polyamide laminates; polyester laminates; extrusion coated laminates; and hot-melt adhesive formulations. The manufactured articles summarized in this paragraph contain at least one film (monolayer or multilayer) comprising at least one embodiment of the disclosed ethylene copolymer compositions (or polymer blends thereof). Alternatively, the manufactured articles summarized in this paragraph contain a blend of at least one of the ethylene copolymer compositions disclosed herein with at least one other thermoplastic.

Desired film physical properties (monolayer or multilayer) typically depend on the application of interest. Non-limiting examples of desirable film properties include optical properties (gloss, haze and clarity), dart impact, Elmendorf tear, modulus (1% and 2% secant modulus), tensile properties (yield strength, break strength, elongation at break, toughness, etc.), heat sealing properties (heat seal initiation temperature, SIT, and hot tack). Specific hot tack and heat sealing properties are desired in high speed vertical and horizontal form-fill-seal processes that load and seal a commercial product (liquid, solid, paste, part, etc.) inside a pouch-like package.

In addition to desired film physical properties, it is desired that the disclosed ethylene copolymer compositions (or

polymer blends thereof) are easy to process on film lines. Those skilled in the art frequently use the term "processability" to differentiate polymers with improved processability, relative to polymers with inferior processability. A commonly used measure to quantify processability is extrusion pressure; more specifically, a polymer with improved processability has a lower extrusion pressure (on a blown film or a cast film extrusion line) relative to a polymer with inferior processability. Alternatively, for the present ethylene copolymer compositions, it is desirable that they have good crystallization kinetics. For their use in films for form fill seal (e.g. VFFS and HFFS) packaging applications, it is especially desirable if the ethylene copolymer compositions used in the films have high rates of crystallization, for enhanced rates of processability and packaging on the associated VFFS equipment. Slow crystallization speeds may slow down the packaging speed and can cause failure of a sealant layer in VFFS packaging as the sealant material may still be in the molten state when goods are added to the packaging and as such may not have sufficient seal strength to withstand the bearing forces of the goods being added to the package. This problem may be even more acute in packaging made from all polyethylene film structures since, the polyethylene sealant layer, typically takes longer to cool that a non-polyethylene sealant layer.

The films used in the manufactured articles described in this section may optionally include, depending on its intended use, additives and adjuvants. Non-limiting examples of additives and adjuvants include, anti-blocking agents, antioxidants, heat stabilizers, slip agents, processing aids, anti-static additives, colorants, dyes, filler materials, light stabilizers, light absorbers, lubricants, pigments, plasticizers, nucleating agents and combinations thereof.

In an embodiment of the disclosure, a film or film layer comprises the ethylene copolymer composition described herein.

In an embodiment of the disclosure, a film or film layer comprises a blend of the ethylene copolymer composition described herein with at least one other thermoplastic.

In an embodiment of the disclosure, a film or film layer comprises a polymer blend comprising (a) the ethylene copolymer composition described herein and (b) a linear low density polyethylene.

In an embodiment of the disclosure, a film or film layer is a monolayer film and comprises the ethylene copolymer composition described herein.

In an embodiment of the disclosure, a film or film layer is a monolayer film and comprises a blend of the ethylene copolymer composition described herein with at least one other thermoplastic.

In an embodiment of the disclosure, a film or film layer is a monolayer film and comprises a polymer blend comprising (a) the ethylene copolymer composition described herein and (b) a linear low density polyethylene.

In an embodiment a film or film layer is a blown film.

In an embodiment a film or film layer is a cast film.

In embodiments of the disclosure, a film or film layer comprises the ethylene copolymer composition described herein and has a thickness of from 0.5 to 10 mil.

In embodiments of the disclosure, a film or film layer comprises a blend of the ethylene copolymer composition described herein with at least one other thermoplastic and has a thickness of from 0.5 to 10 mil.

In embodiments of the disclosure, a film or film layer comprises a polymer blend comprising (a) the ethylene copolymer composition described herein and (b) a linear low density polyethylene and has a thickness of from 0.5 to 10 mil.

In embodiments of the disclosure, a film or film layer has a thickness of from 0.5 to 10 mil.

In embodiments of the disclosure, a multilayer film structure has a thickness of from 0.5 to 10 mil.

In an embodiment of the disclosure, a multilayer film structure comprises at least one layer comprising the ethylene copolymer composition described herein, and the multilayer film structure has a thickness of from 0.5 to 10 mil.

In an embodiment of the disclosure, a multilayer film structure comprises at least one layer comprising a blend of the ethylene copolymer composition described herein with a least one other thermoplastic, and the multilayer film structure has a thickness of from 0.5 to 10 mil.

In an embodiment of the disclosure, a multilayer film structure comprises at least one layer comprising a polymer blend comprising: (a) the ethylene copolymer composition described herein and (b) a linear low density polyethylene, and the multilayer film structure has a thickness of from 0.5 to 10 mil.

An embodiment of the disclosure is a multilayer coextruded blown film structure.

An embodiment of the disclosure is a multilayer coextruded blown film structure having a thickness of from 0.5 to 10 mil.

An embodiment of the disclosure is a multilayer coextruded blown film structure comprising a film layer comprising the ethylene copolymer composition described herein.

An embodiment of the disclosure is a multilayer coextruded blown film structure comprising a film layer comprising a blend of the ethylene copolymer composition described herein with at least one other thermoplastic.

An embodiment of the disclosure is a multilayer coextruded blown film structure comprising a film layer comprising a polymer blend comprising: (a) the ethylene copolymer composition described herein and (b) a linear low density polyethylene.

An embodiment of the disclosure is a multilayer coextruded blown film structure comprising a film layer comprising the ethylene copolymer composition described herein, and the multilayer film structure has a thickness of

from 0.5 to 10 mil.

An embodiment of the disclosure is a multilayer coextruded blown film structure comprising a film layer comprising a blend of the ethylene copolymer composition described herein with at least one other thermoplastic, and the multilayer film structure has a thickness of from 0.5 to 10 mil.

An embodiment of the disclosure is a multilayer coextruded blown film structure comprising a film layer comprising a polymer blend comprising: (a) the ethylene copolymer composition described herein and (b) a linear low density polyethylene, and the multilayer film structure has a thickness of from 0.5 to 10 mil.

An embodiment of the disclosure is a multilayer coextruded cast film structure.

An embodiment of the disclosure is a multilayer coextruded cast film structure having a thickness of from 0.5 to 10 mil.

An embodiment of the disclosure is a multilayer coextruded cast film structure comprising a film layer comprising the ethylene copolymer composition described herein.

An embodiment of the disclosure is a multilayer coextruded cast film structure comprising a film layer comprising a blend of the ethylene copolymer composition described herein with at least one other thermoplastic.

An embodiment of the disclosure is a multilayer coextruded cast film structure comprising a film layer comprising a polymer blend comprising: (a) the ethylene copolymer composition described herein and (b) a linear low density polyethylene.

An embodiment of the disclosure is a multilayer coextruded cast film structure comprising a film layer comprising the ethylene copolymer composition described herein, and the multilayer film structure has a thickness of from 0.5 to 10 mil.

An embodiment of the disclosure is a multilayer coextruded cast film structure comprising a film layer comprising a blend of the ethylene copolymer composition described herein with at least one other thermoplastic, and the multilayer film structure has a thickness of from 0.5 to 10 mil.

An embodiment of the disclosure is a multilayer coextruded cast film structure comprising a film layer comprising a polymer blend comprising: (a) the ethylene copolymer composition described herein and (b) a linear low density polyethylene, and the multilayer film structure has a thickness of from 0.5 to 10 mil.

An embodiment of the disclosure is a multilayer film structure comprising at least one film layer comprising the ethylene copolymer composition described herein.

An embodiment of the disclosure is a multilayer film structure comprising at least one film layer comprising the ethylene copolymer composition described herein where the multilayer film structure has at least 3 layers, or at least 5 layers, or at least 7 layers, or at least 9 layers.

An embodiment of the disclosure is a multilayer film structure comprising at least one film layer comprising the ethylene copolymer composition described herein where the multilayer film structure has 9 layers.

An embodiment of the disclosure is a multilayer film structure comprising at least one sealant layer comprising the ethylene copolymer composition described herein.

An embodiment of the disclosure is a multilayer film structure comprising a sealant layer comprising the ethylene copolymer composition described herein.

An embodiment of the disclosure is a multilayer film structure comprising a sealant layer comprising the ethylene copolymer composition described herein and where the multilayer film structure has at least 3 layers.

An embodiment of the disclosure is a multilayer film structure comprising a sealant layer comprising the ethylene copolymer composition described herein and where the multilayer film structure has at least 5 layers.

An embodiment of the disclosure is a multilayer film structure comprising a sealant layer comprising the ethylene copolymer composition described herein and where the multilayer film structure has at least 7 layers.

An embodiment of the disclosure is a multilayer film structure comprising a sealant layer comprising the ethylene copolymer composition described herein and where the multilayer film structure has at least 9 layers.

An embodiment of the disclosure is a multilayer film structure comprising a sealant layer comprising the ethylene copolymer composition described herein and where the multilayer film structure has 9 layers.

An embodiment of the disclosure is a multilayer film structure comprising at least one film layer comprising a blend of the ethylene copolymer composition described herein with at least one other thermoplastic.

An embodiment of the disclosure is a multilayer film structure comprising at least one film layer comprising a blend of the ethylene copolymer composition described herein with at least one other thermoplastic where the multilayer film structure has at least 3 layers, or at least 5 layers, or at least 7 layers, or at least 9 layers.

An embodiment of the disclosure is a multilayer film structure comprising at least one film layer comprising a blend of the ethylene copolymer composition described herein with at least one other thermoplastic where the multilayer film structure has 9 layers.

An embodiment of the disclosure is a multilayer film structure comprising at least one sealant layer comprising a blend of the ethylene copolymer composition described herein with at least one other thermoplastic.

An embodiment of the disclosure is a multilayer film structure comprising a sealant layer comprising a blend of the

ethylene copolymer composition described herein with at least one other thermoplastic.

An embodiment of the disclosure is a multilayer film structure comprising a sealant layer comprising a blend of the ethylene copolymer composition described herein with at least one other thermoplastic and where the multilayer film structure has at least 3 layers.

An embodiment of the disclosure is a multilayer film structure comprising a sealant layer comprising a blend of the ethylene copolymer composition described herein with at least one other thermoplastic and where the multilayer film structure has at least 5 layers.

An embodiment of the disclosure is a multilayer film structure comprising a sealant layer comprising a blend of the ethylene copolymer composition described herein with at least one other thermoplastic and where the multilayer film structure has at least 7 layers.

An embodiment of the disclosure is a multilayer film structure comprising a sealant layer comprising a blend of the ethylene copolymer composition described herein with at least one other thermoplastic and where the multilayer film structure has at least 9 layers.

An embodiment of the disclosure is a multilayer film structure comprising a sealant layer comprising a blend of the ethylene copolymer composition described herein with at least one other thermoplastic and where the multilayer film structure has 9 layers.

An embodiment of the disclosure is a multilayer film structure comprising at least one film layer comprising a polymer blend comprising: (a) the ethylene copolymer composition described herein and (b) a linear low density polyethylene.

An embodiment of the disclosure is a multilayer film structure comprising at least one film layer comprising a polymer blend comprising: (a) the ethylene copolymer composition described herein and (b) a linear low density polyethylene, and where the multilayer film structure has at least 3 layers, or at least 5 layers, or at least 7 layers, or at least 9 layers.

An embodiment of the disclosure is a multilayer film structure comprising at least one film layer comprising a polymer blend comprising: (a) the ethylene copolymer composition described herein and (b) a linear low density polyethylene, and where the multilayer film structure has 9 layers.

An embodiment of the disclosure is a multilayer film structure comprising at least one sealant layer comprising a polymer blend comprising: (a) the ethylene copolymer composition described herein and (b) a linear low density polyethylene.

An embodiment of the disclosure is a multilayer film structure comprising a sealant layer comprising a polymer blend comprising (a) the ethylene copolymer composition described herein and (b) a linear low density polyethylene.

An embodiment of the disclosure is a multilayer film structure comprising a sealant layer comprising a polymer blend comprising: (a) the ethylene copolymer composition described herein and (b) a linear low density polyethylene and where the multilayer film structure has at least 3 layers.

An embodiment of the disclosure is a multilayer film structure comprising a sealant layer comprising a polymer blend comprising: (a) the ethylene copolymer composition described herein and (b) a linear low density polyethylene and where the multilayer film structure has at least 5 layers.

An embodiment of the disclosure is a multilayer film structure comprising a sealant layer comprising a polymer blend comprising: (a) the ethylene copolymer composition described herein and (b) a linear low density polyethylene and where the multilayer film structure has at least 7 layers.

An embodiment of the disclosure is a multilayer film structure comprising a sealant layer comprising a polymer blend comprising: (a) the ethylene copolymer composition described herein and (b) a linear low density polyethylene and where the multilayer film structure has at least 9 layers.

An embodiment of the disclosure is a multilayer film structure comprising a sealant layer comprising a polymer blend comprising: (a) the ethylene copolymer composition described herein and (b) a linear low density polyethylene and where the multilayer film structure has 9 layers.

The following examples are presented for the purpose of illustrating selected embodiments of this disclosure; it being understood that the examples presented do not limit the claims presented.

## EXAMPLES

### General Testing Procedures

Prior to testing, each polymer specimen was conditioned for at least 24 hours at 23 ±2°C and 50 ±10% relative humidity and subsequent testing was conducted at 23 ±2°C and 50 ±10% relative humidity. Herein, the term "ASTM conditions" refers to a laboratory that is maintained at 23 ±2°C and 50 ±10% relative humidity; and specimens to be tested were conditioned for at least 24 hours in this laboratory prior to testing. ASTM refers to the American Society for Testing and Materials.

## Density

Ethylene copolymer composition densities were determined using ASTM D792-13 (November 1, 2013).

## Melt Index

Ethylene copolymer composition melt index was determined using ASTM D1238 (August 1, 2013). Melt indexes, $I_2$, $I_6$, $I_{10}$ and $I_{21}$ were measured at 190°C, using weights of 2.16 kg, 6.48 kg, 10 kg and a 21.6 kg respectively. Herein, the term "stress exponent" or its acronym "S.Ex.", is defined by the following relationship: S.Ex.= log ($I_6/I_2$)/log(6480/2160) wherein $I_6$ and $I_2$ are the melt flow rates measured at 190°C using 6.48 kg and 2.16 kg loads, respectively.

## Conventional Size Exclusion Chromatography (SEC)

Ethylene copolymer composition samples (polymer) solutions (1 to 3 mg/mL) were prepared by heating the polymer in 1,2,4-trichlorobenzene (TCB) and rotating on a wheel for 4 hours at 150°C in an oven. An antioxidant (2,6-di-tert-butyl-4-methylphenol (BHT)) was added to the mixture in order to stabilize the polymer against oxidative degradation. The BHT concentration was 250 ppm. Polymer solutions were chromatographed at 140°C on a PL 220 high-temperature chromatography unit equipped with four Shodex columns (HT803, HT804, HT805 and HT806) using TCB as the mobile phase with a flow rate of 1.0 mL/minute, with a differential refractive index (DRI) as the concentration detector. BHT was added to the mobile phase at a concentration of 250 ppm to protect GPC columns from oxidative degradation. The sample injection volume was 200 μL. The GPC columns were calibrated with narrow distribution polystyrene standards. The polystyrene molecular weights were converted to polyethylene molecular weights using the Mark-Houwink equation, as described in the ASTM standard test method D6474-12 (December 2012). The GPC raw data were processed with the CIRRUS GPC software, to produce molar mass averages ($M_n$, $M_w$, $M_z$) and molar mass distribution (e.g. Polydispersity, $M_w/M_n$). In the polyethylene art, a commonly used term that is equivalent to SEC is GPC, i.e. Gel Permeation Chromatography.

## GPC-FTIR

Ethylene copolymer composition (polymer) solutions (2 to 4 mg/mL) were prepared by heating the polymer in 1,2,4-trichlorobenzene (TCB) and rotating on a wheel for 4 hours at 150°C in an oven. The antioxidant 2,6-di-tert-butyl-4-methylphenol (BHT) was added to the mixture in order to stabilize the polymer against oxidative degradation. The BHT concentration was 250 ppm. Sample solutions were chromatographed at 140°C on a Waters GPC 150C chromatography unit equipped with four Shodex columns (HT803, HT804, HT805 and HT806) using TCB as the mobile phase with a flow rate of 1.0 mL/minute, with a FTIR spectrometer and a heated FTIR flow through cell coupled with the chromatography unit through a heated transfer line as the detection system. BHT was added to the mobile phase at a concentration of 250 ppm to protect SEC columns from oxidative degradation. The sample injection volume was 300 μL. The raw FTIR spectra were processed with OPUS FTIR software and the polymer concentration and methyl content were calculated in real time with the Chemometric Software (PLS technique) associated with the OPUS. Then the polymer concentration and methyl content were acquired and baseline-corrected with the CIRRUS GPC software. The SEC columns were calibrated with narrow distribution polystyrene standards. The polystyrene molecular weights were converted to polyethylene molecular weights using the Mark-Houwink equation, as described in the ASTM standard test method D6474. The comonomer content was calculated based on the polymer concentration and methyl content predicted by the PLS technique as described in Paul J. DesLauriers, Polymer 43, pages 159-170 (2002).

The GPC-FTIR method measures total methyl content, which includes the methyl groups located at the ends of each macromolecular chain, i.e. methyl end groups. Thus, the raw GPC-FTIR data must be corrected by subtracting the contribution from methyl end groups. To be more clear, the raw GPC-FTIR data overestimates the amount of short chain branching (SCB) and this overestimation increases as molecular weight (M) decreases. In this disclosure, raw GPC-FTIR data was corrected using the 2-methyl correction. At a given molecular weight (M), the number of methyl end groups ($N_E$) was calculated using the following equation: $N_E$ = 28000/M, and $N_E$ (M dependent) was subtracted from the raw GPC-FTIR data to produce the SCB/1000C (2-Methyl Corrected) GPC-FTIR data.

## CYTSAFITREF (CTREF)

The "Composition Distribution Breadth Index", hereinafter CDBI, of the ethylene copolymer compositions (and Comparative Examples) was measured using a CRYSTAF/TREF 200+ unit equipped with an IR detector, hereinafter the CTREF. The acronym "TREF" refers to Temperature Rising Elution Fractionation. The CTREF was supplied by PolymerChar S.A. (Valencia Technology Park, Gustave Eiffel, 8, Paterna, E-46980 Valencia, Spain). The CTREF was operated

in the TREF mode, which generates the chemical composition of the polymer sample as a function of elution temperature, the Co/Ho ratio (Copolymer/Homopolymer ratio) and the CDBI (the Composition Distribution Breadth Index), i.e. $CDBI_{50}$ and $CDBI_{25}$. A polymer sample (80 to 100 mg) was placed into the reactor vessel of the CTREF. The reactor vessel was filled with 35 ml of 1,2,4-trichlorobenzene (TCB) and the polymer was dissolved by heating the solution to 150°C for 2 hours. An aliquot (1.5 mL) of the solution was then loaded into the CTREF column which was packed with stainless steel beads. The column, loaded with sample, was allowed to stabilize at 110°C for 45 minutes. The polymer was then crystallized from solution, within the column, by dropping the temperature to 30°C at a cooling rate of 0.09°C/minute. The column was then equilibrated for 30 minutes at 30°C. The crystallized polymer was then eluted from the column with TCB flowing through the column at 0.75 mL/minute, while the column was slowly heated from 30°C to 120°C at a heating rate of 0.25°C/minute. The raw CTREF data were processed using Polymer Char software, an Excel spreadsheet and CTREF software developed in-house. $CDBI_{50}$ was defined as the percent of polymer whose composition is within 50% of the median comonomer composition; $CDBI_{50}$ was calculated from the composition distribution cure and the normalized cumulative integral of the composition distribution curve, as described in United States Patent 5,376,439. Those skilled in the art will understand that a calibration curve is required to convert a CTREF elution temperature to comonomer content, i.e. the amount of comonomer in the ethylene/α-olefin polymer fraction that elutes at a specific temperature. The generation of such calibration curves are described in the prior art, e.g. Wild, et al., J. Polym. Sci., Part B, Polym. Phys., Vol. 20 (3), pages 441-455.

$CDBI_{25}$ as calculated in a similar manner; $CDBI_{25}$ is defined as the percent of polymer whose composition is with 25% of the median comonomer composition. At the end of each sample run, the CTREF column was cleaned for 30 minutes; specifically, with the CTREF column temperature at 160°C, TCB flowed (0.5 mL/minute) through the column for 30 minutes.

Neutron Acitvation (Elemental Analysis)

Neutron Activation Analysis, hereinafter N.A.A., was used to determine catalyst metal residues in ethylene copolymer compositions as follows. A radiation vial (composed of ultrapure polyethylene, 7 mL internal volume) was filled with an ethylene copolymer composition sample and the sample weight was recorded. Using a pneumatic transfer system the sample was placed inside a SLOWPOKE™ nuclear reactor (Atomic Energy of Canada Limited, Ottawa, Ontario, Canada) and irradiated for 30 to 600 seconds for short half-life elements (e.g., Ti, V, Al, Mg, and Cl) or 3 to 5 hours for long half-life elements (e.g. Zr, Hf, Cr, Fe and Ni). The average thermal neutron flux within the reactor was $5\times10^{11}/cm^2/s$. After irradiation, samples were withdrawn from the reactor and aged, allowing the radioactivity to decay; short half-life elements were aged for 300 seconds or long half-life elements were aged for several days. After aging, the gamma-ray spectrum of the sample was recorded using a germanium semiconductor gamma-ray detector (Ortec model GEM55185, Advanced Measurement Technology Inc., Oak Ridge, TN, USA) and a multichannel analyzer (Ortec model DSPEC Pro). The amount of each element in the sample was calculated from the gamma-ray spectrum and recorded in parts per million relative to the total weight of the ethylene copolymer composition sample. The N.A.A. system was calibrated with Specpure standards (1000 ppm solutions of the desired element (greater than 99% pure)). One mL of solutions (elements of interest) were pipetted onto a 15 mm × 800 mm rectangular paper filter and air dried. The filter paper was then placed in a 1.4 mL polyethylene irradiation vial and analyzed by the N.A.A. system. Standards are used to determine the sensitivity of the N.A.A. procedure (in counts/μg).

Unsaturation

The quantity of unsaturated groups, i.e. double bonds, in an ethylene copolymer composition was determined according to ASTM D3124-98 (vinylidene unsaturation, published March 2011) and ASTM D6248-98 (vinyl and trans unsaturation, published July 2012). An ethylene copolymer composition sample was: a) first subjected to a carbon disulfide extraction to remove additives that may interfere with the analysis; b) the sample (pellet, film or granular form) was pressed into a plaque of uniform thickness (0.5 mm), and; c) the plaque was analyzed by FTIR.

Comonomer Content: Fourier Transform Infrared (FTIR) Spectroscopy

The quantity of comonomer in an ethylene copolymer composition was determined by FTIR and reported as the Short Chain Branching (SCB) content having dimensions of $CH_3$#/1000C (number of methyl branches per 1000 carbon atoms). This test was completed according to ASTM D6645-01 (2001), employing a compression molded polymer plaque and a Thermo-Nicolet 750 Magna-IR Spectrophotometer. The polymer plaque was prepared using a compression molding device (Wabash-Genesis Series press) according to ASTM D4703-16 (April 2016).

$^{13}C$ Nuclear Magnetic Resonance (NMR)

Between 0.21 and 0.30 g of polymer sample was weighed into 10 mm NMR tubes. The sample was then dissolved with deuterated ortho-dichlorobenzene (ODCB-d4) and heated to 125°C; a heat gun was used to assist the mixing process. $^{13}C$ NMR spectra (24000 scans per spectra) were collected on a Bruker AVANCE III HD 400 MHz NMR spectrometer fitted with a 10 mm PABBO probehead maintained at 125°C. Chemical shifts were referenced to the polymer backbone resonance, which was assigned a value of 30.0 ppm. $^{13}C$ spectra were processed using exponential multiplication with a line broadening (LB) factor of 1.0 Hz. They were also processed using Gaussian multiplication with LB = -0.5 Hz and GB = 0.2 to enhance resolution.

Differential Scanning Calorimetry (DSC)

Primary melting peak (°C), melting peak temperatures (°C), heat of fusion (J/g) and crystallinity (%) was determined using differential scanning calorimetry (DSC) as follows: the instrument was first calibrated with indium; after the calibration, a polymer specimen is equilibrated at 0°C and then the temperature was increased to 200°C at a heating rate of 10°C/min; the melt was then kept isothermally at 200°C for five minutes; the melt was then cooled to 0°C at a cooling rate of 10°C/min and kept at 0°C for five minutes; the specimen was then heated to 200°C at a heating rate of 10°C/min. The DSC Tm, heat of fusion and crystallinity are reported from the 2$^{nd}$ heating cycle.

Dynamic Mechanical Analysis (DMA)

Oscillatory shear measurements under small strain amplitudes were carried out to obtain linear viscoelastic functions at 190°C under $N_2$ atmosphere, at a strain amplitude of 10% and over a frequency range of 0.02-126 rad/s at 5 points per decade. Frequency sweep experiments were performed with a TA Instruments DHR3 stress-controlled rheometer using cone-plate geometry with a cone angle of 5°, a truncation of 137 μm and a diameter of 25 mm. In this experiment a sinusoidal strain wave was applied and the stress response was analyzed in terms of linear viscoelastic functions. The zero shear rate viscosity ($\eta_0$) based on the DMA frequency sweep results was predicted by Ellis model (see R.B. Bird et al. "Dynamics of Polymer Liquids. Volume 1: Fluid Mechanics" Wiley-Interscience Publications (1987) p.228) or Carreau-Yasuda model (see K. Yasuda (1979) PhD Thesis, IT Cambridge). In this disclosure, the LCBF (Long Chain Branching Factor) was determined using the DMA determined $\eta_0$.

Melt Strength

The melt strength is measured on Rosand RH-7 capillary rheometer (barrel diameter = 15mm) with a flat die of 2-mm Diameter, L/D ratio 10:1 at 190°C. Pressure Transducer: 10,000 psi (68.95 MPa). Piston Speed: 5.33 mm/min. Haul-off Angle: 52°. Haul-off incremental speed: 50 - 80 m/min$^2$ or 65 ± 15 m/min$^2$. A polymer melt is extruded through a capillary die under a constant rate and then the polymer strand is drawn at an increasing haul-off speed until it ruptures. The maximum steady value of the force in the plateau region of a force versus time curve is defined as the melt strength for the polymer.

Film Dart Impact

Film dart impact strength was determined using ASTM D1709-09 Method A (May 1, 2009). In this disclosure the dart impact test employed a 1.5 inch (38 mm) diameter hemispherical headed dart.

Film Puncture

Film "puncture", the energy (J/mm) required to break the film was determined using ASTM D5748-95 (originally adopted in 1995, reapproved in 2012).

Film Lubricated Puncture

The "lubricated puncture" test was performed as follows: the energy (J/mm) to puncture a film sample was determined using a 0.75-inch (1.9-cm) diameter pear-shaped fluorocarbon coated probe travelling at 10-inch per minute (25.4-cm/minute). ASTM conditions were employed. Prior to testing the specimens, the probe head was manually lubricated with Muko Lubricating Jelly to reduce friction. Muko Lubricating Jelly is a water-soluble personal lubricant available from Cardinal Health Inc., 1000 Tesma Way, Vaughan, ON L4K 5R8 Canada. The probe was mounted in an Instron Model 5 SL Universal Testing Machine and a 1000-N load cell as used. Film samples (1.0 mil (25 μm) thick, 5.5 inch

(14 cm) wide and 6 inch (15 cm) long) were mounted in the Instron and punctured.

Film Tensile

The following film tensile properties were determined using ASTM D882-12 (August 1, 2012): tensile break strength (MPa), elongation at break (%), tensile yield strength (MPa), tensile elongation at yield (%) and film toughness or total energy to break (ft·lb/$in^3$). Tensile properties were measured in the both the machine direction (MD) and the transverse direction (TD) of the blown films.

Film Secant Modulus

The secant modulus is a measure of film stiffness. The secant modulus is the slope of a line drawn between two points on the stress-strain curve, i.e. the secant line. The first point on the stress-strain curve is the origin, i.e. the point that corresponds to the origin (the point of zero percent strain and zero stress); and the second point on the stress-strain curve is the point that corresponds to a strain of 1%; given these two points the 1% secant modulus is calculated and is expressed in terms of force per unit area (MPa). The 2% secant modulus is calculated similarly. This method is used to calculated film modulus because the stress-strain relationship of polyethylene does not follow Hook's law; i.e. the stress-strain behavior of polyethylene is non-linear due to its viscoelastic nature. Secant moduli were measured using a conventional Instron tensile tester equipped with a 200 lbf load cell. Strips of monolayer film samples were cut for testing with following dimensions: 14 inch long, 1 inch wide and 1 mil thick; ensuring that there were no nicks or cuts on the edges of the samples. Film samples were cut in both the machine direction (MD) and the transverse direction (TD) and tested. ASTM conditions were used to condition the samples. The thickness of each film was accurately measured with a hand-held micrometer and entered along with the sample name into the Instron software. Samples were loaded in the Instron with a grip separation of 10 inch and pulled at a rate of 1 inch/min generating the strain-strain curve. The 1% and 2% secant modulus were calculated using the Instron software.

Film Puncture-Propagation Tear

Puncture-propagation tear resistance of blown film was determined using ASTM D2582-09 (May 1, 2009). This test measures the resistance of a blown film to snagging, or more precisely, to dynamic puncture and propagation of that puncture resulting in a tear. Puncture-propagation tear resistance was measured in the machine direction (MD) and the transverse direction (TD) of the blown films.

Film Elmendorf Tear

Film tear performance was determined by ASTM D1922-09 (May 1, 2009); an equivalent term for tear is "Elmendorf tear". Film tear was measured in both the machine direction (MD) and the transverse direction (TD) of the blown films.

Film Opticals

Film optical properties were measured as follows: Haze, ASTM D1003-13 (November 15, 2013); and Gloss ASTM D2457-13 (April 1, 2013).

Film Dynatup Impact

Instrumented impact testing was carried out on a machine called a Dynatup Impact Tester purchased from Illinois Test Works Inc., Santa Barbara, CA, USA; those skilled in the art frequently call this test the Dynatup impact test. Testing was completed according to the following procedure. Test samples are prepared by cutting about 5 inch (12.7 cm) wide and about 6 inch (15.2 cm) long strips from a roll of blown film; film was about 1 mil thick. Prior to testing, the thickness of each sample was accurately measured with a handheld micrometer and recorded. ASTM conditions were employed. Test samples were mounted in the 9250 Dynatup Impact drop tower/test machine using the pneumatic clamp. Dynatup tup #1, 0.5 inch (1.3 cm) diameter, was attached to the crosshead using the Allen bolt supplied. Prior to testing, the crosshead is raised to a height such that the film impact velocity is 10.9 $\pm$0.1 ft/s. A weight was added to the crosshead such that: 1) the crosshead slowdown, or tup slowdown, was no more than 20% from the beginning of the test to the point of peak load and 2) the tup must penetrate through the specimen. If the tup does not penetrate through the film, additional weight is added to the crosshead to increase the striking velocity. During each test the Dynatup Impulse Data Acquisition System Software collected the experimental data (load (lb) versus time). At least 5 film samples are tested and the software reports the

following average values: "Dynatup Maximum (Max) Load (lb)", the highest load measured during the impact test; "Dynatup Total Energy (ft·lb)", the area under the load curve from the start of the test to the end of the test (puncture of the sample), and; "Dynatup Total Energy at Max Load (ft·lb)", the area under the load curve from the start of the test to the maximum load point.

Film Hexane Extractables

Hexane extractables was determined according to the Code of Federal Registration 21 CFR §177.1520 Para (c) 3.1 and 3.2; wherein the quantity of hexane extractable material in a film is determined gravimetrically. Elaborating, 2.5 grams of 3.5 mil (89 $\mu$m) monolayer film was placed in a stainless steel basket, the film and basket were weighed ($w^i$), while in the basket the film was: extracted with n-hexane at 49.5°C for two hours; dried at 80°C in a vacuum oven for 2 hours; cooled in a desiccator for 30 minutes, and; weighed ($w^f$). The percent loss in weight is the percent hexane extractables ($w^{C6}$): $w^{C6} = 100 \times (w^i - w^f)/w^i$.

Film Hot Tack

In this disclosure, the "Hot Tack Test" was performed as follows, using ASTM conditions. Hot tack data was generated using a J&B Hot Tack Tester which is commercially available from Jbi Hot Tack, Geloeslaan 30, B-3630 Maamechelen, Belgium. In the hot tack test, the strength of a polyolefin to polyolefin seal is measured immediately after heat sealing two film samples together (the two film samples were cut from the same roll of 2.0 mil (51-$\mu$m) thick film), i.e. when the polyolefin macromolecules that comprise the film are in a semi-molten state. This test simulates the heat sealing of polyethylene films on high speed automatic packaging machines, e.g., vertical or horizontal form, fill and seal equipment. The following parameters were used in the J&B Hot Tack Test: film specimen width, 1 inch (25.4 mm); film sealing time, 0.5 second; film sealing pressure, 0.27 N/mm$^2$; delay time, 0.5 second; film peel speed, 7.9 in/second (200 mm/second); testing temperature range, 131 °F to 293°F (55°C to 145°C); temperature increments, 9°F (5°C); and five film samples were tested at each temperature increment to calculate average values at each temperature. In this way, a hot tack profile of pulling force vs sealing temperature is generated. The following data can be calculated from this hot tack profile: the "Hot Tack Onset Temperature @ 1.0 N (°C)" or the "HTOT", is the temperature at which a hot tack force of 1N was observed (an average of five film samples); the "Max Hot tack Strength (N)", is the maximum hot tack force observed (an average of five film samples) over the testing temperature range; the "Temperature - Max. Hot tack (°C)", is the temperature at which the maximum hot tack force was observed. Finally, the hot-tack (strength) window (the "hot tack window" or the "HTW') is defined as the range of temperature, in °C spanned by the hot tack curve at a given seal strength, for example 5 Newtons. A person skilled in the art will realize that a hot tack window can be determined for differently defined seal strengths. Generally speaking, for a given seal strength, the larger the hot tack window, the greater the temperature window over which a high sealing force can be maintained or achieved.

Film Heat Seal Strength

In this disclosure, the "Heat Seal Strength Test" (also known as "the cold seal test") was performed as follows. ASTM conditions were employed. Heat seal data was generated using a conventional Instron Tensile Tester. In this test, two film samples are sealed over a range of temperatures (the two film samples were cut from the same roll of 2.0 mil (51-$\mu$m) thick film). The following parameters were used in the Heat Seal Strength (or cold seal strength) Test: film specimen width, 1 inch (25.4 mm); film sealing time, 0.5 second; film sealing pressure, 40 psi (0.28 N/mm$^2$); temperature range, 212°F to 302°F (100°C to 150°C) and temperature increment, 9°F (5°C). After aging for at least 24 hours at ASTM conditions, seal strength was determined using the following tensile parameters: pull (crosshead) speed, 12 inch/min (2.54 cm/min); direction of pull, 90° to seal; and 5 samples of film were tested at each temperature increment. The Seal Initiation Temperature, hereafter "SIT", is defined as the temperature required to form a commercially viable seal; a commercially viable seal has a seal strength of 2.0 lb per inch of seal (8.8 N per 25.4 mm of seal).

Ethylene Copolymer Compositions

Ethylene copolymer compositions were each made using a single site catalyst system in an "in-series" dual, continuously stirred tank reactor, "CSTR" reactor solution polymerization process. In this solution polymerization process, a first and second CSTR reactor are configured in series with one another and each reactor receives catalyst system component feeds. However, the dual CSTR reactor system is also followed by a downstream tubular reactor, also configured in series, which receives the exit stream of the second CSTR reactor, but to which additional catalyst system components are not fed. As a result, the ethylene copolymer compositions made each comprised a first and a second ethylene copolymer made with a single site catalyst and an optional third ethylene copolymer (also made with a single site

catalyst due to the flow of active single site catalyst from the second reactor to the third reactor) depending on whether additional polymerizable monomers are added directly to the third reactor. An "in series" "dual CSTR reactor", solution phase polymerization process has been described in U.S. Pat. Appl. Pub. No. 2019/0135958.

Basically, in an "in-series" reactor system the exit stream from a first polymerization reactor (R1) flows directly into a second polymerization reactor (R2). The R1 pressure was from about 14 MPa to about 18 MPa; while R2 was operated at a lower pressure to facilitate continuous flow from R1 to R2. Both R1 and R2 were continuously stirred reactors (CSTR's) and were agitated to give conditions in which the reactor contents were well mixed. A third reactor, R3 was also used. The third reactor, R3 was a tubular reactor configured in series with the second reactor, R2 (i.e. the contents of reactor 2 flowed into reactor 3). The process was operated continuously by feeding fresh process solvent, ethylene, 1-octene and hydrogen to the at least the first and second reactors and in the removal of product. Methylpentane was used as the process solvent (a commercial blend of methylpentane isomers). The volume of the first CSTR reactor (R1) was 3.2 gallons (12 L), and the volume of the second CSTR reactor (R2) was 5.8 gallons (22 L). The volume of the tubular reactor (R3) was 0.58 gallons (2.2 L). Monomer (ethylene) and comonomer (1-octene) were purified prior to addition to the reactor using conventional feed preparation systems (such as contact with various absorption media to remove impurities such as water, oxygen and polar contaminants). The reactor feeds were pumped to the reactors at the ratios shown in Table 1. Average residence times for the reactors are calculated by dividing average flow rates by reactor volume and is primarily influenced by the amount of solvent flowing through each reactor and the total amount of solvent flowing through the solution process. For example, the average reactor residence times were: 61 seconds in R1, 73 seconds in R2, 7.3 seconds for an R3 volume of 0.58 gallons (2.2 L).

The following single site catalyst (SSC) components were used to prepare the first and second ethylene copolymers in a first CSTR reactor (R1) configured in series to a second CSTR reactor (R2): diphenylmethylene(cyclopentadienyl)(2,7-dit-butylfuorenyl)hafnium dimethide [(2,7-$tBu_2$Flu)$Ph_2$C(Cp)$HfMe_2$]; methylaluminoxane (MMAO-07); trityl tetrakis(pentafluoro-phenyl)borate (trityl borate), and 2,6-di-tert-butyl-4-ethylphenol (BHEB). Methylaluminoxane (MMAO-07) and 2,6-di-tert-butyl-4-ethylphenol are premixed in-line and then combined with diphenylmethylene(cyclopentadienyl)(2,7-di-t-butylfuorenyl)hafnium dimethide and trityl tetrakis(pentafluoro-phenyl)borate just before entering the polymerization reactor (e.g. R1 and R2). The efficiency of the single site catalyst formulation was optimized by adjusting the mole ratios of the catalyst components fed to R1 and R2 as well as the R1 and R2 catalyst components inlet temperature. If ethylene was fed directly to the third reactor, R3, (i.e. if the ethylene split, "$ES^{R3}$" was not zero to R3), then a third ethylene copolymer was also formed due to the flow of active polymerization catalyst from second CSTR reactor, R2 to the third tubular reactor, R3. Alternatively, if no ethylene was fed directly to the third reactor, R3 (i.e. if the ethylene split, "$ES^{R3}$" to R3 was zero), then a significant amount of a third ethylene copolymer was not formed.

The total amount of ethylene supplied to the solution polymerization process can be portioned or split between the three reactors R1, R2 and R3. This operational variable is referred to as the Ethylene Split (ES), i.e. "$ES^{R1}$", "$ES^{R2}$" and "$ES^{R3}$" refer to the weight percent of ethylene injected in R1, R2 and R3, respectively; with the proviso that $ES^{R1} + ES^{R2} + ES^{R3} = 100\%$. Similarly, the total amount of 1-octene supplied to the solution polymerization process can be portioned or split between the three reactors R1, R2 and R3. This operational variable is referred to as the Octene Split (OS), i.e. "$OS^{R1}$", "$OS^{R2}$" and "$OS^{R3}$" refer to the weight percent of ethylene injected in R1, R2 and R3, respectively; with the proviso that $OS^{R1} + OS^{R2} + OS^{R3} = 100\%$. The term "$Q^{R1}$" refers to the percent of the ethylene added to R1 that is converted into an ethylene copolymer by the catalyst formulation. Similarly, $Q^{R2}$ and $Q^{R3}$ represent the percent of the ethylene added to R2 and R3 that was converted into ethylene copolymer, in the respective reactor. The term "$Q^T$" represents the total or overall ethylene conversion across the entire continuous solution polymerization plant, i.e. $Q^T = 100 \times$ [weight of ethylene in the copolymer product]/([weight of ethylene in the copolymer product]+[weight of unreacted ethylene]).

Polymerization in the continuous solution polymerization process was terminated by adding a catalyst deactivator to the third exit stream exiting the tubular reactor (R3). The catalyst deactivator used was octanoic acid (caprylic acid), commercially available from P&G Chemicals, Cincinnati, OH, U.S.A. The catalyst deactivator was added such that the moles of fatty acid added were 50% of the total molar amount of catalytic metal and aluminum added to the polymerization process; to be clear, the moles of octanoic acid added = 0.5 $\times$ (moles hafnium + moles aluminum).

A two-stage devolatilization process was employed to recover the ethylene copolymer composition from the process solvent, i.e. two vapor/liquid separators were used and the second bottom stream (from the second V/L separator) was passed through a gear pump/pelletizer combination.

DHT-4V (hydrotalcite), supplied by Kyowa Chemical Industry Co. LTD, Tokyo, Japan may be used as a passivator, or acid scavenger, in the continuous solution process. A slurry of DHT-4V in process solvent may be added prior to the first V/L separator.

Prior to pelletization the ethylene copolymer composition was stabilized by adding 500 ppm of IRGANOX® 1076 (a primary antioxidant) and 500 ppm of IRGAFOS® 168 (a secondary antioxidant), based on weight of the ethylene copolymer composition. Antioxidants were dissolved in process solvent and added between the first and second V/L separators.

Table 1 shows the reactor conditions used to make each of the inventive ethylene copolymer compositions. Table

1 includes process parameters, such as the ethylene and 1-octene splits between the reactors (R1, R2 and R3), the reactor temperatures, the ethylene conversions, the amounts of hydrogen, etc.

The properties of the inventive ethylene copolymer compositions (Inventive Examples 2, 3, 4, 5, 9, 10 and 11) as well as those for comparative resins (Comparative Examples 1 and 2) are shown in Table 2. Comparative Example 1 is Queo® 0201, a plastomeric ethylene/1-octene resin sold by Borealis AG. Queo 0201 has a density of about 0.90 g/cm$^3$ and a melt index of about 1.2 g/10min. Comparative Example 2 is AFFINITY® PL 1880G, a plastomeric ethylene/1-octene resin sold by The Dow Chemical Company. AFFINITY PL 1880G has a density of about 0.90 g/cm$^3$ and a melt index of about 1 g/10min

Details of the inventive ethylene copolymer composition components: the first ethylene copolymer, the second ethylene copolymer, and the third ethylene copolymer are provided in Table 3. The ethylene copolymer composition component properties shown in Table 3 were determined using polymer process model equations (as further described below).

Polymerization Process Model

For multicomponent (or bimodal resins) polyethylene polymers, the $M_w$, $M_n$, $M_w/M_n$, weight percent, branching frequency (i.e. the *BrF* = the SCB per 1000 carbons in the polymer backbone), density and the melt index, $I_2$ of each component were calculated herein, by using a reactor model simulation using the input conditions which were employed for actual pilot scale run conditions (for references on relevant reactor modeling methods, see "Copolymerization" by A. Hamielec, J. MacGregor, and A. Penlidis in Comprehensive Polymer Science and Supplements, volume 3, Chapter 2, page 17, Elsevier, 1996 and "Copolymerization of Olefins in a Series of Continuous Stirred-Tank Slurry-Reactors using Heterogeneous Ziegler-Natta and Metallocene Catalysts. I. General Dynamic Mathematical Model" by J.B.P Soares and A.E Hamielec in Polymer Reaction Engineering, 4(2&3), p153, 1996.)

The model takes for input the flow of several reactive species (e.g. catalyst, monomer such as ethylene, comonomer such as 1-octene, hydrogen, and solvent) going to each reactor, the temperature (in each reactor), and the conversion of monomer (in each reactor), and calculates the polymer properties (of the polymer made in each reactor, i.e., the first, second, and third ethylene copolymers) using a terminal kinetic model for continuously stirred tank reactors (CSTRs) connected in series. The "terminal kinetic model" assumes that the kinetics depend upon the monomer unit within the polymer chain on which the active catalyst site is located (see "Copolymerization" by A. Hamielec, J. MacGregor, and A. Penlidis in Comprehensive Polymer Science and Supplements, Volume 3, Chapter 2, page 17, Elsevier, 1996). In the model, the copolymer chains are assumed to be of reasonably large molecular weight to ensure that the statistics of monomer/comonomer unit insertion at the active catalyst center is valid and that monomers/comonomers consumed in routes other than propagation are negligible. This is known as the "long chain" approximation.

The terminal kinetic model for polymerization includes reaction rate equations for activation, initiation, propagation, chain transfer, and deactivation pathways. This model solves the steady-state conservation equations (e.g., the total mass balance and heat balance) for the reactive fluid which comprises the reactive species identified above.

The total mass balance for a generic CSTR with a given number of inlets and outlets is given by:

$$(1) \qquad 0 = \sum_i \dot{m}_i$$

where $\dot{m}_i$ represents the mass flow rate of individual streams with index i indicating the inlet and outlet streams.

Equation (1) can be further expanded to show the individual species and reactions:

$$(2) \qquad 0 = \frac{\sum_i {}^{m\dot{x}_{ij}}/_{M_i}}{\rho_{mix}V} + {}^{R_j}/_{\rho_{mix}}$$

where $M_i$ is the average molar weight of the fluid inlet or outlet (*i*), $x_{ij}$ is the mass fraction of species *j* in stream *i*, $\rho_{mix}$ is the molar density of the reactor mixture, *V* is the reactor volume, $R_j$ is the reaction rate for species *j*, which has units of kmol/m$^3$s.

The total heat balance is solved for an adiabatic reactor and is given by:

$$(3) \qquad 0 = \left(\sum \dot{m}_i \Delta H_i + q_{Rx} V + \dot{W} - \dot{Q}\right)$$

where, $\dot{m}_i$ is the mass flow rate of stream *i* (inlet or outlet), $\Delta H_i$ is the difference in enthalpy of stream i versus a reference state, $q_{Rx}$ is the heat released by reaction(s), *V* is the reactor volume, $\dot{W}$ is the work input (i.e., agitator), $\dot{Q}$ is the heat

input/loss.

The catalyst concentration input to each reactor is adjusted to match the experimentally determined ethylene conversion and reactor temperature values in order solve the equations of the kinetic model (e.g., propagation rates, heat balance and mass balance).

The $H_2$ concentration input to each reactor may be likewise adjusted so that the calculated molecular weight distribution of a polymer made over all reactors (and, hence, the molecular weight of polymer made in each reactor) matches that which is observed experimentally.

The weight fraction, wt1, wt2, and wt3 of material made in each reactor, R1, R2, and R3 is determined from knowing the mass flow of monomer and comonomer into each reactor along with knowing the conversions for monomer and comonomer in each reactor calculated based on kinetic reactions.

The degree of polymerization ($dp_n$) for a polymerization reaction is given by the ratio of the rate of chain propagation reactions over the rate of chain transfer/termination reactions:

$$(4) \qquad dp_n = \frac{k_{p11}\phi_1[m_1]+k_{p12}\phi_1[m_2]+k_{p21}\phi_2[m_2]}{k_{tm11}[m_1]\phi_1+k_{tm12}[m_2]\phi_1+k_{tm21}[m_2]\phi_2+k_{ts1}\phi_1+k_{ts2}\phi_2+k_{tH1}[H]+k_{tH2}[H]} = \frac{R_p}{R_t}$$

where $k_{p12}$ is the propagation rate constant for adding monomer 2 (1-octene) to a growing polymer chain ending with monomer 1 (ethylene), $[m_1]$ is the molar concentration of monomer 1 in the reactor, $[m_2]$ is the molar concentration of monomer 2 in the reactor, $k_{tm12}$ the termination rate constant for chain transfer to monomer 2 for a growing chain ending with monomer 1, $k_{ts1}$ is rate constant for the spontaneous chain termination for a chain ending with monomer 1, $k_{tH1}$ is the rate constant for the chain termination by hydrogen for a chain ending with monomer 1. $\phi_1$ and $\phi_2$ and the fraction of catalyst sites occupied by a chain ending with monomer 1 or monomer 2 respectively.

The number average molecular weight (Mn) for a polymer follows from the degree of polymerization and the molecular weight of a monomer unit. From the number average molecular weight of polymer in a given reactor, and assuming a Flory-Schulz distribution for a single site catalyst, the molecular weight distribution is determined for the polymer using the following relationships.

$$(5) \qquad w(n) = n\tau^2 e^{-\tau n}$$

where $n$ is the number of monomer units in a polymer chain, w(n) is the weight fraction of polymer chains having a chain length $n$, and $\tau$ is calculated using the equation below:

$$\tau = \frac{1}{dp_n} = \frac{R_t}{R_p}$$

where $dp_n$ is the degree of polymerization, $R_p$ is the rate of propagation and $R_t$ is the rate of termination.

The Flory-Schulz distribution can be transformed into the common log scaled gel permeation chromatography, GPC trace by applying:

$$(6) \qquad \frac{dW}{dlog(M)} = ln(10)\frac{n^2}{dp_n 2} e^{\left(-\frac{n}{dp_n}\right)}$$

where $\frac{dW}{dlog(MW)}$ is the differential weight fraction of polymer with a chain length $n$ ($n = MW/28$ where 28 is the molecular weight of the polymer segment corresponding to a $C_2H_4$ unit) and $dp_n$ is the degree of polymerization.

Assuming a Flory-Schultz model, different moments of molecular weight distribution can be calculated using the following:

$$\mu_i = \int_0^\infty n^i \; W(n)dn$$

thus,

$$\mu_0 = 1,$$

$$\mu_1 = dp_n,$$

and

$$\mu_2 = 2\ dp_n{}^2;$$

so,

$$M_n = Mw_{monomer}\frac{\mu_1}{\mu_0} = Mw_{monomer}\ dp_n$$

$$M_w = Mw_{monomer}\frac{\mu_2}{\mu_1} = 2\ Mw_{monomer}\ dp_n$$

where $Mw_{monomer}$ is the molecular weight of the polymer segment corresponding to a $C_2H_4$ unit of monomer.

Finally, when a single site catalyst produces long chain branching, the molecular weight distribution is determined for the polymer using the following relationships (see "Polyolefins with Long Chain Branches Made with Single-Site Coordination Catalysts: A Review of Mathematical Modeling Techniques for Polymer Microstructure" by J.B.P Soares in Macromolecular Materials and Engineering, volume 289, Issue 1, Pages 70-87, Wiley-VCH, 2004 and "Polyolefin Reaction Engineering" by J.B.P Soares and T.F.L. McKenna Wiley-VCH, 2012).

$$w(n) = \frac{(1-\alpha)\ \tau_B e^{-\tau_B n}}{(1+\alpha)} I_1\left(2\ \frac{\tau_B n\sqrt{\alpha}}{1+\alpha}\right)$$

where $n$ is the number of monomer units in a polymer chain, $w(n)$ is the weight fraction of polymer chains having a chain length $n$, and $\tau_B$ and $\alpha$ are calculated using equations below:

$$\tau_B = \frac{1}{dp_n^B} = \frac{R_t + R_{LCB}}{R_p}$$

$$\alpha = \frac{R_{LCB}}{R_p}$$

where $dp_n^B$ is degree of polymerization, $R_p$ is the rate propagation, $R_t$ is the rate of termination and $R_{LCB}$ is the rate of long chain branching formation calculated using equation below:

$$R_{LCB} = k_{p13}\phi_1[m_3]$$

where $k_{p13}$ is the propagation rate constant for adding monomer 3 (macromonomer which formed in the reactor) to a growing polymer chain ending with monomer 1, $[m_3]$ is the molar concentration of macromonomer in the reactor.

The weight distribution can be transformed into the common log scaled GPC trace by applying:

$$(7)\qquad \frac{dW}{dlog(M)} = \ln(10)\frac{(1-\alpha)\ \tau_B e^{-\tau_B n}}{(1+\alpha)\sqrt{\alpha}} I_1\left(2\ \frac{\tau_B n\sqrt{\alpha}}{1+\alpha}\right)$$

where $\frac{dW}{dlog(MW)}$ is the differential weight fraction of polymer with a chain length $n$ ($n = MW/28$ where 28 is the molecular weight of the polymer segment corresponding to a $C_2H_4$ unit).

From the weight distribution, different moments of molecular weight distribution can be calculated using the following:

$$M_n = Mw_{monomer}\ dp_n^B\ \frac{1+\alpha}{1-\alpha}$$

$$M_w = 2\ Mw_{monomer}\ dp_n^B\ \frac{1+\alpha}{(1-\alpha)^2}$$

where $dp_n^B$ is degree of polymerization, and $\alpha$ is calculated as explained.

Assuming that addition of monomer 2 (1-octene) unit to a chain ending in an octene terminal unit is insignificant, the number of octene after ethylene steps will be equivalent to the number of ethylene after octene steps. The branch content of the resultant polymer per thousand backbone carbon atoms (500 monomer units), *BrF* will be the ratio of the rate of addition of monomer 1 (ethylene) to the rate of the addition of monomer 2 (1-octene).

$$BrF = \frac{rate\ of\ addition\ of\ monomer\ 2\ after\ monomer\ 1}{rate\ of\ addition\ of\ monomer\ 1\ after\ monomer\ 1} \times 500 = \frac{[m_2]k_{p12}}{[m_1]k_{p11}} \times 500$$

where $k_{p12}$ is the propagation rate constant for adding monomer 2 (1-octene) to a growing polymer chain ending with monomer 1 (ethylene), $k_{p11}$ is the propagation rate constant for adding monomer 1 (ethylene) to a growing polymer chain ending with monomer 1, $[m_1]$ is the molar concentration of monomer 1 in the reactor, and $[m_2]$ is the molar concentration of monomer 2 in the reactor.

The density of the polymer made in each reactor is calculated based on branch frequency, number average molecular weight, weight average molecular weight, and the ratio of weight average molecular weight to number average molecular weight (for the polymer made in each reactor, determined as described above) using below equation:

$$Density = a + b \times BrF^c + d \times {M_n}^e + f \times {M_w}^g + h \times \left(\frac{M_w}{M_n}\right)^k$$

where a = 1.061, b = -5.434 $e^{-03}$, c = 6.5268 $e^{-01}$, d = 1.246 $e^{-09}$, e = 1.453, f =-7.7458 $e^{-01}$, g = 2.032 $e^{-02}$, h = 8.434 $e^{-01}$, and k = 1.565 $e^{-02}$.

The Melt Index ($I_2$, g/10min) of the polymer made in each reactor is calculated based on number average molecular weight and weight average molecular weight (for the polymer made in each reactor, determined as described above) using below equation:

$$LogI_2 = 7.8998042 - 3.9089344 \times log\left(\frac{M_W}{1000}\right) - 0.27994391 \times \frac{M_n}{M_W}$$

TABLE 1

| Reactor Operating Conditions | | | | |
|---|---|---|---|---|
| Example No. | Inv. 2 | Inv. 3 | Inv. 4 | Inv. 5 |
| R1 catalyst (ppm)[a] | 0.45 | 0.40 | 0.31 | 0.34 |
| R1 ([M[b]]/[A]) mole ratio | 31 | 31 | 50 | 50 |
| R1 ([P[c]]/[M]) mole ratio | 0.41 | 0.41 | 0.54 | 0.42 |

(continued)

| Reactor Operating Conditions | | | | |
|---|---|---|---|---|
| Example No. | Inv. 2 | Inv. 3 | Inv. 4 | Inv. 5 |
| R1 ([$B^d$]/[A]) mole ratio | 1.21 | 1.20 | 1.21 | 1.21 |
| R2 catalyst (ppm)[a] | 0.36 | 0.34 | 0.50 | 0.45 |
| R2 ([$M^b$]/[A]) mole ratio | 31 | 31 | 55 | 55 |
| R2 ([$P^c$]/[M]) mole ratio | 0.40 | 0.40 | 0.40 | 0.40 |
| R2 ([$B^d$]/[A]) mole ratio | 1.21 | 1.20 | 1.20 | 1.20 |
| $ES^{R1}$ (%) | 34.6 | 30.0 | 39.1 | 35.0 |
| $ES^{R2}$ (%) | 45.4 | 50.0 | 40.9 | 35.0 |
| $ES^{R3}$ (%) | 20.0 | 20.0 | 20.0 | 30.0 |
| R1 ethylene concentration (wt%) | 10.8 | 9.8 | 11.3 | 11.7 |
| R2 ethylene concentration (wt%) | 11.4 | 11.7 | 10.2 | 10.1 |
| R3 ethylene concentration (wt%) | 13.1 | 13.5 | 11.8 | 12.9 |
| ((1-octene)/ (ethylene))$^{R1}$ (wt. fraction) | 0.46 | 0.40 | 0.40 | 0.40 |
| ((1-octene)/ (ethylene))$^{R2}$ (wt. fraction) | 0.19 | 0.20 | 0.17 | 0.20 |
| ((1-octene)/ (ethylene))$^{R3}$ (wt. fraction) | 0.00 | 0.00 | 0.50 | 0.65 |
| (1 -octene/ethylene) (wt. fraction, total) | 0.249 | 0.250 | 0.331 | 0.403 |
| Prod. Rate (kg/h) | 70.5 | 72.2 | 64.4 | 68.0 |
| R1 total solution rate (kg/h) | 230.5 | 227.2 | 224.5 | 211.3 |
| R2 total solution rate (kg/h) | 278.0 | 280.4 | 288.0 | 278.2 |
| R3 solution rate (kg/h) | 41.4 | 42.4 | 37.3 | 58.6 |
| Total solution rate (kg/h)[e] | 550.0 | 550.0 | 550.0 | 548.1 |
| $OS^{R1}$ (%) | 64.6 | 55.0 | 47.6 | 34.9 |
| $OS^{R2}$ (%) | 35.3 | 45.0 | 22.0 | 17.0 |
| $OS^{R3}$ (%) | 0.0 | 0.0 | 30.3 | 48.1 |
| $H_2^{R1}$ (ppm) | 7.56 | 7.50 | 10.06 | 10.00 |
| $H_2^{R2}$ (ppm) | 1.60 | 2.00 | 1.00 | 1.00 |
| $H_2^{R3}$ (ppm) | 1.00 | 1.07 | 0.50 | 0.52 |
| R1 feed inlet temp (°C) | 29.9 | 30.0 | 30.0 | 30.1 |
| R2 feed inlet temp (°C) | 30.1 | 30.0 | 29.9 | 30.1 |
| R3 feed inlet temp(°C) | 130.7 | 129.8 | 129.8 | 130.6 |
| R1 Mean temp (°C) | 154.9 | 142.7 | 151.9 | 157.8 |
| R2 Mean temp (°C) | 165.9 | 170.1 | 156.5 | 157.1 |
| R3 exit temp (°C) | 193.4 | 196.4 | 175.9 | 186.0 |
| $Q^{R1}$ (%) | 80.3 | 80.1 | 76.8 | 77.9 |
| $Q^{R2}$ (%) | 80.8 | 80.0 | 84.0 | 83.0 |
| $Q^{R3}$ (%) | 91.1 | 90.5 | 90.2 | 85.5 |

(continued)

| Reactor Operating Conditions | | | | |
|---|---|---|---|---|
| Example No. | Inv. 2 | Inv. 3 | Inv. 4 | Inv. 5 |
| $Q^T$ (%) | 93.5 | 92.8 | 93.1 | 89.5 |

[a] [(2,7-$tBu_2$Flu)$Ph_2$C(Cp)$HfMe_2$]
[b] methylaluminoxane (MMAO-7)
[c] 2,6-di-tert-butyl-4-ethylphenol
[d] trityl tetrakis(pentafluoro-phenyl)borate
[e] Total solution rate (kg/h) = (R1 total solution rate (kg/h)) + (R2 total solution rate (kg/h) + (R3 total solution rate (kg/h))

TABLE 1 - CONTINUED

| Reactor Operating Conditions | | | |
|---|---|---|---|
| Example No. | Inv. 9 | Inv. 10 | Inv. 11 |
| R1 catalyst (ppm)[a] | 0.34 | 0.32 | 0.29 |
| R1 ([M[b]]/[A]) mole ratio | 50 | 50 | 51 |
| R1 ([P[c]]/[M]) mole ratio | 0.41 | 0.41 | 0.43 |
| R1 ([B[d]]/[A]) mole ratio | 1.21 | 1.21 | 1.22 |
| R2 catalyst (ppm)[a] | 0.17 | 0.19 | 0.33 |
| R2 ([M[b]]/[A]) mole ratio | 44 | 61 | 55 |
| R2 ([P[c]]/[M]) mole ratio | 0.52 | 0.45 | 0.40 |
| R2 ([B[d]]/[A]) mole ratio | 1.21 | 1.20 | 1.20 |
| $ES^{R1}$ (%) | 30.0 | 30.0 | 45.0 |
| $ES^{R2}$ (%) | 50.0 | 50.0 | 35.0 |
| $ES^{R3}$ (%) | 20.0 | 20.0 | 20.0 |
| R1 ethylene concentration (wt%) | 10.5 | 10.5 | 11.4 |
| R2 ethylene concentration (wt%) | 11.8 | 11.8 | 9.8 |
| R3 ethylene concentration (wt%) | 13.6 | 13.6 | 11.4 |
| ((1-octene)/ (ethylene))$^{R1}$ (wt. fraction) | 0.35 | 0.35 | 0.39 |
| ((1-octene)/ (ethylene))$^{R2}$ (wt. fraction) | 0.17 | 0.17 | 0.12 |
| ((1-octene)/ (ethylene))$^{R3}$ (wt. fraction) | 0.02 | 0.24 | 0.51 |
| (1-octene/ethylene) (wt. fraction, total) | 0.193 | 0.240 | 0.320 |
| Prod. Rate (kg/h) | 69.6 | 69.5 | 60.4 |
| R1 total solution rate (kg/h) | 213.7 | 213.8 | 248.7 |
| R2 total solution rate (kg/h) | 293.4 | 293.5 | 265.6 |
| R3 solution rate (kg/h) | 41.3 | 42.8 | 36.0 |
| Total solution rate (kg/h)[e] | 548.5 | 550.0 | 550.1 |
| $OS^{R1}$ (%) | 54.0 | 44.0 | 55.0 |
| $OS^{R2}$ (%) | 44.2 | 36.0 | 13.0 |
| $OS^{R3}$ (%) | 10.0 | 20.0 | 32.0 |
| $H_2^{R1}$ (ppm) | 7.50 | 7.50 | 9.00 |
| $H_2^{R2}$ (ppm) | 8.00 | 8.00 | 1.23 |
| $H_2^{R3}$ (ppm) | 0.54 | 0.52 | 0.57 |

(continued)

| Reactor Operating Conditions | | | |
|---|---|---|---|
| Example No. | Inv. 9 | Inv. 10 | Inv. 11 |
| R1 feed inlet temp (°C) | 29.9 | 30.1 | 30.2 |
| R2 feed inlet temp (°C) | 29.9 | 29.9 | 31.0 |
| R3 feed inlet temp(°C) | 129.9 | 130.2 | 129.0 |
| R1 Mean temp (°C) | 149.0 | 149.8 | 149.3 |
| R2 Mean temp (°C) | 168.7 | 169.2 | 156.5 |
| R3 exit temp (°C) | 189.7 | 189.3 | 175.7 |
| $Q^{R1}$ (%) | 80.0 | 80.0 | 76.0 |
| $Q^{R2}$ (%) | 80.0 | 80.1 | 80.1 |
| $Q^{R3}$ (%) | 86.7 | 85.5 | 85.9 |
| $Q^{T}$ (%) | 89.9 | 88.9 | 90.7 |

[a] $[(2,7\text{-}tBu_2Flu)Ph_2C(Cp)HfMe_2]$
[b] methylaluminoxane (MMAO-7)
[c] 2,6-di-tert-butyl-4-ethylphenol
[d] trityl tetrakis(pentafluoro-phenyl)borate
[e] Total solution rate (kg/h) ± (R1 total solution rate (kg/h)) + (R2 total solution rate (kg/h) + (R3 total solution rate (kg/h))

TABLE 2

| Polymer Properties | | | | | |
|---|---|---|---|---|---|
| Example No. | Inv. 2 | Inv. 3 | Inv. 4 | Inv. 5 | Inv. 9 |
| Density (g/cm$^3$) | 0.9023 | 0.9051 | 0.9025 | 0.901 | 0.9102 |
| Melt Index $I_2$ (g/10 min) | 0.91 | 1.08 | 0.79 | 0.78 | 1.26 |
| Melt Index $I_6$ (g/10 min) | 4.75 | 5.23 | 3.99 | 4.03 | 6.15 |
| Melt Index $I_{21}$ (g/10 min) | 34.8 | 36.5 | 29.4 | 29.9 | 41.3 |
| Melt Flow Ratio ($I_{21}/I_2$) | 38.5 | 33.9 | 37.2 | 38.3 | 31.8 |
| Stress Exponent | 1.51 | 1.44 | 1.47 | 1.5 | 1.41 |
| CTREF - High Temperature Elution Peak (°C) | 81.3 | 82.6 | 65.5 | 62 | 86.1 |
| CTREF - $CDBI_{50}$ | 80.3 | 67.7 | 88.1 | 90.4 | 74.5 |
| DSC - Primary Melting Peak (°C) | 90 | 95.6 | 97.7 | 96.4 | 108.65 |
| Heat of Fusion (J/g) | 89.5 | 96.7 | 88.3 | 84.6 | 111.5 |
| Crystallinity (%) | 30.9 | 33.3 | 30.4 | 29.2 | 38.43 |
| Branch Freq/1000C | 25.4 | 23.1 | 24.2 | 25.2 | 18 |
| Comonomer ID | 1-octene | 1-octene | 1-octene | 1-octene | 1-octene |
| Comonomer Content (mole%) | 5.1 | 4.6 | 4.8 | 5 | 3.6 |
| Comonomer Content (wt%) | 17.6 | 16.2 | 16.9 | 17.5 | 13 |
| Internal Unsat/100C | | | 0.012 | 0.013 | 0.01 |
| Side Chain Unsat/100C | | | 0.009 | 0.01 | 0.009 |
| Terminal Unsat/100C | | | 0.006 | 0.007 | 0.007 |
| $M_n$ | 41156 | 42878 | 32044 | 38687 | 36757 |
| $M_w$ | 83091 | 83366 | 86097 | 89123 | 78058 |

(continued)

| Polymer Properties | | | | | |
|---|---|---|---|---|---|
| Example No. | Inv. 2 | Inv. 3 | Inv. 4 | Inv. 5 | Inv. 9 |
| $M_z$ | 139292 | 140128 | 158382 | 163560 | 137665 |
| Polydispersity Index ($M_w/M_n$) | 2.02 | 1.94 | 2.69 | 2.3 | 2.12 |
| VICAT Soft. Pt. (°C) - Plaque | 84.5 | 90 | 85.9 | 84.3 | 99.4 |
| Hf (ppm) | 0.984 | 0.687 | 0.978 | 0.801 | 0.496 |

TABLE 2 - CONTINUED

| Polymer Properties | | | | |
|---|---|---|---|---|
| Example No. | Inv. 10 | Inv. 11 | Comp.1 | Comp.2 |
| Density ($g/cm^3$) | 0.9094 | 0.9061 | 0.901 | 0.9012 |
| Melt Index $I_2$ (g/10 min) | 1.25 | 1.54 | 1.18 | 1.03 |
| Melt Index $I_6$ (g/10 min) | 5.94 | 7.26 | 6 | 4.84 |
| Melt Index $I_{21}$ (g/10 min) | 40.1 | 48.5 | 43.6 | 30.9 |
| Melt Flow Ratio ($I_{21}/I_2$) | 31.7 | 30.9 | 37.1 | 30.1 |
| Stress Exponent | 1.41 | 1.39 | 1.48 | 1.41 |
| CTREF - High Temperature Elution Peak (°C) | 83.8 | 74.3 | 63.8 | 66.8 |
| CTREF - $CDBI_{50}$ | 76.6 | 87.6 | 89.7 | 89.2 |
| DSC - Primary Melting Peak (°C) | 106.9 | 103.03 | 95.5 | 62.5 |
| Heat of Fusion (J/g) | 109.6 | 103.1 | 84.1 | 80 |
| Crystallinity (%) | 37.79 | 35.54 | 29 | 27.6 |
| Branch Freq/1000C | 18.7 | 20.4 | 24.9 | 23.3 |
| Comonomer ID | 1-octene | 1-octene | 1-octene | 1-octene |
| Comonomer Content (mole%) | 3.7 | 4.1 | 5 | 4.7 |
| Comonomer Content (wt%) | 13.4 | 14.6 | 17.3 | 16.4 |
| Internal Unsat/100C | 0.01 | 0.01 | 0.015 | 0.006 |
| Side Chain Unsat/100C | 0.009 | 0.01 | 0.01 | 0.025 |
| Terminal Unsat/100C | 0.007 | 0.007 | 0.009 | 0.007 |
| $M_n$ | 34648 | 35451 | 33925 | 46587 |
| $M_w$ | 78474 | 85523 | 80226 | 83474 |
| $M_z$ | 133982 | 249007 | 144328 | 136280 |
| Polydispersity Index ($M_w/M_n$) | 2.26 | 2.41 | 2.36 | 1.79 |
| VICAT Soft. Pt. (°C) - Plaque | 97.7 | 94.4 | 84.1 | 84.5 |
| Hf (ppm) | 0.380 | 0.438 | 0.302 | <0.06 |

TABLE 3

| Polyethylene Composition Component Properties | | | | |
|---|---|---|---|---|
| Example No. | Inv. 2 | Inv. 3 | Inv. 4 | Inv. 5 |
| The First Ethylene Copolymer | | | | |

(continued)

| Catalyst Type 1 | Single Site Catalyst | Single Site Catalyst | Single Site Catalyst | Single Site Catalyst |
|---|---|---|---|---|
| weight fraction, $wt^1$ (wt%) | 0.37 | 0.29 | 0.30 | 0.32 |
| $\rho^1$ (g/cm$^3$) | 0.8982 | 0.8931 | 0.8989 | 0.9015 |
| $I_2^1$ | 0.88 | 0.50 | 0.64 | 0.75 |
| Mn1 | 48642 | 57304 | 54505 | 51511 |
| Mw1 | 106960 | 124682 | 116569 | 111697 |
| Mw1/Mn1 | 2.2 | 2.2 | 2.2 | 2.2 |
| short chain branches per 1000 carbons (SCB1) | 25.4 | 29.2 | 24.2 | 22.3 |
| The Second Ethylene Copolymer | | | | |
| Catalyst Type 2 | Single Site Catalyst | Single Site Catalyst | Single Site Catalyst | Single Site Catalyst |
| weight fraction, $wt^2$ (wt%) | 0.43 | 0.50 | 0.52 | 0.41 |
| $\rho^2$ (g/cm$^3$) | 0.8993 | 0.9055 | 0.9023 | 0.9068 |
| $I_2^2$ | 0.88 | 0.50 | 0.64 | 0.75 |
| Mn2 | 31136 | 31866 | 29737 | 26497 |
| Mw2 | 69993 | 70358 | 68092 | 59558 |
| Mw2/Mn2 | 2.5 | 2.2 | 2.3 | 2.2 |
| short chain branches per 1000 carbons (SCB2) | 28.6 | 23.0 | 26.31 | 24.01 |
| The Third Ethylene Copolymer | | | | |
| Catalyst Type 3 | Single Site Catalyst | Single Site Catalyst | Single Site Catalyst | Single Site Catalyst |
| weight fraction, $wt^3$ (wt%) | 0.20 | 0.21 | 0.18 | 0.27 |
| $\rho^3$ (g/cm$^3$) | 0.9126 | 0.9182 | 0.9046 | 0.9068 |
| $I_2^3$ | 1.27 | 2.46 | 1.85 | 1.24 |
| Mn3 | 33698 | 28827 | 31652 | 32315 |
| Mw3 | 97428 | 81295 | 88151 | 97849 |
| Mw2/Mn2 | 2.9 | 2.8 | 2.8 | 3.0 |
| short chain branches per 1000 carbons (SCB3) | 15.5 | 13.2 | 22.6 | 20.1 |

TABLE 3 - CONTINUED

| Polyethylene Composition Component Properties | | | |
|---|---|---|---|
| Example No. | Inv. 9 | Inv. 10 | Inv. 11 |
| The First Ethylene Copolymer | | | |
| Catalyst Type 1 | Single Site Catalyst | Single Site Catalyst | Single Site Catalyst |
| weight fraction, $wt^1$ (wt%) | 0.29 | 0.29 | 0.29 |
| $\rho^1$ (g/cm$^3$) | 0.9004 | 0.9000 | 0.8998 |
| $I_2^1$ | 0.45 | 0.43 | 0.43 |
| Mn1 | 58371 | 59015 | 59159 |
| Mw1 | 128099 | 129433 | 129701 |
| Mw1/Mn1 | 2.2 | 2.2 | 2.2 |

(continued)

| | | | |
|---|---|---|---|
| Catalyst Type 1 | Single Site Catalyst | Single Site Catalyst | Single Site Catalyst |
| short chain branches per 1000 carbons (SCB1) | 22.6 | 22.9 | 23.1 |
| The Second Ethylene Copolymer | | | |
| Catalyst Type 2 | Single Site Catalyst | Single Site Catalyst | Single Site Catalyst |
| weight fraction, $wt^2$ (wt%) | 0.50 | 0.50 | 0.51 |
| $\rho^2$ (g/cm$^3$) | 0.9124 | 0.9126 | 0.9121 |
| $I_2^2$ | 0.45 | 0.43 | 0.43 |
| Mn2 | 28173 | 28217 | 28278 |
| Mw2 | 61719 | 61798 | 61891 |
| Mw2/Mn2 | 2.2 | 2.2 | 2.2 |
| short chain branches per 1000 carbons (SCB2) | 18.81 | 18.64 | 19.02 |
| The Third Ethylene Copolymer | | | |
| Catalyst Type 3 | Single Site Catalyst | Single Site Catalyst | Single Site Catalyst |
| weight fraction, $wt^3$ (wt%) | 0.21 | 0.21 | 0.21 |
| $\rho^3$ (g/cm$^3$) | 0.9227 | 0.9205 | 0.913 |
| $I_2^3$ | 3.07 | 3.54 | 5.92 |
| Mn3 | 28364 | 27442 | 24433 |
| Mw3 | 76578 | 73763 | 64291 |
| Mw2/Mn2 | 2.7 | 2.7 | 2.6 |
| short chain branches per 1000 carbons (SCB3) | 10.5 | 12.3 | 20.1 |

Differential Scanning Calorimetry (DSC)

Primary melting peak (°C), melting peak temperatures (°C), heat of fusion (J/g) and crystallinity (%) listed in Table 2 were determined using differential scanning calorimetry (DSC) as follows: the instrument was first calibrated with indium; after the calibration, a polymer specimen is equilibrated at 0°C and then the temperature was increased to 200°C at a heating rate of 10°C/min; the melt was then kept isothermally at 200°C for five minutes; the melt was then cooled to 0°C at a cooling rate of 10°C/min and kept at 0°C for five minutes; the specimen was then heated to 200°C at a heating rate of 10°C /min. The DSC primary melting point/peak, secondary melting point/peak, heat of fusion and crystallinity are reported from the 2$^{nd}$ heating cycle.

Isothermal Crystallization using Differential Scanning Calorimetry (DSC)

The isothermal crystallization behavior of the inventive and comparative examples was studied by using differential scanning calorimetry (DSC) as follows: the instrument was first calibrated with indium; after the calibration, a polymer specimen is equilibrated at 0°C and then the temperature was increased to 150°C at a heating rate 20°C/min; the melt was then kept isothermally at 150°C for ten minutes; the melt was then cooled down to a specific temperature at a cooling rate of 70°C/min and kept at the specified temperature for at least 30 minutes. The isothermal crystallization of each of the inventive and comparative samples were studied at five selected temperatures near and below the primary melting peak of the corresponding sample. The endotherm profiles obtained at the specified temperatures are used to calculate the crystallization fraction profiles described by the Nakamura model as further described below.

The method established by Nakamura (see: Nakamura, K., K. Katayama, and T. Amano. "Some Aspects of Non-isothermal Crystallization of Polymers. II. Consideration of the Isokinetic Condition" in the Journal of Applied Polymer Science vol 17, no. 4 (1973): pages 1031-1041); Tanner (see Tanner, Roger I. "A Suspension Model for Low Shear Rate Polymer Solidification" in the Journal of Non-Newtonian Fluid Mechanics vol 102, no. 2 (2002): pages, 397-408 and Tanner, Roger I. "On the Flow of Crystallizing Polymers: I in Linear Regime" in the Journal of Non-Newtonian Fluid Mechanics vol. 112, no. 2-3 (2003): pages 251-268) and Qi (see Tanner, Roger I., and Fuzhong Qi. "A Comparison of Some Models for Describing Polymer Crystallization at Low Deformation Rates" in the Journal of Non-Newtonian Fluid

Mechanics vol. 127, no. 2-3 (2005): pages 131-141) was used to compute the "relative crystallinity fraction", the "$\alpha$", under quiescent variable temperature conditions as given by the following equation:

$$\alpha = \frac{X(t)}{X_f} = 1 - exp\left[-\left(\int_0^t K_N dt\right)^m\right]$$

where $m$ is the Avrami index to be determined from isothermal crystallization experiments and $K_N$ is the crystallization kinetic parameter related to the quiescent crystallization rate and is a function of temperature. For process modeling the differential form of the Nakamura relation is commonly used and it reads as follows:

$$\frac{D\alpha}{Dt} = \dot{R} = m(1-\alpha)[-ln(1-\alpha)]^{\frac{m-1}{m}} K_N(T)$$

where $K_N(T)$ is temperature dependent crystallization rate parameter and $\dot{R}$ is rate of crystallization.

The Avrami equations do not account for the secondary crystallization process and it is valid only within in the primary growth region corresponding to a relative crystallinity of from 20 to 80% (see for example: Derakhshandeh, Maziar, Golnar Mozaffari, Antonios K. Doufas, and Savvas G. Hatzikiriakos. "Quiescent Crystallization of Polypropylene: Experiments and Modeling" in the Journal of Polymer Science Part B: Polymer Physics vol. 52, no. 19 (2014): pages 1259-1275). A representative relative crystallinity fraction with time (measured at different temperatures) and corresponding Avrami plot for Inventive Example 2, are given in Figures 1 and 2, respectively. Similar Avrami analyses were performed on inventive ethylene copolymer compositions, Inventive Examples 3, 4, 5, 10 and 11, as well as for some comparative samples, Comp. Examples 1 and 2. As can be seen from Figure 1, the crystallization half time ($t_{1/2}$, in seconds, which is a measure of crystallization rate) is the time taken for half of the crystallization to develop (i.e. $\alpha$ = 50 %) and is a strong function of crystallization temperature. The crystallization half times and the Avrami indices ($m$) at appropriate crystallization temperatures are provided in Table 4.

TABLE 4

| Half-times. $t_{1/2}$ and Avrami Indices, $m$ at Different Isothermal Crystallization Temperatures | | | | | |
|---|---|---|---|---|---|
| Example No. | Melt Index, $I_2$ (g/10 min) | Density (g/cm$^3$) | T (°C) | Avrami Index (m) | $t_{1/2}$ (s) |
| Inventive 2 | 0.91 | 0.9023 | 93.0 | 2.38 | 39.5 |
| | | | 94.0 | 2.40 | 49.5 |
| | | | 94.5 | 2.36 | 60.5 |
| | | | 95.0 | 2.32 | 73.5 |
| | | | 96.0 | 2.29 | 87.5 |
| Inventive 3 | 1.08 | 0.9051 | 95.5 | 2.48 | 49.5 |
| | | | 97.0 | 2.39 | 101.5 |
| | | | 97.5 | 2.36 | 118.5 |
| | | | 98.0 | 2.33 | 129.5 |
| | | | 98.5 | 2.14 | 171.5 |
| Inventive 4 | 0.79 | 0.9025 | 92.0 | 2.11 | 194.5 |
| | | | 93.0 | 1.99 | 284.5 |
| | | | 93.5 | 1.76 | 346.5 |
| | | | 94.0 | 1.49 | 512.5 |
| Inventive 5 | 0.78 | 0.901 | 90.0 | 2.18 | 211.5 |
| | | | 91.0 | 1.95 | 300.5 |
| | | | 92.0 | 1.78 | 499.5 |
| | | | 92.5 | 1.55 | 650.0 |

(continued)

| Half-times. $t_{1/2}$ and Avrami Indices, *m* at Different Isothermal Crystallization Temperatures | | | | | |
|---|---|---|---|---|---|
| Example No. | Melt Index, $I_2$ (g/10 min) | Density (g/cm$^3$) | T (°C) | Avrami Index (m) | $t_{1/2}$ (s) |
| | | | 93.0 | 1.64 | 692.5 |
| | | | 106.0 | 1.79 | 1188.0 |
| Inventive 10 | 0.96 | 0.9043 | 104.0 | 2.16 | 332.0 |
| | | | 104.5 | 1.72 | 600.0 |
| | | | 105.0 | 1.73 | 806.0 |
| | | | 105.5 | 1.69 | 1376.0 |
| | | | 106.0 | 1.67 | 1950.0 |
| Inventive 11 | 1.57 | 0.9061 | 99.0 | 1.62 | 356.0 |
| | | | 99.5 | 1.66 | 389.0 |
| | | | 100.0 | 1.60 | 479.0 |
| | | | 100.5 | 1.40 | 649.0 |
| | | | 101.0 | 1.38 | 734.0 |
| Comp. 1 | 1.1 | 0.902 | 93.5 | 2.04 | 467.5 |
| | | | 94.0 | 1.99 | 578.5 |
| | | | 95.0 | 1.79 | 818.5 |
| | | | 96.0 | 2.01 | 1081.5 |
| | | | 97.0 | 1.82 | 1300.0 |
| Comp. 2 | 1 | 0.902 | 93.0 | 1.60 | 452.5 |
| | | | 94.0 | 1.68 | 606.5 |
| | | | 94.5 | 1.70 | 694.5 |
| | | | 95.0 | 1.57 | 1069.5 |
| | | | 96.0 | 1.55 | 1371.5 |

The Avrami index indicates crystal dimensionality and crystal growth shape of the nucleation process. Avrami indices of all the inventive compositions and the comparative examples are mostly close to 2, which means the crystal growth process is via formation of 2-dimensional discs.

The Hoffman-Lauritzen model, was used fit the isothermal crystallization data listed in Table 4 and the corresponding model constants are listed in Table 5. The equation of the Hoffman-Lauritzen model is as follows:

$$\left(\frac{1}{t_{1/2}}\right) = \left(\frac{1}{t_{1/2}}\right)_0 exp\left[-\frac{U^*}{R(T - T_\infty)}\right] exp\left[-\frac{C}{T\Delta Tf}\right]$$

where U* is the activation energy for segmental jump rate in polymers (i.e., 6280 J/mol), *R is* the universal gas constant (i.e., 8.314 J/mol°C), $\Delta T = T_m^0 - T$, $T_\infty = T_g$-30°C, f(=$2T/(T+T_m^0)$) is the correction factor to account for the drop in latent heat of fusion ($\Delta H_f$) as the temperature is decreased, and $T_m^0$ is equilibrium melting point of the polymer which we considered to be a constant value of 106°C and $T_g$ is glass transition temperature assumed to be a constant value of -40°C.

TABLE 5

| Hoffman-Lauritzen Fit Parameters on the Data of Table 4 | | | | |
|---|---|---|---|---|
| Example No. | $I_2$ (dg/min) | Density (g/cm$^3$) | Model Constant, C | Crystallization Rate Constant, $1/t_{1/2,0}$ (s-1) |
| Inventive 2 | 0.91 | 0.902 | 14994 | 66.9 |

(continued)

| Hoffman-Lauritzen Fit Parameters on the Data of Table 4 | | | | |
|---|---|---|---|---|
| Example No. | $I_2$ (dg/min) | Density (g/cm$^3$) | Model Constant, C | Crystallization Rate Constant, $1/t_{1/2,0}$ (s-1) |
| Inventive 3 | 1.08 | 0.905 | 19435 | 145.6 |
| Inventive 4 | 0.79 | 0.903 | 17957 | 61.2 |
| Inventive 5 | 0.78 | 0.901 | 15279 | 25.2 |
| Inventive 10 | 0.96 | 0.904 | 7493 | 7.3 |
| Inventive 11 | 1.57 | 0.906 | 10856 | 7.0 |
| Comp. 1 | 1.10 | 0.902 | 5430 | 1.1 |
| Comp. 2 | 1.00 | 0.902 | 8996 | 3.5 |

As shown by the data of Table 5, the Inventive ethylene copolymer compositions (Inv. Examples 2, 3, 4, 5, 10 and 11) have increased crystallization rate constants relative to comparative very low density polyethylenes (Comp. Examples 1 and 2) having similar density.

Non-isothermal Crystallization using Differential Scanning Calorimetry (DSC)

The non-isothermal crystallization behavior of the inventive and comparative examples was studied by using differential scanning calorimetry (DSC) as follows: the instrument was first calibrated with indium; after the calibration, a polymer specimen is equilibrated at 0°C and then the temperature was increased to 200°C at a desired heating rate 1 or 5 or 10 or 20 or 40°C/min; the melt was then kept isothermally at 200°C for five minutes; the melt was then cooled to 0°C at a desired cooling rate of 1 or 5 or 10 or 20 or 40°C/min and kept at 0°C for five minutes; the specimen was then heated to 200°C at a specified heating rate of 1 or 5 or 10 or 20 or 40°C/min. The onset of crystallization temperature ($T_{onset}$) and peak crystallization temperature ($T_{max}$) are reported from cooling cycle carried out at the corresponding cooling rate. The non-isothermal crystallization kinetics were analyzed according to Seo's method (see: Seo Y; "Non-isothermal Crystallization Kinetics of Polytetrafluoroethylene" in Polym. Eng. & Sci. 2000; v.40, pages: 1293-7).

Table 6 provides parameters such as the onset of crystallization ($T_{onset}$) and the maximum crystallization temperature ($T_{max}$) determined at cooling rates 1, 5, 10, 20 and 40°C/min for inventive and comparative examples.

TABLE 6

| Non-Isothermal Crystallization Parameters | | | | | |
|---|---|---|---|---|---|
| Resin | $I_2$ (dg/min) | Density (g/cm$^3$) | Cooling rate, β (°C/min) | $T_{onset}$ | $T_{max}$ (°C) |
| Inventive 2 | 0.91 | 0.902 | 1 | 100.0 | 94.9 |
| | | | 5 | 95.8 | 90.0 |
| | | | 10 | 93.6 | 88.1 |
| | | | 20 | 90.3 | 86.6 |
| | | | 40 | 90.0 | 84.2 |
| Inventive 3 | 1.08 | 0.905 | 1 | 104.0 | 97.2 |
| | | | 5 | 98.0 | 92.9 |
| | | | 10 | 96.0 | 91.0 |
| | | | 20 | 93.0 | 89.4 |
| | | | 40 | 92.0 | 87.1 |
| Inventive 4 | 0.79 | 0.903 | 1 | 99.0 | 90.5 |
| | | | 5 | 93.0 | 86.5 |
| | | | 10 | 90.0 | 84.8 |
| | | | 20 | 88.0 | 82.8 |
| | | | 40 | 87.0 | 81.0 |

(continued)

| Non-Isothermal Crystallization Parameters | | | | | |
|---|---|---|---|---|---|
| Resin | $I_2$ (dg/min) | Density (g/cm$^3$) | Cooling rate, β (°C/min) | $T_{onset}$ | $T_{max}$ (°C) |
| Inventive 5 | 0.78 | 0.901 | 1 | 92.9 | 88.2 |
| | | | 5 | 88.5 | 84.2 |
| | | | 10 | 86.5 | 82.7 |
| | | | 20 | 84.8 | 81.0 |
| | | | 40 | 84.4 | 79.1 |
| Comp. 1 | 1.10 | 0.902 | 1 | 90.0 | 85.2 |
| | | | 5 | 87.0 | 81.8 |
| | | | 10 | 85.0 | 80.7 |
| | | | 20 | 84.0 | 79.5 |
| | | | 40 | 82.0 | 78.0 |
| Comp. 2 | 1.00 | 0.902 | 1 | 91.8 | 87.2 |
| | | | 5 | 90.0 | 84.6 |
| | | | 10 | 88.0 | 83.1 |
| | | | 20 | 84.9 | 81.7 |
| | | | 40 | 84.0 | 79.3 |

The data given in Table 6 (together with Figure 3) shows that the main differences between the inventive and comparative examples are observed in the in the onset ($T_{onset}$) and peak ($T_{max}$) crystallization temperatures, related to the values of the associated enthalpies, as well as in peak broadening effects. It is clear that the onset temperatures of all the ethylene copolymer compositions of Inventive Examples, 2, 3, 4, and 5 at any given cooling rate are higher than those of the comparative resins, Comparative Examples 1 and 2. This indicates that for the Inventive Examples, the supercooling needed for the crystallization to occur was less than that required for a comparative resin having a similar density. Similarly, the data indicate that for the Inventive Examples, the crystallization occurred at a faster rate, relative to the comparative resin having a similar density (because the onset of crystallization occurred at a higher temperature for each cooling rate examined).

Without wishing to be bound by theory, these differences may be attributed to a nucleation effect, brought about by the presence of a higher density fraction in the inventive ethylene copolymer compositions. This higher density fraction may be associated with the second or in some cases the third ethylene copolymer components present in the Inventive Examples, components which are not present in Comparative Examples 1 and 2, which are a single component very low density resins.

Figure 3 shows the exotherm profiles of Inventive Examples 2, 3, and 4 as well as of that of Comparative Examples 1 and 2, each at a cooling rate of 10°C/min. It is evident from Figure 3 that the ethylene copolymer compositions of the Inventive Examples crystallize at a faster rate at a given cooling rate of 10°C/min than does the comparative resin (because their onset and peak crystallization temperatures are higher than that of the comparative resin).

Figure 4 shows a linear variation of the maximum crystallization temperature ($T_{max}$) as it changes as a function of the logarithm of the cooling rate ($\beta$). The predicted behavior is observed in all cases to indicate that Seo's method described above is quite satisfactory. Figure 4 shows that as there is less time available for crystallization at higher cooling rates, the $T_{max}$ decreased as expected (i.e. the $T_{max}$ decreased as the cooling rate ($\beta$) increased). Figure 4, also shows, that the $T_{max}$ values of the ethylene copolymer compositions of the present disclosure (Inventive Examples 2, 3, and 4) were higher than that of comparative resins having a similar density (Comp. Examples 1 and 2) at the same cooling rate (due to the faster crystallization rates associated with the Inventive Examples).

For the non-isothermal crystallization process, the activation energy of crystallization was derived from the Kissinger equation in the following form (see: Kissinger, Homer E. "Variation of Peak Temperature with Heating Rate in Differentiated Thermal Analysis" in Journal of Research of the National Bureau of Standards, vol. 57 (1956), page 217; and Kim, Jihun et. al. "Nonisothermal Crystallization Behaviors of Nanocomposites Prepared by In Situ Polymerization of High-Density Polyethylene on Multiwalled Carbon Nanotubes" in Macromolecules vol. 43 (2010), page 10545):

$$\frac{d[\ln(\beta/T_{max}^2)]}{d(1/T_{\max})} = -\frac{E_a}{R}$$

where $R$ is the ideal gas constant (8.3145 J $mol^{-1}$ $K^{-1}$) and $E_a$ is the activation energy (enthalpy change for the crystallization), $T_{max}$ is as above, and $\beta$ is the cooling rate as above. For the non-isothermal crystallization process, the activation energy of crystallization was derived from the Kissinger equation described above by plotting $d[\ln(\beta/T_{max}^2)]$ vs. $d(1/T_{max})$ and by multiplying the slope of the line with ideal gas constant. A representative plot to calculate the activation energy based on the Kissinger method describing the non-isothermal crystallization process of Inventive Example 2 is provided in Figure 5.

The data in Table 7 represent the calculated activation energy values ($E_a$) for various ethylene copolymers of the present disclosure (Inventive Examples 2, 3, and 4) as well comparative resins having a similar density, Comparative Examples 1 and 2. A person skilled in the art will recognize that the activation energy values for the Inventive Examples 2, 3, and 4 are lower than for Comparative Examples 1 and 2.

TABLE 7

| The Activation Energy (enthalpy change for the crystallization, $E_a$) | | | |
|---|---|---|---|
| Example No. | $I_2$ (dg/min) | Density ($g/cm^3$) | Ea (kJ/mol) |
| Inventive 2 | 0.91 | 0.902 | 390 |
| Inventive 3 | 1.08 | 0.905 | 417 |
| Inventive 4 | 0.79 | 0.903 | 421 |
| Comp. 1 | 1.10 | 0.902 | 550 |
| Comp. 2 | 1.00 | 0.902 | 501 |

Without wishing to be bound by theory, the lower activation energy found for the Inventive Examples indicates that the ethylene copolymer compositions of the present disclosure, which comprise a first, second and a third ethylene copolymer component (where the second and third ethylene copolymer components provide similar or higher density fractions relative to a first ethylene copolymer component) have considerably increased the crystallization speeds/kinetics relative to a single component comparative resin. The increased crystallization rates may be due to the fact that these second and/or third ethylene copolymer components may act as nucleation sites for crystallization.

Atomic Force Microscopy (AFM) Hot Stage

The crystallization kinetics and morphology of a representative Inventive Example as well as a Comparative Example were studied utilizing atomic force microscopy (AFM) operating in the tapping mode with a phase imaging function. This technique was carried out using a Bruker Multi-Mode atomic force microscope equipped with a high temperature heater which controls the temperature to within ±0.25°C of the set point. The AFM was operated in tapping mode using a silicon probe (force constant 21-98 N/m). The scan rate was 1 Hz and the scan region contained 512 by 512 lines. For each polymer sample, a compression molded plaque was prepared and a small square having dimensions of about 5 mm per side was cut out and then mounted directly, without adhesive, on a 1 cm diameter stainless steel sample puck. After the puck was mounted on the AFM stage (held in place magnetically), the stage temperature was increased rapidly to 200°C and held for five minutes to erase any thermal history; the melt was then cooled quickly to 105°C. The 2-D height and 3-D topographical images of Inventive Example 2 and Comparative Examples 1 and 2 were obtained, at 25, 45 and 75 minutes, and using these images (note: the AFM procedure provides images of 40μm × 40μm in size for a 3-dimension topography format which is enhanced in the so called "wire-height" mode at a resolution of 256 × 256 pixels, not shown) a quantitative assessment of the surface roughness was indicated using the following surface roughness parameters: the Surface Area Difference (%); the Average Surface Roughness (Ra); and the Root Mean Square Surface Roughness (Rq). Without wishing to be bound by theory, the crystal growth (e.g. the surface morphology) may be quantified by the aforementioned surface roughness parameters, including the Surface Area Difference (%) (i.e., difference between the analyzed region's three-dimensional surface area and its two-dimensional, footprint area), the Average Surface Roughness (Ra), and Root Mean Square Surface Roughness (Rq). The surface roughness parameters were analyzed with the "Nanoscope" software and the resulting data is provided in Table 8.

TABLE 8

| The Percent (%) Surface Difference Measured at a Hot Stage Temperature of 105°C | | | | | | |
|---|---|---|---|---|---|---|
| Example No. | Melt Index, $I_2$ | Density | Time | % Surface Area Difference | Ra (nm) | Rq (nm) |
| Inventive 2 | 0.91 | 0.902 | 25 | 2.4 | 78.3 | 85.3 |
| | | | 45 | 2.8 | 85.5 | 111.0 |
| | | | 75 | 5.0 | 99.4 | 138.0 |
| Comp. 1 | 1.10 | 0.902 | 25 | 1.3 | 28.0 | 35.0 |
| | | | 45 | 2.5 | 31.9 | 40.7 |
| | | | 75 | 3.5 | 67.4 | 83.4 |
| Comp. 2 | 1.00 | 0.902 | 25 | 1.1 | 55.5 | 97.8 |
| | | | 45 | 1.0 | 79.0 | 107.0 |
| | | | 75 | 1.8 | 91.3 | 117.0 |

The data in Table 8 shows that the Inventive Example 2, generally has a larger amount of crystal growth, as indicated by the higher % surface area difference, the higher average surface roughness (Ra), and the higher root mean square surface roughness (Rq) values when compared to Comparative Examples 1 and 2. The data given in Table 8, then, also demonstrates that for an ethylene copolymer composition of the present disclosure, the rates of crystal growth (an indicator of crystallization speed) is higher than that observed for a comparative plastomeric resin having a similar density.

Blown Film (Multilayer)

Multilayer blown film was produced on a 9-layer line commercially available from Brampton Engineering (Brampton ON, Canada). The structure of the 9-layer films produced is shown in Table 9. Layer 1, the sealant layer, contained either an inventive ethylene copolymer composition made according to the present disclosure, a blend of the same with a LLDPE material, a comparative plastomeric resin, or a blend of the same with a LLDPE material. Layer 1 was generally formulated in the following manner: 91.5 wt% of the sealant resin under examination, 2.5 wt% of an antiblock masterbatch, 3 wt% of a slip masterbatch and 3 wt% of a processing aid masterbatch, such that sealant layer 1 contained 6250 ppm of antiblock (silica (diatomaceous earth)), 1500 ppm of slip (eurcamide) and 1500 ppm of processing aid (fluoropolymer compound); the additive masterbatch carrier resins were a LLDPE, with melt index ($I_2$) of about 2 g/10min and a density of about 0.918 g/cm$^3$. With the forgoing details in hand, 91.5 wt% of layer 1 contained one of the following resins as the sealant resin under examination:

a) 100 wt% of Inventive Example 2;
b) 100 wt% of Inventive Example 3,
c) a blend of Inventive Example 2 with SCLAIR® FP120-C in a blend weight ratio of from 20%:80%;
d) a blend of Inventive Example 3 with SCLAIR FP120-C in a blend weight ratio of from 20%:80%;
e) 100 wt% of Queo 0201, a comparative resin (Comp. Example 1) having a similar density to Inventive Examples 1 and 2;
f) 100 wt% of AFFINITY PL 1880, a comparative resin (Comp. Example 2) having a similar density to Inventive Examples 1 and 2;
g) a blend of Queo 0201 with SCLAIR FP120-C in a blend weight ratio of from 20%:80%; or
h) a blend of Affinity PL 1880 with SCLAIR FP120-C in a blend weight ratio of from 20%:80%.

SCLAIR FP120-C is an ethylene/1-octene copolymer resin available from NOVA Chemicals Corporation having a density of about 0.920 g/cc and a melt index, $I_2$ of about 1 dg/min.

Layer 1 was the insider layer, i.e. inside the bubble, as the multilayer film was produced on the blown film line. The total thickness of the 9 layer film was held constant at 3.5-mil; the thickness of layer 1 was 0.385 mil (9.8 $\mu$m) i.e. 11% of 3.5 mil (see Table 9). Layers 2, 3, and 7 contained SURPASS® FPs016-C, a LLDPE resin available from NOVA Chemicals Corporation having a density of about 0.916 g/cm$^3$ and a melt index, $I_2$ of about 0.65 g/10min. Layers 4, 5, 8 contained a tie resin, which contained 80 wt% of FPs016-C and 20 wt% of BYNEL® 41E710, a maleic anhydride grafted LLDPE, available from DuPont Packaging & Industrial Polymers having a density of 0.912 g/cm$^3$ and a melt index ($I_2$) of 2.7 g/10min. Layers 5 and 9 contained a nylon resin, ULTRAMID® C40 L (polyamide 6/66) available from BASF Corporation having a melt index ($I_2$) of 1.1 g/10min.

Note: Resin blends were prepared by placing the target weight percentages of each component into a batch mixer and tumble blending for at least 15 minutes. Finished blends were fed directly into an extruder hopper as a dry blend for film layer formation, such as for example, for the No. 1 (the sealant layer) formation.

The multilayer die technology consisted of a pancake die, FLEX-STACK Coextrusion die (SCD), with flow paths machined onto both sides of a plate, the die tooling diameter was 6.3-inches, in this disclosure a die gap of 85-mil was used consistently, film was produced at a Blow-Up-Ratio (BUR) of 2.5 and the output rate of the line was held constant at 250 lb/hr. The specifications of the nine extruders were as follows: screws 1.5-in diameter, 30/1 length to diameter ratio, 7-polyethylene screws with single flights and Maddock mixers, 2-Nylon screws. All extruders were air cooled, equipped with 20-H.P. motors and all extruders were equipped with gravimetric blenders. The nip and collapsing frame included a Decatex horizontal oscillating haul-off and Pearl cooling slats just below the nips. The line was equipped with a turret winder and oscillating slitter knives. Table 10 summarizes the temperature settings used. All die temperatures were maintained at a constant 480°F, i.e. layer sections, mandrel bottom, mandrel, inner lip and outer lip.

The sealing properties of the nine layer blown films (having a thickness of 3.5 mil) made as described above are provided in Tables 11A and 11B. The hot tack and cold seal tests (hot track and cold seal profiles) of the nine layer blown films are shown in Figures 6 and 7.

TABLE 9

| Multilayer Blown Film Structure | | | | | |
|---|---|---|---|---|---|
| Layer Number | wt. % of the 9-layer structure | Materials and Weight% in Each Layer | | | |
| | | Material A | | Material B | |
| | | Material | wt. % | Material | wt. % |
| Layer 9 | 11 | C40 L | 100 | | |
| Layer 8 | 11 | FPs016-C | 80 | Bynel 41E710 | 20 |
| Layer 7 | 11 | FPs016-C | 100 | | |
| Layer 6 | 11 | FPs016-C | 80 | Bynel 41E710 | 20 |
| Layer 5 | 11 | C40 L | 100 | | |
| Layer 4 | 11 | FPs016-C | 80 | Bynel 41E710 | 20 |
| Layer 3 | 11 | FPs016-C | 100 | | |
| Layer 2 | 11 | FPs016-C | 100 | | |
| Layer 1 (sealant layer) | 11 | a) Inv. 2;<br>b) Inv 3;<br>c) Inv. 2 / LLDPE blend;<br>d) Inv. 3 / LLDPE blend;<br>e) Comp. 1;<br>f) Comp. 2;<br>g) Comp. 1 / LLDPE blend; or<br>h) Comp. 2 / LLDPE blend | 91.5 | Additive Master-batches | 8.5 |

TABLE 10

| Multilayer Film Fabrication Conditions | | | | | | | |
|---|---|---|---|---|---|---|---|
| Extruder/Layer | All Temperatures in °F | | | | | | |
| | Feed Throat | Barrel Zone 1 | Barrel Zone 2 | Barrel Zone 3 | Barrel Zone 4 | Screen | Adaptor |
| Layer 9 (outside of bubble) | 100 | 455 | 480 | 480 | 480 | 480 | 480 |
| Layer 8 | 75 | 360 | 420 | 410 | 410 | 410 | 410 |
| Layer 7 | 75 | 360 | 420 | 410 | 410 | 410 | 410 |
| Layer 6 | 75 | 360 | 420 | 410 | 410 | 410 | 410 |
| Layer 5 | 100 | 455 | 480 | 480 | 480 | 480 | 480 |

(continued)

| Multilayer Film Fabrication Conditions | | | | | | | |
|---|---|---|---|---|---|---|---|
| Extruder/Layer | All Temperatures in °F | | | | | | |
| | Feed Throat | Barrel Zone 1 | Barrel Zone 2 | Barrel Zone 3 | Barrel Zone 4 | Screen | Adaptor |
| Layer 4 | 75 | 360 | 420 | 410 | 410 | 410 | 410 |
| Layer 3 | 75 | 360 | 420 | 410 | 410 | 410 | 410 |
| Layer 2 | 75 | 360 | 420 | 410 | 410 | 410 | 410 |
| Layer 1 (inside of bubble) | 75 | 360 | 420 | 410 | 410 | 410 | 410 |

TABLE 11A

| Sealant Performance of the Inventive and Comparative Resins when used as Sealant Layer in a 9-layer all PE Film Structure | | | | | | |
|---|---|---|---|---|---|---|
| Film Layer 1 | VFFS Onset Temperature (°C)¥ | S.I.T. @ 8.8N Seal Strength (°C) | Cold Seal Strength (N) | Hot Tack Onset Temp. @ 1.0N (°C) | Hot Tack Window at 5 N, HTW (°C) | Maximum Hot Tack Strength (N) |
| 100% Inventive Example or 100% Comparative Example in Layer 1 | | | | | | |
| Inventive 2 | 110 | 83 | 57 | 77 | 49 | 8 |
| Inventive 3 | 110 | 82 | 57 | 76 | 49 | 8 |
| Comp. 1 | 110 | 88 | 57 | 80 | 48 | 7 |
| Comp. 2 | 110 | 87 | 55 | 78 | 51 | 9 |
| 20:80 Blend of Inv. Example or Comp. Example with FP-120-C in Layer 1 | | | | | | |
| Inventive 2 | 120 | 102 | 57 | 92 | 52 | 13 |
| Inventive 3 | 120 | 102 | 55 | 93 | 48 | 12 |
| Comp. 1 | 120 | 100 | 55 | 87 | 53 | 9 |
| Comp. 2 | 120 | 101 | 57 | 96 | 48 | 14 |
| ¥ Determined as described below in "Vertical Form Fill and Seal" Testing | | | | | | |

The data provided above in Table 11A, as well as in Figures 6 and 7 serve to show that when used in a sealant layer of a multilayer film structure, the Inventive Examples 2 and 3 have comparable sealing properties (e.g. seal initiation temperature, cold seal strength, hot tack window and maximum hot tack strength) relative to Comparative Example 1 and 2 which are resins having similar density and melt index, $I_2$. This trend holds true for multilayer film structures when the sealant consists of either un-blended very low density material, or a very low density material which has been blended with a LLDPE.

Vertical Form Fill and Seal (VFFS) Testing

This procedure describes how to determine the onset seal temperature for bags made on a ROVEMA Vertical Form Fill and Seal (VFFS) machine. This test serves as a comparative tool for the evaluation of sealant resins. Multilayer blown films produced on a 9-layer line (as described above and in Table 8) were used to make the bags needed for this evaluation. Bags having dimensions of 200 mm x 150 mm and filled with just enough water to create a head space for Haug vacuum pressure testing (ca. 100 mil) were produced at a fixed seal bar temperature using the following four general conditions: low seal time and low pressure; low seal time and high pressure; high seal time and low pressure; and high seal time and high pressure (see Table 11B below). A total of 20 bags were produced at each of the four conditions at a specific temperature for Haug vacuum leak testing. The bags produced at each condition were tested for leaks (by examination of whether bubbles were evolved in a water bath) at 15 mm Hg pressure for 30 seconds. To be considered a success in the present testing procedure, a minimum of 18 bags out of the 20 bags tested must pass the Haug vacuum leak test (that is, have no observable leak) for all four conditions at a specific seal bar temperature. In this way the Haug testing determines a

so called onset of seal temperature on the VFFS machine (the VFFS onset temperature in Table 11A). In this procedure, an initial aspirational sealing temperature of 100°C was used to assess bag success/failure at each of the four conditions and then the sealing temperature was increased by 5°C and the test was performed again to assess bag success/failure at each of the four conditions. The lowest sealing temperature explored for which 18 bags of 20 bags tested maintained a seal under all four conditions is the VFFS onset temperature reported in Table 11A.

TABLE 11B

| VFFS Testing | | | | |
|---|---|---|---|---|
| Operating Conditions | #1 | #2 | #3 | #4 |
| | Low seal time and low pressure | Low seal time and high pressure | High seal time and low pressure | High seal time and high pressure |
| Machine Speed (bags/min) | 20 | 20 | 20 | 20 |
| Bag Length (mm) | 200 | 200 | 200 | 200 |
| Bag Width (mm) | 150 | 150 | 150 | 150 |
| Bag Type | Fin seal pillow pack | Fin seal pillow pack | Fin seal pillow pack | Fin seal pillow pack |
| Seal Time (ms) | 50 | 50 | 500 | 500 |
| Seal Pressure Level (%) | 30 | 100 | 30 | 100 |
| Air Pressure (psi) | 30 | 100 | 30 | 100 |
| Belt Pressure (psi) | 15 | 50 | 15 | 50 |

Blown Film (Monolayer)

Selected inventive ethylene copolymer compositions of the present disclosure, Inventive Examples 4, and 5, as well as a comparative resin, Comparative Example 1, were blown into monolayer film using a Gloucester Blown Film Line, with a single screw extruder, having 2.5-inch (6.45 cm) barrel diameter, 24/1 L/D (barrel Length/barrel Diameter) equipped with: a barrier screw; a low pressure 4 inch (10.16 cm) diameter die with a 35 mil (0.089 cm) die gap, and; a Western Polymer Air ring. Films were similarly blown from blends made using either Inventive Example 3 or Comparative Example 1 in a blend with differing amounts of LLDPE material (SCLAIR FP120-C). Resin blends were prepared by placing the target weight percentages of each component into a batch mixer and tumble blending for at least 15 minutes. Finished blends were fed directly into the extruder hopper as a dry blend. The die was coated with polymer processing aid (PPA) by spiking the line with a high concentration of PPA masterbatch to avoid melt fracture. The extruder was equipped with the following screen pack: 20/40/60/80/20 mesh. Blown films, of about 1.0 mil (25.4 μm) thick and 2.0 mil (50.8 μm) thick, at 2.5:1 Blow Up Ratio (BUR), were produced at a constant output rate of 100 lb/hr (45.4 kg/hr) by adjusting extruder screw speed; and the frost line height was maintained at 16-18 inch (40.64-45.72 cm) by adjusting the cooling air. The monolayer 1-mil films produced with a blow-up ratio (BUR) of 2.5 were used for obtaining the physical properties of the films. The monolayer 2-mil films (BUR = 2.5) were used for obtaining the cold-seal and hot tack profiles. The sealing properties of the monolayer blown films made as described above are provided in Table 12. The physical properties of the monolayer blown films made as described above are provided in Tables 13A and 13B.

TABLE 12

| Sealant Performance of Monolayer Blown Film | | | | | | | |
|---|---|---|---|---|---|---|---|
| Resin | VLDPE Density ($g/cm^3$) | VLDPE Melt Index, $I_2$ (g/10min) | S.I.T. @ 8.8N Seal Strength (°C) | Cold Seal Strength (N) | Hot Tack Onset Temp. @ 1.0N (°C) | Hot Tack Window at 2.5 N, HTW (°C) | Avg. Maximum Hot Tack Strength (N) |
| Inv. 4 | 0.903 | 0.79 | 89 | 23 | 88 | 21 | 4 |
| Inv. 5 | 0.901 | 0.78 | 88 | 23 | 86 | 24 | 4 |
| Comp. 2 | 0.902 | 1.00 | 87 | 23 | 84 | 17 | 3 |

(continued)

| Sealant Performance of Monolayer Blown Film | | | | | | | |
|---|---|---|---|---|---|---|---|
| Resin | VLDPE Density ($g/cm^3$) | VLDPE Melt Index, $I_2$ (g/10min) | S.I.T. @ 8.8N Seal Strength (°C) | Cold Seal Strength (N) | Hot Tack Onset Temp. @ 1.0N (°C) | Hot Tack Window at 2.5 N, HTW (°C) | Avg. Maximum Hot Tack Strength (N) |
| 20 wt% Inv. 3 / 80 wt% SCLAIR FP120-C | 0.905 | 1.08 | 107 | 24 | 91 | 21 | 3.5 |
| 30 wt% Inv. 3 / 70 wt% SCLAIR FP120-C | 0.905 | 1.08 | 104 | 24 | 88 | 21 | 4 |
| 70 wt% Inv. 3 / 30 wt% SCLAIR FP120-C | 0.905 | 1.08 | 88 | 23 | 80 | 30 | 4 |
| 20 wt% Comp. 2 / 80 wt% SCLAIR FP120-C | 0.902 | 1.00 | 102 | 25 | 90 | 23 | 4 |
| 30 wt% Comp. 2 / 70 wt% SCLAIR FP120-C | 0.902 | 1.00 | 97 | 24 | 87 | 23 | 3.5 |
| 70 wt% Comp. 2 / 30 wt% SCLAIR FP120-C | 0.902 | 1.00 | 93 | 22 | 82 | 32 | 4 |

The data provided above in Table 12, serves to show that when used in a monolayer film, the Inventive Examples 4 and 5 provide comparable sealing properties (e.g. seal initiation temperature, cold seal strength, hot tack window and maximum hot tack strength) relative to Comparative Example 2 which is a resin having similar density and melt index, $I_2$. The data provided above in Table 12, also shows that when used as a blend component (together with a LLDPE material) in a monolayer film, the Inventive Example 3 provides comparable sealing properties (e.g. seal initiation temperature, cold seal strength, hot tack window and maximum hot tack strength) relative to Comparative Example 2 which is a resin having similar density and melt index, $I_2$.

TABLE 13A

| Physical Properties of Monolayer Blown Film | | | |
|---|---|---|---|
| Film properties | Inv. 4 | Inv. 5 | Comp. 2 |
| Dart Impact (g/mil) | 528 | 717 | 371 |
| Slow Puncture - Lube/Tef (J/mm) | 115 | 94 | 125 |
| Tear - MD (g/mil) | 135 | 280 | 179 |
| Tear - TD (g/mil) | 359 | 609 | 395 |
| 1% Sec Modulus - MD (Mpa) | 115.2 | 151.1 | 89.2 |
| 1% Sec Modulus - TD (Mpa) | 118.1 | 159.5 | 87.8 |
| 2% Sec Modulus - MD (Mpa) | 106.3 | 139.2 | 82.4 |
| 2% Sec Modulus - TD (Mpa) | 107.7 | 146.2 | 81.3 |

(continued)

| Physical Properties of Monolayer Blown Film | | | |
|---|---|---|---|
| Tensile Elong at Yield - MD (%) | 11 | 11 | 11 |
| Tensile Elong at Yield - TD (%) | 10 | 10 | 11 |
| Gloss at 45º | 79.3 | 68 | 83 |
| Haze (%) | 3 | 6.5 | 2.5 |

TABLE 13B

| Physical Properties of Monolayer Blown Film | | | | | | |
|---|---|---|---|---|---|---|
| Film Properties | 20 wt% Inv. 3 / 80 wt% SCLAIR FP120-C | 30 wt% Inv. 3 / 70 wt% SCLAIR FP120-C | 70 wt% Inv. 3 / 30 wt% SCLAIR FP120-C | 20 wt% Comp. 2 / 80 wt% SCLAIR FP120-C | 30 wt% Comp. 2 / 70 wt% SCLAIR FP120-C | 70 wt% Comp. 2 / 30 wt% SCLAIR FP120-C |
| Dart Impact (g/mil) | 698 | 662 | 562 | 444 | 658 | 529 |
| Slow Puncture - Lube/Tef (J/mm) | 99 | 98 | 127 | 100 | 108 | 132 |
| Tear - MD (g/mil) | 265 | 265 | 200 | 366 | 309 | 229 |
| Tear - TD (g/mil) | 524 | 528 | 418 | 613 | 555 | 453 |
| 1% Sec Modulus - MD (Mpa) | 173.3 | 165.3 | 154.2 | 174.9 | 126 | 119.1 |
| 1% Sec Modulus - TD (Mpa) | 177.5 | 171.3 | 172.4 | 191.2 | 172.4 | 132.1 |
| 2% Sec Modulus - MD (Mpa) | 160.4 | 152.7 | 151.3 | 161.3 | 151.3 | 116.6 |
| 2% Sec Modulus - TD (Mpa) | 162.4 | 157.8 | 158.3 | 175.2 | 158.3 | 121.7 |
| Tensile Elong at Yield - MD (%) | 10 | 10 | 11 | 11 | 11 | 11 |
| Tensile Elong at Yield - TD (%) | 10 | 10 | 10 | 10 | 10 | 10 |
| Gloss at 45º | 57 | 60 | 68 | 60 | 64 | 77 |
| Haze (%) | 9.3 | 7.9 | 5.3 | 8.6 | 7.1 | 3.7 |

The data provided in Tables 13A and 13B, together with Figures 8 and 9 demonstrates that representative ethylene copolymer compositions of the present disclosure, Inventive Examples 3, 4 and 5 provide an excellent balance of stiffness (e.g. 1% secant modulus in the MD direction) and toughness (e.g. dart impact) properties, even when blended with a LLDPE resin.

When considering together, all of the above data demonstrates that the ethylene copolymer compositions of the present disclosure have sealing properties which are comparable to commercially available very low density polyethylene (VLDPE), while also providing rapid crystallization rates, and an excellent balance of stiffness and toughness properties.

INDUSTRIAL APPLICABILTY

Provided are ethylene copolymer compositions having a density of from 0.860 to 0.910 g/cm$^3$ and which comprise a first ethylene copolymer, a second ethylene copolymer and a third ethylene copolymer. The ethylene copolymer compositions have high rates of crystallization and can be converted into blown film having good sealability as well as a balance of toughness and stiffness.

## Claims

**1.** An ethylene copolymer composition comprising:

(i) from 15 to 75 weight percent of a first ethylene copolymer having a density determined using ASTM D792-13, November-1-2013; of from 0.855 to 0.913 g/cm$^3$; a molecular weight distribution, $M_w/M_n$ of from 1.7 to 2.7; and a

melt index, $I_2$ of from 0.1 to 10 g/10min; determined using ASTM D1238; August-1-2013; at 190°C, using a weight of 2.16 kg
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

2. The ethylene copolymer composition of claim 1 wherein the number of short chain branches per thousand carbon atoms in the first ethylene copolymer (SCB1) and the number of short chain branches per thousand carbon atoms in the second ethylene copolymer (SCB2) satisfy the following condition: SCB1 / SCB2 > 0.8; the number of SCB is determined as described in the description.

3. The ethylene copolymer composition of claim 1 or 2 wherein one or more of the following applies: (a) the density of the second ethylene copolymer is equal to or greater than the density of the first ethylene copolymer; (b) the density of the third ethylene copolymer is equal to or greater than the density of the second ethylene copolymer; and (c) the ethylene copolymer composition has a density of below 0.910 g/cm$^3$.

4. The ethylene copolymer composition of any one of claims 1 to 3 comprising from 10 to 40 weight percent of the third ethylene copolymer, and optionally from 15 to 40 weight percent of the third ethylene copolymer.

5. The ethylene copolymer composition of any one of claims 1 to 4 wherein the first ethylene copolymer and the second ethylene copolymer each have a molecular weight distribution, $M_w/M_n$ of $\leq$ 2.3; and/or wherein the third ethylene copolymer has a molecular weight distribution, $M_w/M_n$ of > 2.3.

6. The ethylene copolymer composition according to any one of claims 1 to 5 wherein the first ethylene copolymer and the second ethylene copolymer are each made with a single site catalyst system comprising a metallocene catalyst having the formula (I):

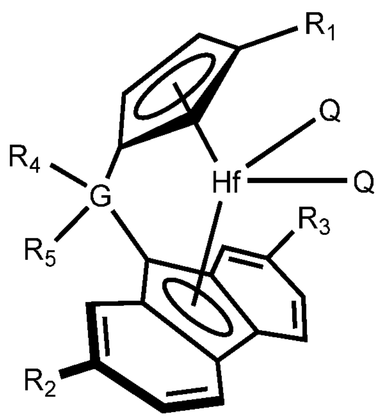

(I)

wherein G is a group 14 element selected from carbon, silicon, germanium, tin or lead; $R_1$ is a hydrogen atom, a $C_{1-20}$ hydrocarbyl radical, a $C_{1-20}$ alkoxy radical or a $C_{6-10}$ aryl oxide radical; $R_2$ and $R_3$ are independently selected from a hydrogen atom, a $C_{1-20}$ hydrocarbyl radical, a $C_{1-20}$ alkoxy radical or a $C_{6-10}$ aryl oxide radical; $R_4$ and $R_5$ are independently selected from a hydrogen atom, an unsubstituted $C_{1-20}$ hydrocarbyl radical, a substituted $C_{1-20}$ hydrocarbyl radical, a $C_{1-20}$ alkoxy radical or a $C_{6-10}$ aryl oxide radical; and Q is independently an activatable leaving group ligand.

**7.** The ethylene copolymer composition according to any one of claims 1 to 6 wherein the first ethylene copolymer and the second ethylene copolymer each have a composition distribution breadth index, $CDBI_5o$ of at least 75 weight percent; and/or wherein the third ethylene copolymer has a composition distribution breadth index, $CDBI_{so}$ of less than 75 weight percent; the $CDBI_{50}$ is determined as described in the description.

**8.** The ethylene copolymer composition according to any one of claims 1 to 7 wherein one or both of the following apply: (a) the ethylene copolymer composition has at least 3 mole percent of one or more than one alpha-olefin, and optionally from 3 to 12 mole percent of one or more than one alpha-olefin; and (b) the ethylene copolymer composition has from 3 to 12 mol percent of 1-octene.

**9.** The ethylene copolymer composition according to any one of claims 1 to 8 having from 0.050 to 3.5 ppm of hafnium.

**10.** The ethylene copolymer composition of any one of claims 1 to 9 having a molecular weight distribution, Mw/Mn of from 2.0 to 4.0; and/or a crystallization rate constant, $1/t_{1/2,0}$ of > 5 $s^{-1}$; determined as described in the description.

**11.** The ethylene copolymer composition of any one of claims 1 to 10 wherein the difference between the density of the first ethylene copolymer, d1, and the density of the second ethylene copolymer, d2 is less than 0.030 $g/cm^3$.

**12.** A film or film layer comprising an ethylene copolymer composition, the ethylene copolymer composition comprising:

(i) from 15 to 75 weight percent of a first ethylene copolymer having a density of from 0.855 to 0.913 $g/cm^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 $g/cm^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 $g/cm^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 $g/cm^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

**13.** A multilayer film structure comprising at least one film layer comprising an ethylene copolymer composition, the ethylene copolymer composition comprising:

(i) from 15 to 75 weight percent of a first ethylene copolymer having a density of from 0.855 to 0.913 $g/cm^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 $g/cm^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 $g/cm^3$; a molecular weight distribution, $M_w/M_n$ of from 1.7 to 6.0; and a melt index, $I_2$ of from 0.1 to 100 g/10min;

wherein the ethylene copolymer composition has a density of from 0.860 to 0.910 $g/cm^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

**14.** A film or film layer comprising a polymer blend, the polymer blend comprising:

(a) from 5 to 50 weight percent of an ethylene copolymer composition; and

(b) from 95 to 50 weight percent of a linear low density polyethylene;

wherein the ethylene copolymer composition comprises:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;
wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

**15.** A multilayer film structure comprising at least one film layer comprising a polymer blend, the polymer blend comprising:

(a) from 5 to 50 weight percent of an ethylene copolymer composition; and
(b) from 95 to 50 weight percent of a linear low density polyethylene;

wherein the ethylene copolymer composition comprises:

(i) from 15 to 75 weight percent of a first ethylene copolymer having a density of from 0.855 to 0.913 g/cm$^3$; a molecular weight distribution, $M_w/M_n$ of from 1.7 to 2.7; and a melt index, $I_2$ of from 0.1 to 10 g/10min;
(ii) from 80 to 20 weight percent of a second ethylene copolymer having a density of from 0.865 to 0.930 g/cm$^3$; a molecular weight distribution, $M_w/M_n$ of from 1.7 to 2.7; and a melt index, $I_2$ of from 0.1 to 10 g/10min; and
(iii) from 5 to 40 weight percent of a third ethylene copolymer having a density of from 0.855 to 0.936 g/cm$^3$; a molecular weight distribution, $M_w/M_n$ of from 1.7 to 6.0; and a melt index, $I_2$ of from 0.1 to 100 g/10min;
wherein the ethylene copolymer composition has a density of from 0.860 to 0.910 g/cm$^3$; a melt index, $I_2$ of from 0.5 to 10 g/10min; and at least 0.0015 parts per million (ppm) of hafnium;
wherein the number average molecular weight, $Mn^1$ of the first ethylene copolymer is greater than both the number average molecular weight, $Mn^2$ of the second ethylene copolymer and the number average molecular weight, $Mn^3$ of the third ethylene copolymer; and
wherein the weight percent of the first, second or third ethylene copolymer is defined as the weight of the first, second or the third ethylene copolymer divided by the weight of the sum of (i) the first ethylene copolymer, (ii) the second ethylene copolymer and (iii) the third ethylene copolymer, multiplied by 100%.

## Patentansprüche

**1.** Ethylen-Copolymer-Zusammensetzung, die Folgendes umfasst:

(i) 15 bis 75 Gew.-% eines ersten Ethylen-Copolymers mit einer gemäß ASTM D792-13 vom 1. November 2013 bestimmten Dichte von 0,855 bis 0,913 g/cm$^3$, einer Molekulargewichtsverteilung $M_w/M_n$ von 1,7 bis 2,7 und einem Schmelzindex $I_2$ von 0,1 bis 10 g/10 min, bestimmt gemäß ASTM D1238 vom 1. August 2013 bei 190 °C unter Verwendung eines Gewichts von 2,16 kg;
(ii) 80 bis 20 Gew.-% eines zweiten Ethylen-Copolymers mit einer Dichte von 0,865 bis 0,930 g/cm$^3$, einer Molekulargewichtsverteilung $M_w/M_n$ von 1,7 bis 2,7 und einem Schmelzindex $I_2$ von 0,1 bis 10 g/10 min; und
(iii) 5 bis 40 Gew.-% eines dritten Ethylen-Copolymers mit einer Dichte von 0,855 bis 0,936 g/cm$^3$, einer Molekulargewichtsverteilung $M_w/M_n$ von 1,7 bis 6,0 und einem Schmelzindex $I_2$ von 0,1 bis 100 g/10 min;

wobei die Ethylen-Copolymer-Zusammensetzung eine Dichte von 0,860 bis 0,910 g/cm$^3$, einen Schmelzindex $I_2$ von 0,5 bis 10 g/10 min und zumindest 0,0015 Teile pro Million (ppm) Hafnium aufweist;

wobei das zahlenmittlere Molekulargewicht $Mn^1$ des ersten Ethylen-Copolymers größer ist als sowohl das zahlenmittlere Molekulargewicht $Mn^2$ des zweiten Ethylen-Copolymers als auch das zahlenmittlere Molekulargewicht $Mn^3$ des dritten Ethylen-Copolymers; und
wobei die Gewichtsprozent des ersten, des zweiten oder des dritten Ethylen-Copolymers als Gewicht des ersten, des zweiten oder des dritten Ethylen-Copolymers, dividiert durch das Gewicht der Summe aus (i) dem ersten Ethylen-Copolymer, (ii) dem zweiten Ethylen-Copolymer und (iii) dem dritten Ethylen-Copolymer, multipliziert mit 100 % definiert sind.

**2.** Ethylen-Copolymer-Zusammensetzung nach Anspruch 1, wobei die Anzahl an kurzkettigen Verzweigungen pro tausend Kohlenstoffatomen im ersten Ethylen-Copolymer (SCB1) und die Anzahl an kurzkettigen Verzweigungen pro tausend Kohlenstoffatomen im zweiten Ethylen-Copolymer (SCB2) die folgende Bedingung erfüllen: SCB1 / SCB2 > 0,8; wobei die Anzahl an SCB wie in der Beschreibung beschrieben bestimmt wird.

**3.** Ethylen-Copolymer-Zusammensetzung nach Anspruch 1 oder 2, wobei eine oder mehrere der folgenden Aussagen zutreffen: (a) die Dichte des zweiten Ethylen-Copolymers ist gleich wie oder größer als die Dichte des ersten Ethylen-Copolymers; (b) die Dichte des dritten Ethylen-Copolymers ist gleich wie oder größer als die Dichte des zweiten Ethylen-Copolymers; und (c) die Ethylen-Copolymer-Zusammensetzung weist eine Dichte von unter 0,910 $g/cm^3$ auf.

**4.** Ethylen-Copolymer-Zusammensetzung nach einem der Ansprüche 1 bis 3, die 10 bis 40 Gew.-% des dritten Ethylen-Copolymers und gegebenenfalls 15 bis 40 Gew.-% des dritten Ethylen-Copolymers umfasst.

**5.** Ethylen-Copolymer-Zusammensetzung nach einem der Ansprüche 1 bis 4, wobei das erste Ethylen-Copolymer und das zweite Ethylen-Copolymer jeweils eine Molekulargewichtsverteilung $M_w/M_n$ von $\leq 2{,}3$ aufweisen; und/oder wobei das dritte Ethylen-Copolymer eine Molekulargewichtsverteilung $M_w/M_n$ von > 2,3 aufweist.

**6.** Ethylen-Copolymer-Zusammensetzung nach einem der Ansprüche 1 bis 5, wobei das erste Ethylen-Copolymer und das zweite Ethylen-Copolymer jeweils mit einem Single-Site-Katalysatorsystem hergestellt sind, das einen Metallocen-Katalysator der Formel (I) umfasst:

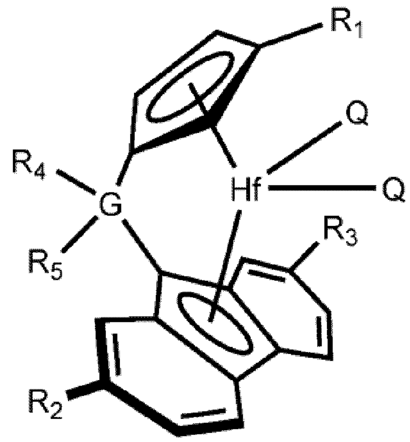

(I)

worin G ein Element der Gruppe 14 ist, das aus Kohlenstoff, Silicium, Germanium, Zinn und Blei ausgewählt ist; $R_1$ ein Wasserstoffatom, ein $C_{1-20}$-Hydrocarbylrest, ein $C_{1-20}$-Alkoxyrest oder ein $C_{6-10}$-Aryloxidrest ist; $R_2$ und $R_3$ jeweils unabhängig voneinander aus einem Wasserstoffatom, einem $C_{1-20}$-Hydrocarbylrest, einem $C_{1-20}$-Alkoxyrest und einem $C_{6-10}$-Aryloxidrest ausgewählt sind; $R_4$ und $R_5$ jeweils unabhängig voneinander aus einem Wasserstoffatom, einem unsubstituierten $C_{1-20}$-Hydrocarbylrest, einem substituierten $C_{1-20}$-Hydrocarbylrest, einem $C_{1-20}$-Alkoxyrest und einem $C_{6-10}$-Aryloxidrest ausgewählt sind; und Q jeweils unabhängig ein aktivierbarer Abgangsgruppen-Ligand ist.

**7.** Ethylen-Copolymer-Zusammensetzung nach einem der Ansprüche 1 bis 6, wobei das erste Ethylen-Copolymer und das zweite Ethylen-Copolymer jeweils einen Zusammensetzungsverteilungsindex CDBI50 von zumindest 75 Gew.-% aufweisen; und/oder wobei das dritte Ethylen-Copolymer einen Zusammensetzungsbreitenindex $CDBI_{so}$ von weniger als 75 Gew.-% aufweist; wobei der $CDBI_{so}$ wie in der Beschreibung beschrieben bestimmt wird.

**8.** Ethylen-Copolymer-Zusammensetzung nach einem der Ansprüche 1 bis 7, wobei eine oder mehrere der folgenden Aussagen zutreffen: (a) die Ethylen-Copolymer-Zusammensetzung umfasst zumindest 3 Mol-% von einem oder mehr als einem $\alpha$-Olefin und gegebenenfalls 3 bis 12 Mol-% von einem oder mehr als einem $\alpha$-Olefin; und (b) die Ethylen-Copolymer-Zusammensetzung umfasst 3 bis 12 Mol-% 1-Octen.

**9.** Ethylen-Copolymer-Zusammensetzung nach einem der Ansprüche 1 bis 8, die 0,050 bis 3,5 ppm Hafnium umfasst.

**10.** Ethylen-Copolymer-Zusammensetzung nach einem der Ansprüche 1 bis 9, die eine Molekulargewichtsverteilung $M_w/M_n$ von 2,0 bis 4,0 aufweist; und/oder eine Kristallisationsratenkonstante $1/t_{1/2,0}$ von > 5 $s^{-1}$ aufweist; bestimmt wie in der Beschreibung beschrieben.

**11.** Ethylen-Copolymer-Zusammensetzung nach einem der Ansprüche 1 bis 10, wobei der Unterschied zwischen der Dichte des ersten Ethylen-Copolymers d1 und der Dichte des zweiten Ethylen-Copolymers d2 weniger als 0,030 $g/cm^3$ beträgt.

**12.** Film oder Filmschicht, der/die eine Ethylen-Copolymer-Zusammensetzung umfasst, wobei die Ethylen-Copolymer-Zusammensetzung Folgendes umfasst:

(i) 15 bis 75 Gew.-% eines ersten Ethylen-Copolymers mit einer Dichte von 0,855 bis 0,913 $g/cm^3$, einer Molekulargewichtsverteilung $M_w/M_n$ von 1,7 bis 2,7 und einem Schmelzindex $I_2$ von 0,1 bis 10 g/10 min;
(ii) 80 bis 20 Gew.-% eines zweiten Ethylen-Copolymers mit einer Dichte von 0,865 bis 0,930 $g/cm^3$, einer Molekulargewichtsverteilung $M_w/M_n$ von 1,7 bis 2,7 und einem Schmelzindex $I_2$ von 0,1 bis 10 g/10 min; und
(iii) 5 bis 40 Gew.-% eines dritten Ethylen-Copolymers mit einer Dichte von 0,855 bis 0,936 $g/cm^3$, einer Molekulargewichtsverteilung $M_w/M_n$ von 1,7 bis 6,0 und einem Schmelzindex $I_2$ von 0,1 bis 100 g/10 min;
wobei die Ethylen-Copolymer-Zusammensetzung eine Dichte von 0,860 bis 0,910 $g/cm^3$, einen Schmelzindex $I_2$ von 0,5 bis 10 g/10 min und zumindest 0,0015 Teile pro Million (ppm) Hafnium aufweist;
wobei das zahlenmittlere Molekulargewicht $Mn^1$ des ersten Ethylen-Copolymers größer ist als sowohl das zahlenmittlere Molekulargewicht $Mn^2$ des zweiten Ethylen-Copolymers als auch das zahlenmittlere Molekulargewicht $Mn^3$ des dritten Ethylen-Copolymers; und
wobei die Gewichtsprozent des ersten, des zweiten oder des dritten Ethylen-Copolymers als Gewicht des ersten, des zweiten oder des dritten Ethylen-Copolymers, dividiert durch das Gewicht der Summe aus (i) dem ersten Ethylen-Copolymer, (ii) dem zweiten Ethylen-Copolymer und (iii) dem dritten Ethylen-Copolymer, multipliziert mit 100 % definiert sind.

**13.** Mehrschichtige Filmstruktur, die zumindest eine Filmschicht umfasst, die eine Ethylen-Copolymer-Zusammensetzung umfasst, wobei die Ethylen-Copolymer-Zusammensetzung Folgendes umfasst:

(i) 15 bis 75 Gew.-% eines ersten Ethylen-Copolymers mit einer Dichte von 0,855 bis 0,913 $g/cm^3$, einer Molekulargewichtsverteilung $M_w/M_n$ von 1,7 bis 2,7 und einem Schmelzindex $I_2$ von 0,1 bis 10 g/10 min;
(ii) 80 bis 20 Gew.-% eines zweiten Ethylen-Copolymers mit einer Dichte von 0,865 bis 0,930 $g/cm^3$, einer Molekulargewichtsverteilung $M_w/M_n$ von 1,7 bis 2,7 und einem Schmelzindex $I_2$ von 0,1 bis 10 g/10 min; und
(iii) 5 bis 40 Gew.-% eines dritten Ethylen-Copolymers mit einer Dichte von 0,855 bis 0,936 $g/cm^3$, einer Molekulargewichtsverteilung $M_w/M_n$ von 1,7 bis 6,0 und einem Schmelzindex $I_2$ von 0,1 bis 100 g/10 min;
wobei die Ethylen-Copolymer-Zusammensetzung eine Dichte von 0,860 bis 0,910 $g/cm^3$, einen Schmelzindex $I_2$ von 0,5 bis 10 g/10 min und zumindest 0,0015 Teile pro Million (ppm) Hafnium aufweist;
wobei das zahlenmittlere Molekulargewicht $Mn^1$ des ersten Ethylen-Copolymers größer ist als sowohl das zahlenmittlere Molekulargewicht $Mn^2$ des zweiten Ethylen-Copolymers als auch das zahlenmittlere Molekulargewicht $Mn^3$ des dritten Ethylen-Copolymers; und
wobei die Gewichtsprozent des ersten, des zweiten oder des dritten Ethylen-Copolymers als Gewicht des ersten, des zweiten oder des dritten Ethylen-Copolymers, dividiert durch das Gewicht der Summe aus (i) dem ersten Ethylen-Copolymer, (ii) dem zweiten Ethylen-Copolymer und (iii) dem dritten Ethylen-Copolymer, multipliziert mit 100 % definiert sind.

**14.** Film oder Filmschicht, die eine Polymerblend umfasst, wobei die Polymerblend Folgendes umfasst:

(a) 5 bis 50 Gew.-% einer Ethylen-Copolymer-Zusammensetzung und
(b) 95 bis 50 Gew.-% eines unverzweigten Polyethylens niedriger Dichte;

wobei die Ethylen-Copolymer-Zusammensetzung Folgendes umfasst:

(i) 15 bis 75 Gew.-% eines ersten Ethylen-Copolymers mit einer Dichte von 0,855 bis 0,913 g/cm$^3$, einer Molekulargewichtsverteilung $M_w/M_n$ von 1,7 bis 2,7 und einem Schmelzindex $I_2$ von 0,1 bis 10 g/10 min;
(ii) 80 bis 20 Gew.-% eines zweiten Ethylen-Copolymers mit einer Dichte von 0,865 bis 0,930 g/cm$^3$, einer Molekulargewichtsverteilung $M_w/M_n$ von 1,7 bis 2,7 und einem Schmelzindex $I_2$ von 0,1 bis 10 g/10 min; und
(iii) 5 bis 40 Gew.-% eines dritten Ethylen-Copolymers mit einer Dichte von 0,855 bis 0,936 g/cm$^3$, einer Molekulargewichtsverteilung $M_w/M_n$ von 1,7 bis 6,0 und einem Schmelzindex $I_2$ von 0,1 bis 100 g/10 min;
wobei die Ethylen-Copolymer-Zusammensetzung eine Dichte von 0,860 bis 0,910 g/cm$^3$, einen Schmelzindex $I_2$ von 0,5 bis 10 g/10 min und zumindest 0,0015 Teile pro Million (ppm) Hafnium aufweist;
wobei das zahlenmittlere Molekulargewicht $Mn^1$ des ersten Ethylen-Copolymers größer ist als sowohl das zahlenmittlere Molekulargewicht $Mn^2$ des zweiten Ethylen-Copolymers als auch das zahlenmittlere Molekulargewicht $Mn^3$ des dritten Ethylen-Copolymers; und
wobei die Gewichtsprozent des ersten, des zweiten oder des dritten Ethylen-Copolymers als Gewicht des ersten, des zweiten oder des dritten Ethylen-Copolymers, dividiert durch das Gewicht der Summe aus (i) dem ersten Ethylen-Copolymer, (ii) dem zweiten Ethylen-Copolymer und (iii) dem dritten Ethylen-Copolymer, multipliziert mit 100 % definiert sind.

**15.** Mehrschichtige Filmstruktur, die zumindest eine Filmschicht umfasst, die eine Polymerblend umfasst, wobei die Polymerblend Folgendes umfasst:

(a) 5 bis 50 Gew.-% einer Ethylen-Copolymer-Zusammensetzung und
(b) 95 bis 50 Gew.-% eines unverzweigten Polyethylens niedriger Dichte;

wobei die Ethylen-Copolymer-Zusammensetzung Folgendes umfasst:

(i) 15 bis 75 Gew.-% eines ersten Ethylen-Copolymers mit einer Dichte von 0,855 bis 0,913 g/cm$^3$, einer Molekulargewichtsverteilung $M_w/M_n$ von 1,7 bis 2,7 und einem Schmelzindex $I_2$ von 0,1 bis 10 g/10 min;
(ii) 80 bis 20 Gew.-% eines zweiten Ethylen-Copolymers mit einer Dichte von 0,865 bis 0,930 g/cm$^3$, einer Molekulargewichtsverteilung $M_w/M_n$ von 1,7 bis 2,7 und einem Schmelzindex $I_2$ von 0,1 bis 10 g/10 min; und
(iii) 5 bis 40 Gew.-% eines dritten Ethylen-Copolymers mit einer Dichte von 0,855 bis 0,936 g/cm$^3$, einer Molekulargewichtsverteilung $M_w/M_n$ von 1,7 bis 6,0 und einem Schmelzindex $I_2$ von 0,1 bis 100 g/10 min;
wobei die Ethylen-Copolymer-Zusammensetzung eine Dichte von 0,860 bis 0,910 g/cm$^3$, einen Schmelzindex $I_2$ von 0,5 bis 10 g/10 min und zumindest 0,0015 Teile pro Million (ppm) Hafnium aufweist;
wobei das zahlenmittlere Molekulargewicht $Mn^1$ des ersten Ethylen-Copolymers größer ist als sowohl das zahlenmittlere Molekulargewicht $Mn^2$ des zweiten Ethylen-Copolymers als auch das zahlenmittlere Molekulargewicht $Mn^3$ des dritten Ethylen-Copolymers; und
wobei die Gewichtsprozent des ersten, des zweiten oder des dritten Ethylen-Copolymers als Gewicht des ersten, des zweiten oder des dritten Ethylen-Copolymers, dividiert durch das Gewicht der Summe aus (i) dem ersten Ethylen-Copolymer, (ii) dem zweiten Ethylen-Copolymer und (iii) dem dritten Ethylen-Copolymer, multipliziert mit 100 % definiert sind.

## Revendications

**1.** Composition de copolymères d'éthylène comprenant :

(i) de 15 à 75 pour cent en poids d'un premier copolymère d'éthylène ayant une masse volumique déterminée en utilisant la norme ASTM D792-3, 1 novembre 2013 ; de 0,855 à 0,913 g/cm$^3$ ; une distribution de poids moléculaire, $M_p/M_n$, de 1,7 à 2,7 ; et un indice de fusion, $I_2$, de 0,1 à 10 g/10 min ; déterminé en utilisant la norme ASTM D1238 ; 1 août 2013 ; à 190 °C, en utilisant un poids de 2,16 kg ;
(ii) de 80 à 20 pour cent en poids d'un deuxième copolymère d'éthylène ayant une masse volumique de 0,865 à 0,930 g/cm$^3$ ; une distribution de poids moléculaire, $M_p/M_n$, de 1,7 à 2,7 ; et un indice de fusion, $I_2$, de 0,1 à 10 g/10 min ; et
(iii) de 5 à 40 pour cent en poids d'un troisième copolymère d'éthylène ayant une masse volumique de 0,855 à 0,936 g/cm$^3$ ; une distribution de poids moléculaire, $M_p/M_n$, de 1,7 à 6,0 ; et un indice de fusion, $I_2$, de 0,1 à 100 g/10 min ;
dans laquelle la composition de copolymères d'éthylène a une masse volumique de 0,860 à 0,910 g/cm$^3$ ; un

indice de fusion, $I_2$, de 0,5 à 10 g/10 min ; et au moins 0,0015 partie par million (ppm) d'hafnium ;
dans laquelle le poids moléculaire moyen en nombre, $Mn^1$, du premier copolymère d'éthylène est supérieur à la fois au poids moléculaire moyen en nombre, $Mn^2$, du deuxième copolymère d'éthylène et au poids moléculaire moyen en nombre, $Mn^3$, du troisième copolymère d'éthylène ; et
dans laquelle le pourcentage en poids du premier, du deuxième ou du troisième copolymère d'éthylène est défini comme le poids du premier, du deuxième ou du troisième copolymère d'éthylène divisé par le poids de la somme des (i) premier copolymère d'éthylène, (ii) deuxième copolymère d'éthylène et (iii) troisième copolymère d'éthylène, multiplié par 100 %.

**2.** Composition de copolymères d'éthylène selon la revendication 1 dans laquelle le nombre de ramifications à chaîne courte pour mille atomes de carbone dans le premier copolymère d'éthylène (SCB1) et le nombre de ramifications à chaîne courte pour mille atomes de carbone dans le deuxième copolymère d'éthylène (SCB2) satisfont à la condition suivante : SCB1/SCB2 > 0,8 ; le nombre de SCB est déterminé comme décrit dans la description.

**3.** Composition de copolymères d'éthylène selon la revendication 1 ou 2 dans laquelle un ou plusieurs de ce qui suit s'applique : (a) la masse volumique du deuxième copolymère d'éthylène est égale ou supérieure à la masse volumique du premier copolymère d'éthylène ; (b) la masse volumique du troisième copolymère d'éthylène est égale ou supérieure à la masse volumique du deuxième copolymère d'éthylène ; et (c) la composition de copolymères d'éthylène a une masse volumique inférieure à 0,910 $g/cm^3$.

**4.** Composition de copolymères d'éthylène selon l'une quelconque des revendications 1 à 3 comprenant de 10 à 40 pour cent en poids du troisième copolymère d'éthylène, et éventuellement de 15 à 40 pour cent en poids du troisième copolymère d'éthylène.

**5.** Composition de copolymères d'éthylène selon l'une quelconque des revendications 1 à 4 dans laquelle le premier copolymère d'éthylène et le deuxième copolymère d'éthylène ont chacun une distribution de poids moléculaire, $M_p/M_n \leq 2,3$ ; et/ou dans laquelle le troisième copolymère d'éthylène a une distribution de poids moléculaire, $M_p/M_n > 2,3$.

**6.** Composition de copolymères d'éthylène selon l'une quelconque des revendications 1 à 5 dans laquelle le premier copolymère d'éthylène et le deuxième copolymère d'éthylène sont chacun fabriqués avec un système de catalyseur à site unique comprenant un catalyseur métallocène ayant la formule (I) :

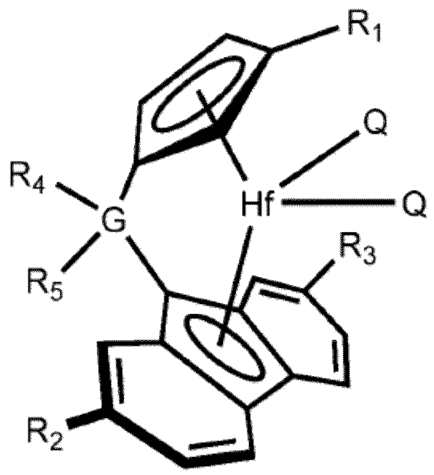

(I)

dans laquelle G est un élément du groupe 14 choisi parmi le carbone, le silicium, le germanium, l'étain ou le plomb ; $R_1$ est un atome d'hydrogène, un radical hydrocarbyle en $C_{1-20}$, un radical alcoxy en $C_{1-20}$ ou un radical oxyde d'aryle en $C_{6-10}$ ; $R_2$ et $R_3$ sont indépendamment choisis parmi un atome d'hydrogène, un radical hydrocarbyle en $C_{1-20}$, un radical alcoxy en $C_{1-20}$ ou un radical oxyde d'aryle en $C_{6-10}$ ; $R_4$ et $R_5$ sont indépendamment choisis parmi un atome d'hydrogène, un radical hydrocarbyle en $C_{1-20}$ non substitué, un radical hydrocarbyle en $C_{1-20}$ substitué, un radical alcoxy en $C_{1-20}$ ou un radical oxyde d'aryle en $C_{6-10}$ ; et Q est indépendamment un ligand de groupe partant activable.

**7.** Composition de copolymères d'éthylène selon l'une quelconque des revendications 1 à 6 dans laquelle le premier

copolymère d'éthylène et le deuxième copolymère d'éthylène ont chacun un indice de largeur de distribution de composition, $CDBI_{50}$, d'au moins 75 pour cent en poids ; et/ou dans laquelle le troisième copolymère d'éthylène a un indice de largeur de distribution de composition, $CDBI_{50}$, inférieur à 75 pour cent en poids ; le $CDBI_{50}$ est déterminé comme décrit dans la description.

**8.** Composition de copolymères d'éthylène selon l'une quelconque des revendications 1 à 7 dans laquelle un ou les deux de ce qui suit s'applique : (a) la composition de copolymères d'éthylène a au moins 3 pour cent en moles d'une ou plusieurs alpha-oléfines, et éventuellement de 3 à 12 pour cent en moles d'une ou plusieurs alpha-oléfines ; et (b) la composition de copolymères d'éthylène a de 3 à 12 pour cent en moles de 1-octène.

**9.** Composition de copolymères d'éthylène selon l'une quelconque des revendications 1 à 8 ayant de 0,050 à 3,5 ppm d'hafnium.

**10.** Composition de copolymères d'éthylène selon l'une quelconque des revendications 1 à 9 ayant une distribution de poids moléculaire, $M_{p/}M_n$, de 2,0 à 4,0 ; et/ou une constante de vitesse de cristallisation, $1/t_{1/2,0} > 5\ s^{-1}$ ; déterminée comme décrit dans la description.

**11.** Composition de copolymères d'éthylène selon l'une quelconque des revendications 1 à 10 dans laquelle la différence entre la masse volumique du premier copolymère d'éthylène, d1, et la masse volumique du deuxième copolymère d'éthylène, d2, est inférieure à 0,030 $g/cm^3$.

**12.** Film ou couche de film comprenant une composition de copolymères d'éthylène, la composition de copolymères d'éthylène comprenant :

(i) de 15 à 75 pour cent en poids d'un premier copolymère d'éthylène ayant une masse volumique de 0,855 à 0,913 $g/cm^3$ ; une distribution de poids moléculaire, $M_{p/}M_n$, de 1,7 à 2,7 ; et un indice de fusion, $I_2$, de 0,1 à 10 g/10 min ;
(ii) de 80 à 20 pour cent en poids d'un deuxième copolymère d'éthylène ayant une masse volumique de 0,865 à 0,930 $g/cm^3$ ; une distribution de poids moléculaire, $M_{p/}M_n$, de 1,7 à 2,7 ; et un indice de fusion, $I_2$, de 0,1 à 10 g/10 min ; et
(iii) de 5 à 40 pour cent en poids d'un troisième copolymère d'éthylène ayant une masse volumique de 0,855 à 0,936 $g/cm^3$ ; une distribution de poids moléculaire, $M_{p/}M_n$, de 1,7 à 6,0 ; et un indice de fusion, $I_2$, de 0,1 à 100 g/10 min ;
dans lequel/laquelle la composition de copolymères d'éthylène a une masse volumique de 0,860 à 0,910 $g/cm^3$ ; un indice de fusion, $I_2$, de 0,5 à 10 g/10 min ; et au moins 0,0015 partie par million (ppm) d'hafnium ;
dans lequel/laquelle le poids moléculaire moyen en nombre, $Mn^1$, du premier copolymère d'éthylène est supérieur à la fois au poids moléculaire moyen en nombre, $Mn^2$, du deuxième copolymère d'éthylène et au poids moléculaire moyen en nombre, $Mn^3$, du troisième copolymère d'éthylène ; et
dans lequel/laquelle le pourcentage en poids du premier, du deuxième ou du troisième copolymère d'éthylène est défini comme le poids du premier, du deuxième ou du troisième copolymère d'éthylène divisé par le poids de la somme des (i) premier copolymère d'éthylène, (ii) deuxième copolymère d'éthylène et (iii) troisième copolymère d'éthylène, multiplié par 100 %.

**13.** Structure de film multicouche comprenant au moins une couche de film comprenant une composition de copolymères d'éthylène, la composition de copolymères d'éthylène comprenant :

(i) de 15 à 75 pour cent en poids d'un premier copolymère d'éthylène ayant une masse volumique de 0,855 à 0,913 $g/cm^3$ ; une distribution de poids moléculaire, $M_{p/}M_n$, de 1,7 à 2,7 ; et un indice de fusion, $I_2$, de 0,1 à 10 g/10 min ;
(ii) de 80 à 20 pour cent en poids d'un deuxième copolymère d'éthylène ayant une masse volumique de 0,865 à 0,930 $g/cm^3$ ; une distribution de poids moléculaire, $M_{p/}M_n$, de 1,7 à 2,7 ; et un indice de fusion, $I_2$, de 0,1 à 10 g/10 min ; et
(iii) de 5 à 40 pour cent en poids d'un troisième copolymère d'éthylène ayant une masse volumique de 0,855 à 0,936 $g/cm^3$ ; une distribution de poids moléculaire, $M_{p/}M_n$, de 1,7 à 6,0 ; et un indice de fusion, $I_2$, de 0,1 à 100 g/10 min ;
dans laquelle la composition de copolymères d'éthylène a une masse volumique de 0,860 à 0,910 $g/cm^3$ ; un indice de fusion, $I_2$, de 0,5 à 10 g/10 min ; et au moins 0,0015 partie par million (ppm) d'hafnium ;
dans laquelle le poids moléculaire moyen en nombre, $Mn^1$, du premier copolymère d'éthylène est supérieur à la

fois au poids moléculaire moyen en nombre, $Mn^2$, du deuxième copolymère d'éthylène et au poids moléculaire moyen en nombre, $Mn^3$, du troisième copolymère d'éthylène ; et
dans laquelle le pourcentage en poids du premier, du deuxième ou du troisième copolymère d'éthylène est défini comme le poids du premier, du deuxième ou du troisième copolymère d'éthylène divisé par le poids de la somme des (i) premier copolymère d'éthylène, (ii) deuxième copolymère d'éthylène et (iii) troisième copolymère d'éthylène, multiplié par 100 %.

**14.** Film ou couche de film comprenant un mélange de polymères, le mélange de polymères comprenant :

(a) de 5 à 50 pour cent en poids d'une composition de copolymères d'éthylène ;
(b) de 95 à 50 pour cent en poids d'un polyéthylène linéaire basse densité ;

dans lequel/laquelle la composition de copolymères d'éthylène comprend :

(i) de 15 à 75 pour cent en poids d'un premier copolymère d'éthylène ayant une masse volumique de 0,855 à 0,913 g/cm$^3$ ; une distribution de poids moléculaire, $M_p/M_n$, de 1,7 à 2,7 ; et un indice de fusion, $I_2$, de 0,1 à 10 g/10 min ;
(ii) de 80 à 20 pour cent en poids d'un deuxième copolymère d'éthylène ayant une masse volumique de 0,865 à 0,930 g/cm$^3$ ; une distribution de poids moléculaire, $M_p/M_n$, de 1,7 à 2,7 ; et un indice de fusion, $I_2$, de 0,1 à 10 g/10 min ; et
(iii) de 5 à 40 pour cent en poids d'un troisième copolymère d'éthylène ayant une masse volumique de 0,855 à 0,936 g/cm$^3$ ; une distribution de poids moléculaire, $M_p/M_n$, de 1,7 à 6,0 ; et un indice de fusion, $I_2$, de 0,1 à 100 g/10 min ;

dans lequel/laquelle la composition de copolymères d'éthylène a une masse volumique de 0,860 à 0,910 g/cm$^3$ ; un indice de fusion, $I_2$, de 0,5 à 10 g/10 min ; et au moins 0,0015 partie par million (ppm) d'hafnium ;
dans lequel/laquelle le poids moléculaire moyen en nombre, $Mn^1$, du premier copolymère d'éthylène est supérieur à la fois au poids moléculaire moyen en nombre, $Mn^2$, du deuxième copolymère d'éthylène et au poids moléculaire moyen en nombre, $Mn^3$, du troisième copolymère d'éthylène ; et
dans lequel/laquelle le pourcentage en poids du premier, du deuxième ou du troisième copolymère d'éthylène est défini comme le poids du premier, du deuxième ou du troisième copolymère d'éthylène divisé par le poids de la somme des (i) premier copolymère d'éthylène, (ii) deuxième copolymère d'éthylène et (iii) troisième copolymère d'éthylène, multiplié par 100 %.

**15.** Structure de film multicouche comprenant au moins une couche de film comprenant un mélange de polymères, le mélange de polymères comprenant :

(a) de 5 à 50 pour cent en poids d'une composition de copolymères d'éthylène ;
(b) de 95 à 50 pour cent en poids d'une polyéthylène linéaire basse densité ;

dans laquelle la composition de copolymères d'éthylène comprend :

(i) de 15 à 75 pour cent en poids d'un premier copolymère d'éthylène ayant une masse volumique de 0,855 à 0,913 g/cm$^3$ ; une distribution de poids moléculaire, $M_p/M_n$, de 1,7 à 2,7 ; et un indice de fusion, $I_2$, de 0,1 à 10 g/10 min ;
(ii) de 80 à 20 pour cent en poids d'un deuxième copolymère d'éthylène ayant une masse volumique de 0,865 à 0,930 g/cm$^3$ ; une distribution de poids moléculaire, $M_p/M_n$, de 1,7 à 2,7 ; et un indice de fusion, $I_2$, de 0,1 à 10 g/10 min ; et
(iii) de 5 à 40 pour cent en poids d'un troisième copolymère d'éthylène ayant une masse volumique de 0,855 à 0,936 g/cm$^3$ ; une distribution de poids moléculaire, $M_p/M_n$, de 1,7 à 6,0 ; et un indice de fusion, $I_2$, de 0,1 à 100 g/10 min ;

dans laquelle la composition de copolymères d'éthylène a une masse volumique de 0,860 à 0,910 g/cm$^3$ ; un indice de fusion, $I_2$, de 0,5 à 10 g/10 min ; et au moins 0,0015 partie par million (ppm) d'hafnium ;
dans laquelle le poids moléculaire moyen en nombre, $Mn^1$, du premier copolymère d'éthylène est supérieur à la fois au poids moléculaire moyen en nombre, $Mn^2$, du deuxième copolymère d'éthylène et au poids moléculaire moyen en nombre, $Mn^3$, du troisième copolymère d'éthylène ; et
dans laquelle le pourcentage en poids du premier, du deuxième ou du troisième copolymère d'éthylène est

défini comme le poids du premier, du deuxième ou du troisième copolymère d'éthylène divisé par le poids de la somme des (i) premier copolymère d'éthylène, (ii) deuxième copolymère d'éthylène et (iii) troisième copolymère d'éthylène, multiplié par 100 %.

FIGURE 1

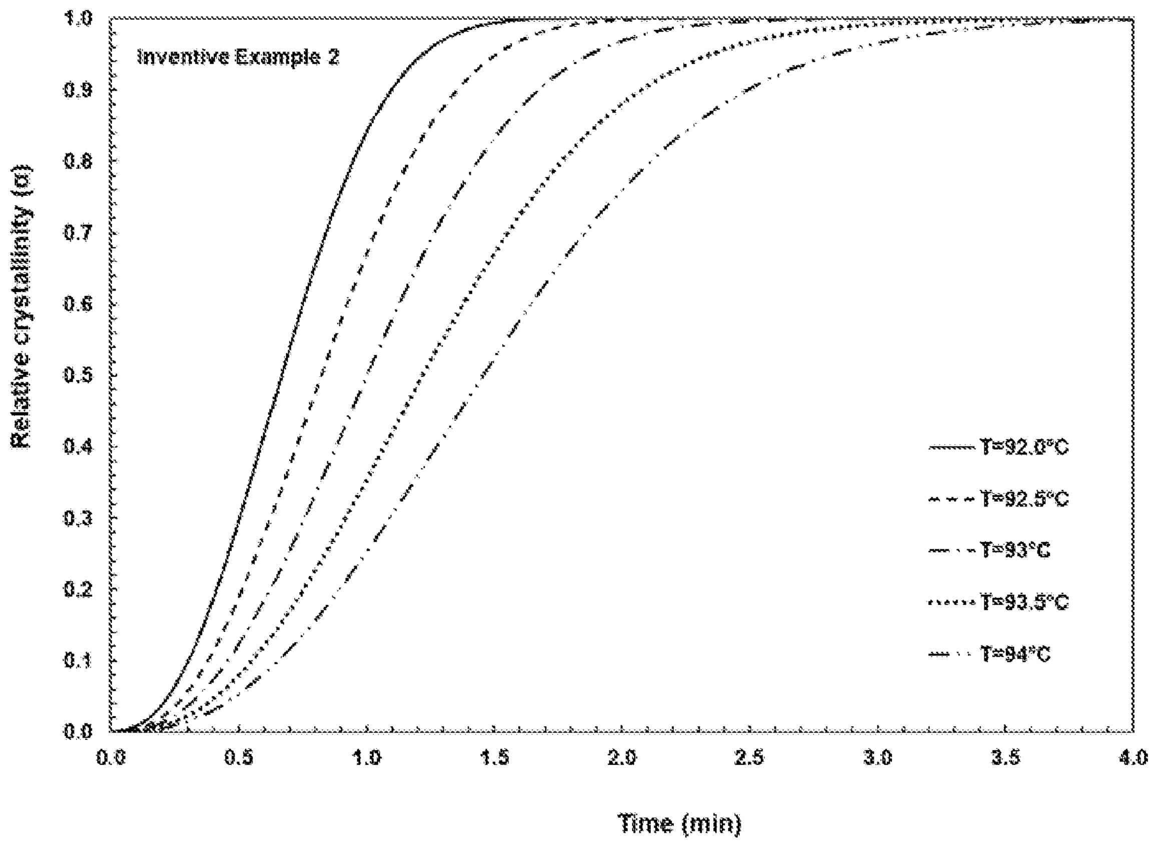
Inventive Example 2
Relative crystallinity (α)
Time (min)
T=92.0°C
T=92.5°C
T=93°C
T=93.5°C
T=94°C
0.0
0.1
0.2
0.3
0.4
0.5
0.6
0.7
0.8
0.9
1.0
0.0
0.5
1.0
1.5
2.0
2.5
3.0
3.5
4.0

FIGURE 2

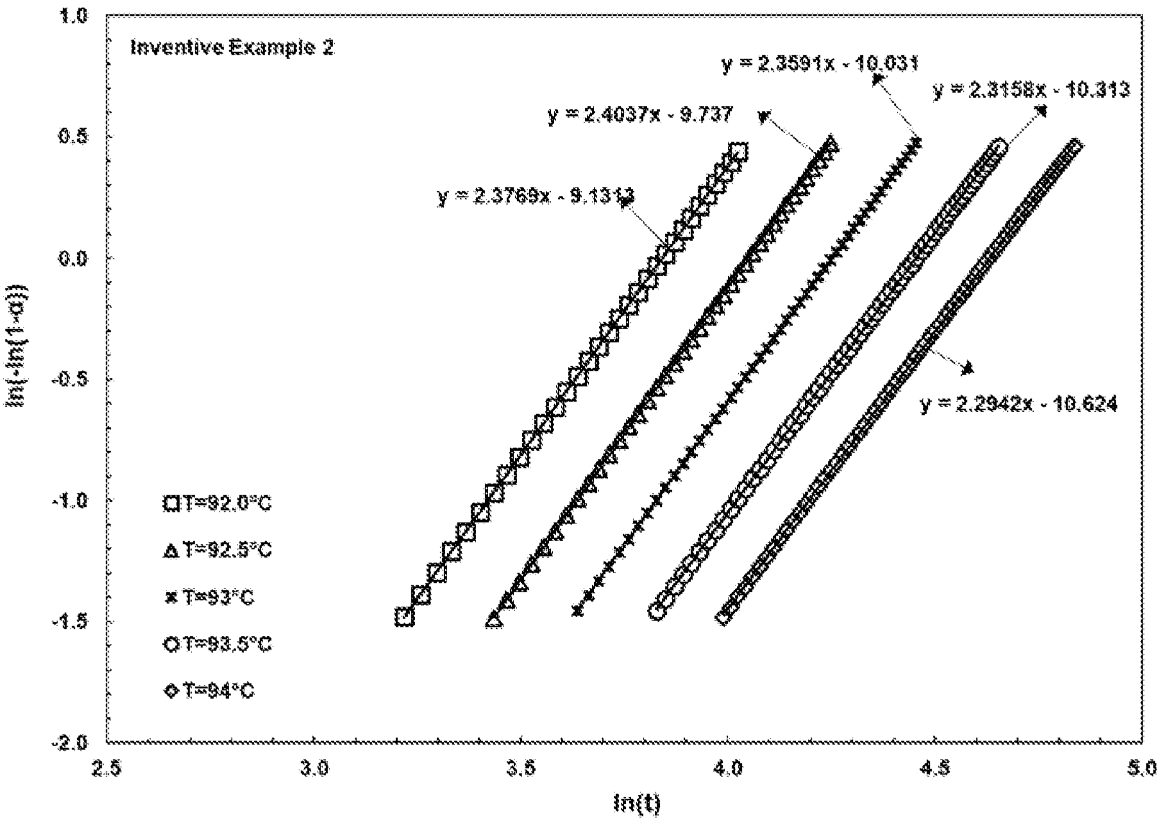
Inventive Example 2
y = 2.3591x - 10.031
y = 2.3158x - 10.313
y = 2.4037x - 9.737
y = 2.3769x - 9.1313
y = 2.2942x - 10.624
T=92.0°C
T=92.5°C
T=93°C
T=93.5°C
T=94°C
ln(-ln(1-α))
ln(t)
1.0
0.5
0.0
-0.5
-1.0
-1.5
-2.0
2.5
3.0
3.5
4.0
4.5
5.0

FIGURE 3

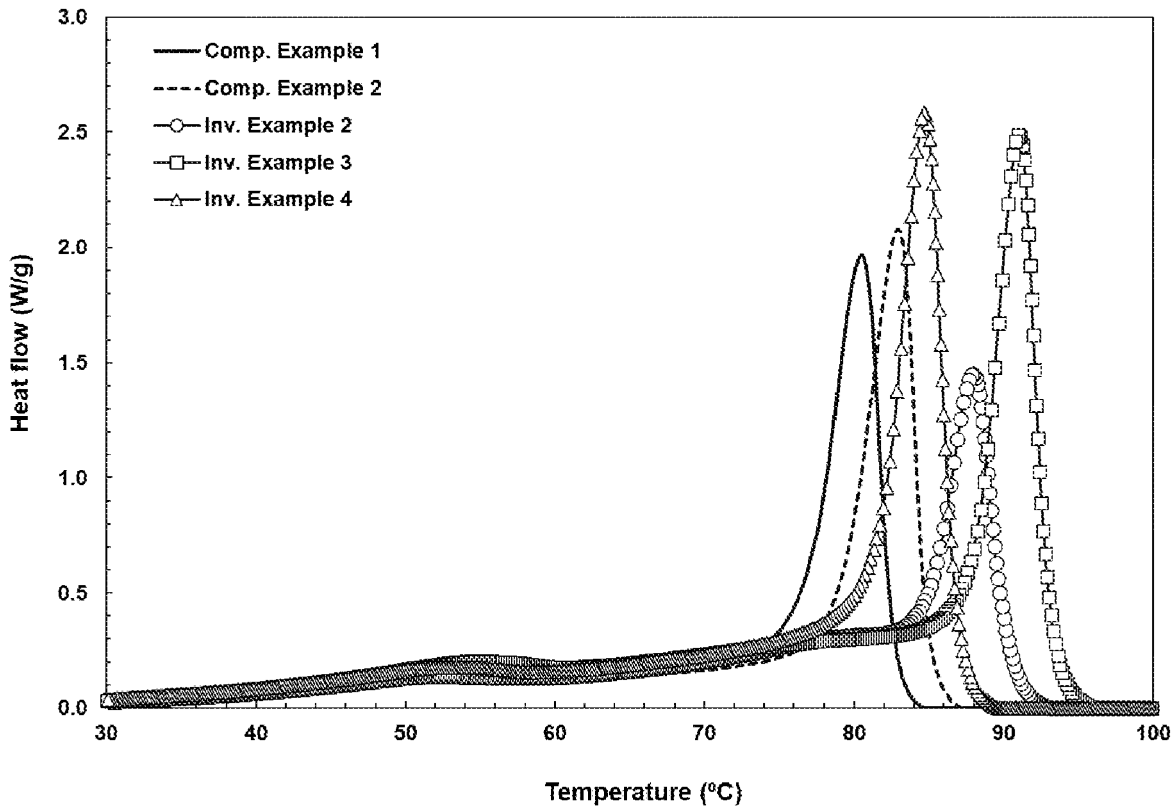
Comp. Example 1
Comp. Example 2
Inv. Example 2
Inv. Example 3
Inv. Example 4
Heat flow (W/g)
Temperature (°C)
3.0
2.5
2.0
1.5
1.0
0.5
0.0
30
40
50
60
70
80
90
100

FIGURE 4

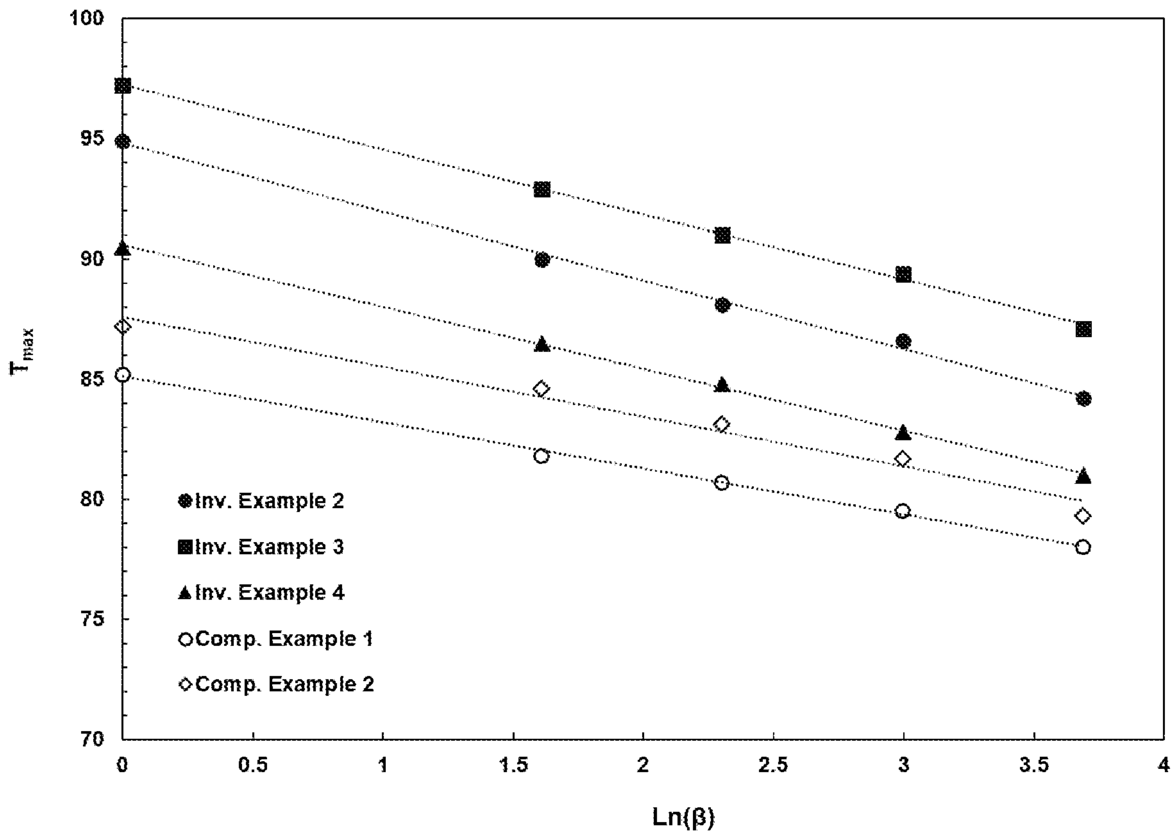
100
95
90
85
80
75
70
$T_{max}$
0
0.5
1
1.5
2
2.5
3
3.5
4
Ln(β)
Inv. Example 2
Inv. Example 3
Inv. Example 4
Comp. Example 1
Comp. Example 2

FIGURE 5

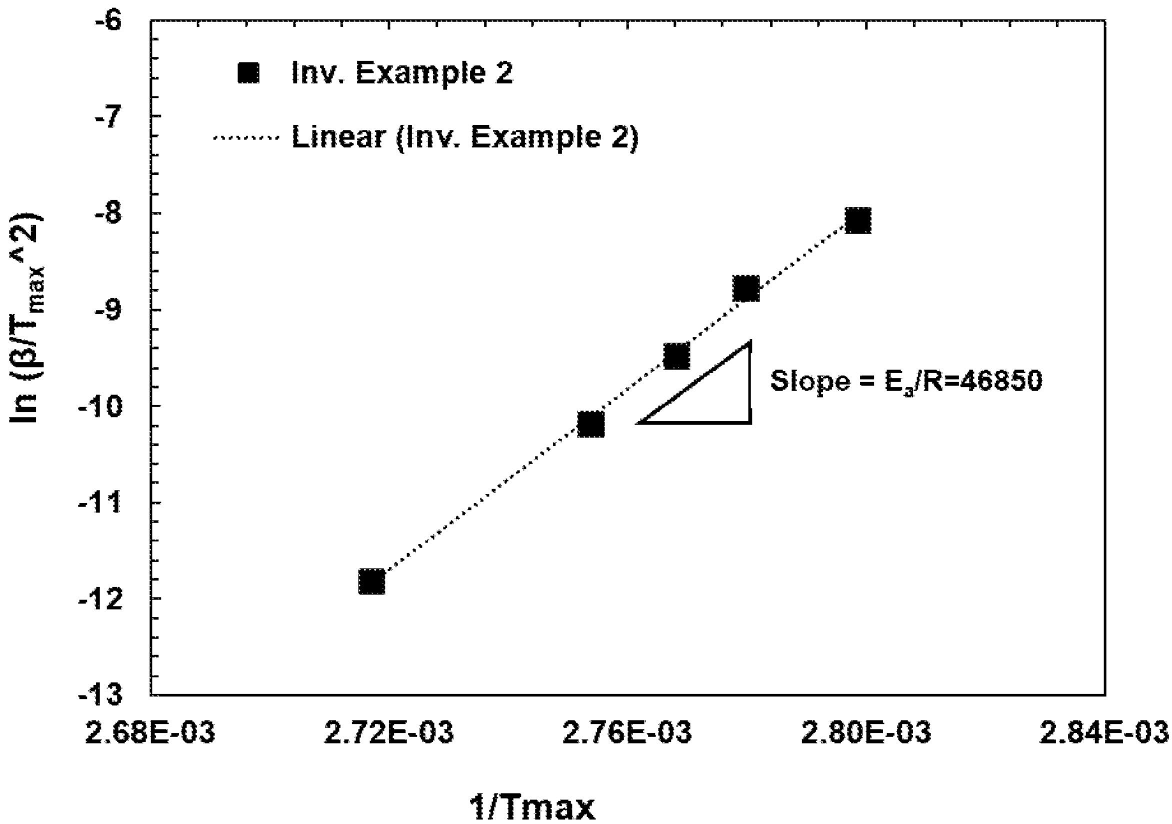
Inv. Example 2
Linear (Inv. Example 2)
Slope = Ea/R=46850
ln (β/Tmax^2)
1/Tmax
-6
-7
-8
-9
-10
-11
-12
-13
2.68E-03
2.72E-03
2.76E-03
2.80E-03
2.84E-03

FIGURE 6

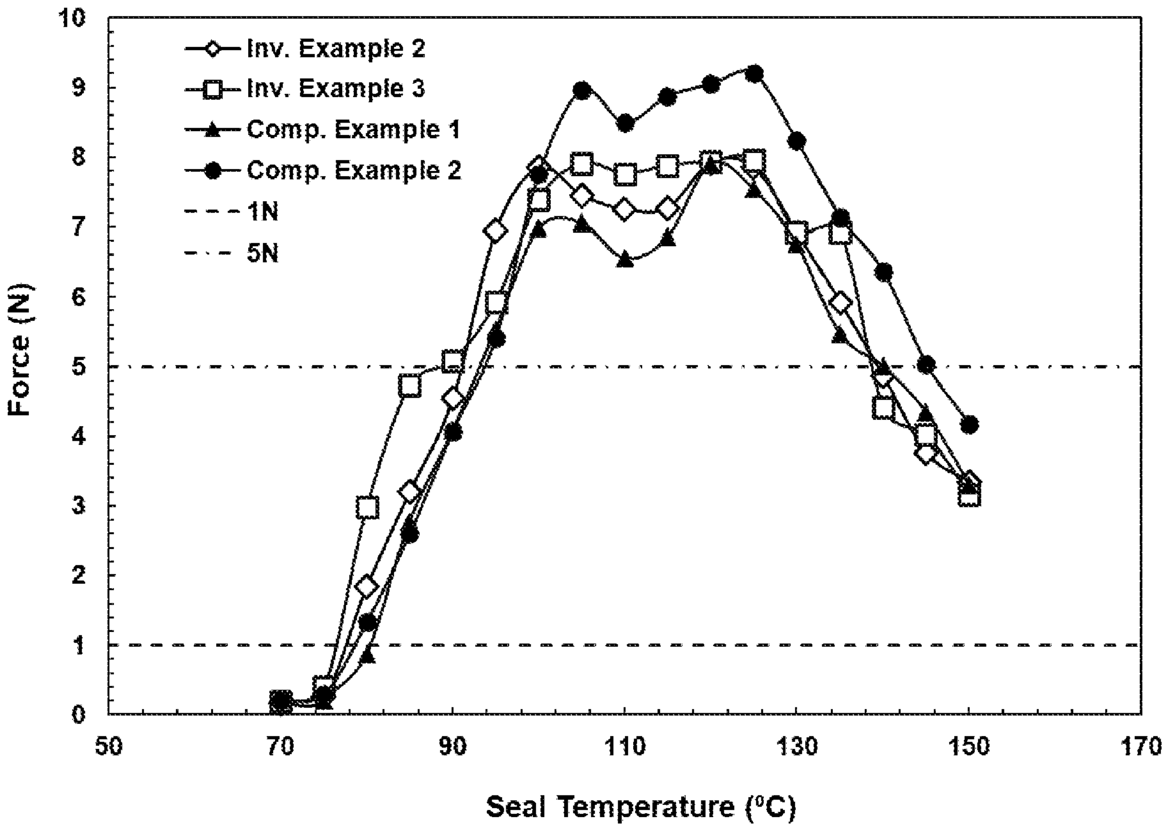
Inv. Example 2
Inv. Example 3
Comp. Example 1
Comp. Example 2
1N
5N
Force (N)
Seal Temperature (°C)
10
9
8
7
6
5
4
3
2
1
0
50
70
90
110
130
150
170

FIGURE 7

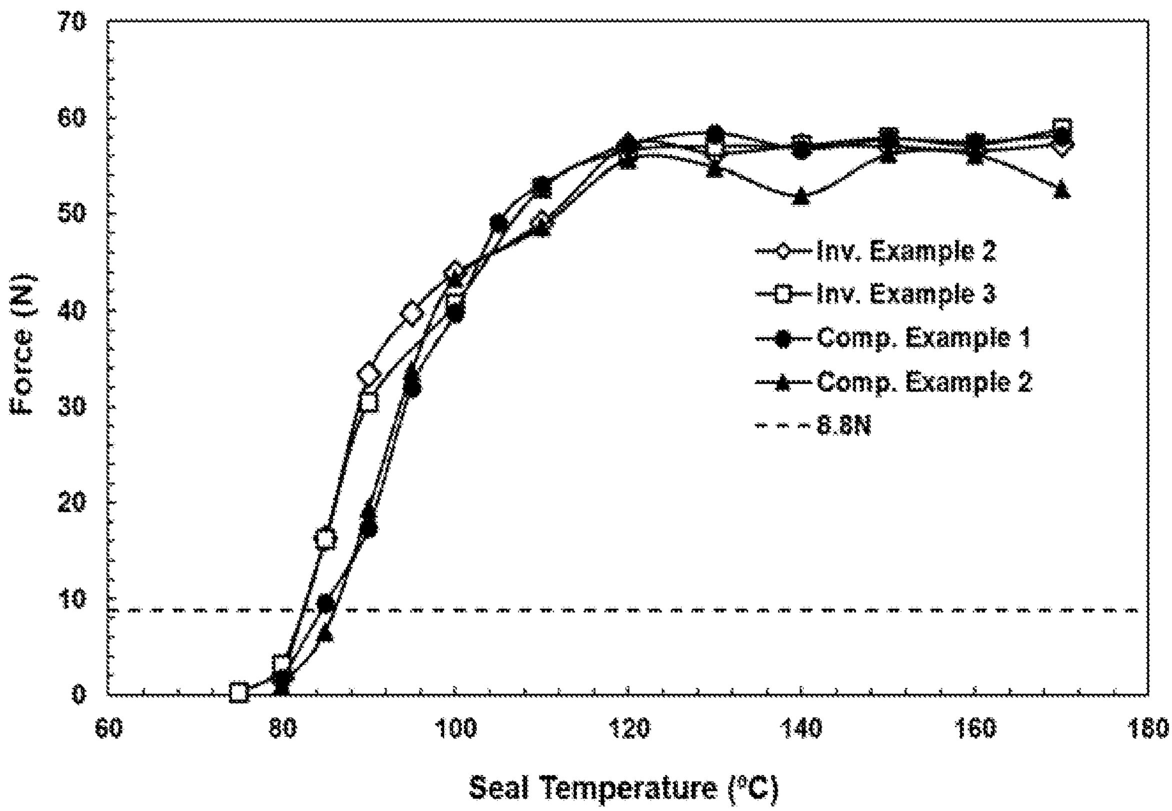
70
60
50
40
30
20
10
0
Force (N)
60
80
100
120
140
160
180
Seal Temperature (°C)
Inv. Example 2
Inv. Example 3
Comp. Example 1
Comp. Example 2
8.8N

FIGURE 8

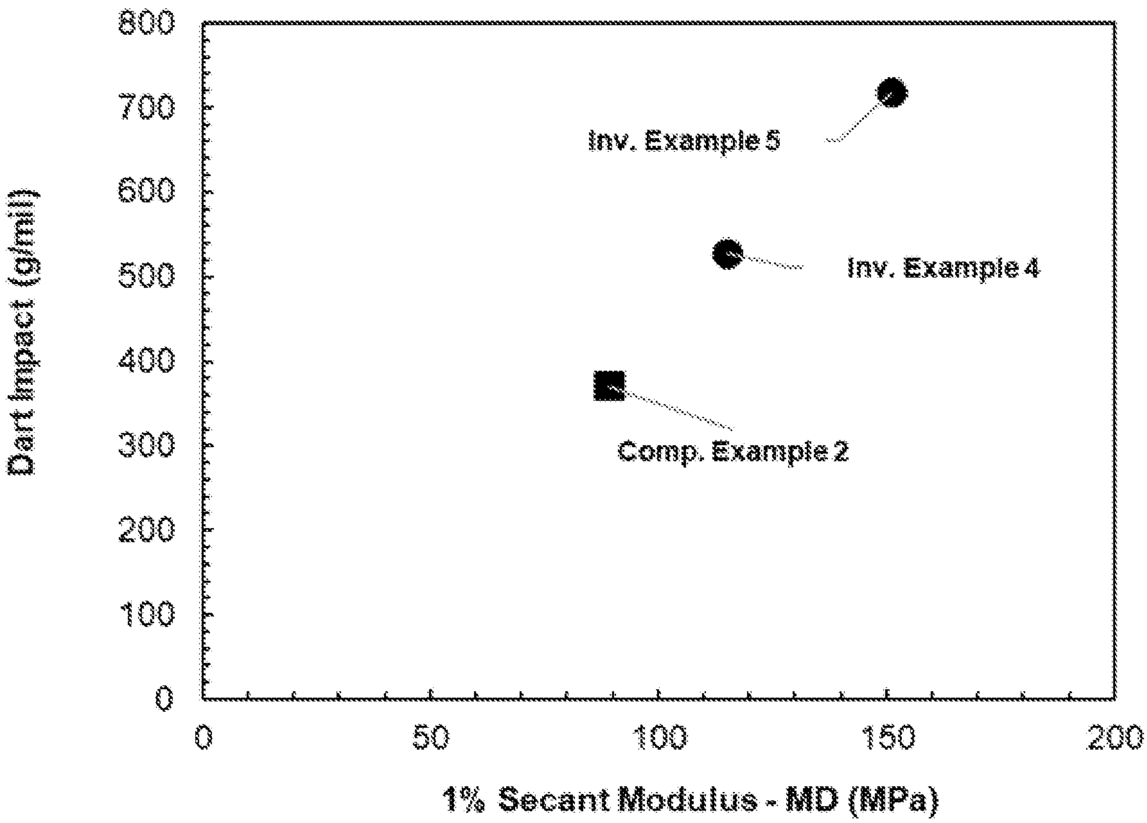
800
700
600
500
400
300
200
100
0
Dart Impact (g/mil)
Inv. Example 5
Inv. Example 4
Comp. Example 2
0
50
100
150
200
1% Secant Modulus - MD (MPa)

FIGURE 9

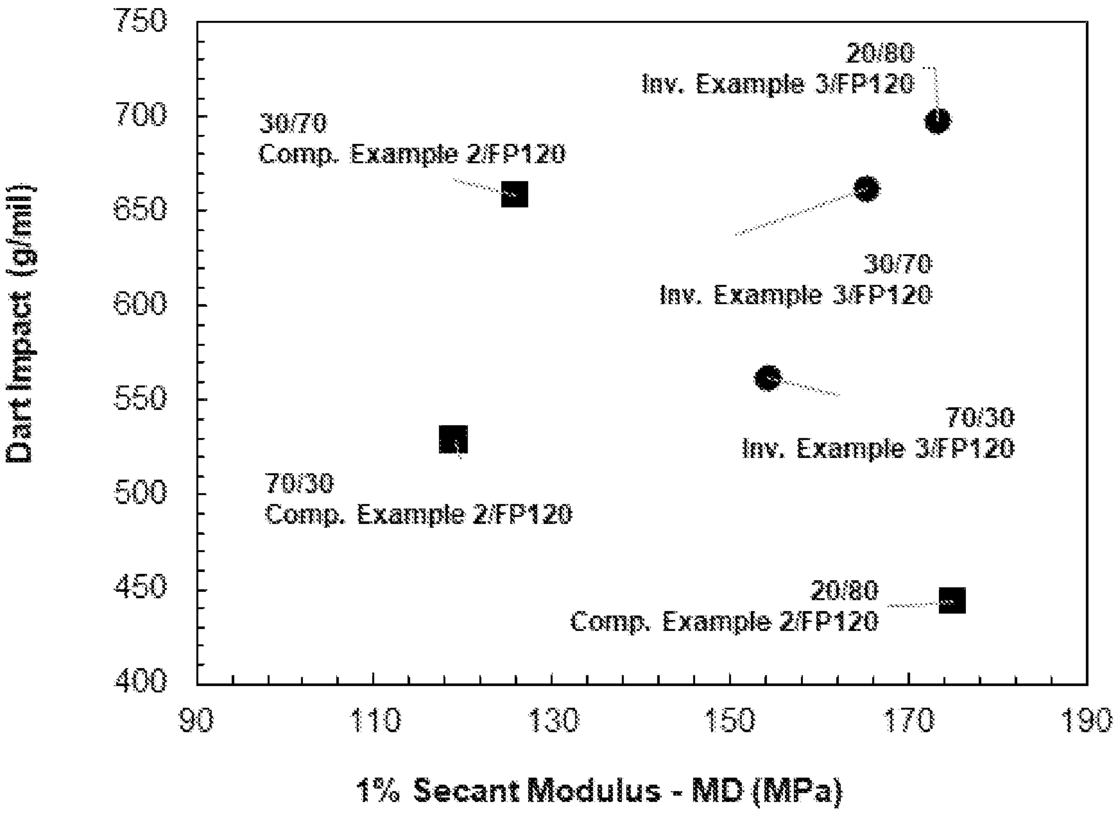
750
700
650
600
550
500
450
400
90
110
130
150
170
190
Dart Impact (g/mil)
1% Secant Modulus - MD (MPa)
20/80
Inv. Example 3/FP120
30/70
Comp. Example 2/FP120
30/70
Inv. Example 3/FP120
70/30
Inv. Example 3/FP120
70/30
Comp. Example 2/FP120
20/80
Comp. Example 2/FP120

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017019446 A
- WO 2019092525 A
- WO 9303093 A
- US 5589555 A
- US 6372864 B
- US 6777509 B
- US 5376439 A
- US 20190135958


### Non-patent literature cited in the description


- **WILD et al.** *J. Polym. Sci., Part B, Polym. Phys.*, vol. 20 (3), 441-455
- **J.C. RANDALL**. *J Macromol. Sci., Rev. Macromol. Chem. Phys.*, 1989, vol. 29, 201
- **W.W. YAU** ; **D.R. HILL**. *Int. J. Polym. Anal. Charact.*, 1996, vol. 2, 151
- **W.W. GRAESSLEY**. *Acc. Chem. Res.*, 1977, vol. 10, 332-339
- **PAUL J. DESLAURIERS**. *Polymer*, 2002, vol. 43, 159-170
- Dynamics of Polymer Liquids. **R.B. BIRD et al.** Fluid Mechanics. Wiley-Interscience Publications, 1987, vol. 1, 228
- **K. YASUDA**. PhD Thesis. IT Cambridge, 1979
- Copolymerization. **A. HAMIELEC** ; **J. MACGREGOR** ; **A. PENLIDIS**. Comprehensive Polymer Science and Supplements,. Elsevier, 1996, vol. 3, 17
- **J.B.P SOARES** ; **A.E HAMIELEC**. Copolymerization of Olefins in a Series of Continuous Stirred-Tank Slurry-Reactors using Heterogeneous Ziegler-Natta and Metallocene Catalysts. I. General Dynamic Mathematical Model. *Polymer Reaction Engineering*, 1996, vol. 4 (2&3), 153
- Copolymerization. **A. HAMIELEC** ; **J. MACGREGOR** ; **A. PENLIDIS**. Comprehensive Polymer Science and Supplements. Elsevier, 1996, vol. 3, 17
- Polyolefins with Long Chain Branches Made with Single-Site Coordination Catalysts: A Review of Mathematical Modeling Techniques for Polymer Microstructure. **J.B.P SOARES**. Macromolecular Materials and Engineering. Wiley-VCH, 2004, vol. 289, 70-87
- **J.B.P SOARES** ; **T.F.L. MCKENNA**. Polyolefin Reaction Engineering. Wiley-VCH, 2012
- **NAKAMURA, K.** ; **K. KATAYAMA** ; **T. AMANO**. Some Aspects of Non-isothermal Crystallization of Polymers. II. Consideration of the Isokinetic Condition. *Journal of Applied Polymer Science*, 1973, vol. 17 (4), 1031-1041
- **TANNER, ROGER I.** A Suspension Model for Low Shear Rate Polymer Solidification. *Journal of Non-Newtonian Fluid Mechanics*, 2002, vol. 102 (2), 397-408
- **TANNER, ROGER I.** On the Flow of Crystallizing Polymers: I in Linear Regime. *Journal of Non-Newtonian Fluid Mechanics*, vol. 112 (2-3), 251-268
- **TANNER, ROGER I.** ; **FUZHONG QI.** A Comparison of Some Models for Describing Polymer Crystallization at Low Deformation Rates. *Journal of Non-Newtonian Fluid Mechanics*, 2005, vol. 127 (2-3), 131-141
- **DERAKHSHANDEH, MAZIAR** ; **GOLNAR MOZAFFARI** ; **ANTONIOS K. DOUFAS** ; **SAVVAS G. HATZIKIRIAKOS**. Quiescent Crystallization of Polypropylene: Experiments and Modeling. *Journal of Polymer Science Part B: Polymer Physics*, 2014, vol. 52 (19), 1259-1275
- **SEO Y**. Non-isothermal Crystallization Kinetics of Polytetrafluoroethylene. *Polym. Eng. & Sci.*, 2000, vol. 40, 1293-7
- **KISSINGER, HOMER E.** Variation of Peak Temperature with Heating Rate in Differentiated Thermal Analysis. *Journal of Research of the National Bureau of Standards*, 1956, vol. 57, 217
- **KIM, JIHUN**. Nonisothermal Crystallization Behaviors of Nanocomposites Prepared by In Situ Polymerization of High-Density Polyethylene on Multiwalled Carbon Nanotubes. *Macromolecules*, 2010, vol. 43, 10545